# EUROPEAN PATENT APPLICATION

(11) **EP 0 897 156 A1**
(43) Date of publication of application: **17.02.1999**
(21) Application number: 98900672.1
(22) Date of filing: 21.01.1998
(51) Int. Cl.: G06F 17/21

(54) **DEVICE AND METHOD FOR PREPARING ORIGINAL TEXT AND PROGRAM STORING MEDIUM FOR THE SAME**

(30) Priority: 21.01.1997 JP 8157/97; 21.01.1997 JP 8158/97; 21.01.1997 JP 8159/97; 24.01.1997 JP 10754/97; 06.02.1997 JP 23381/97; 16.06.1997 JP 158857/97; 17.06.1997 JP 160071/97
(71) Applicant: PFU LIMITED, Kahoku-gun Ishikawa 929-1192 (JP); FUJITSU LIMITED, Kawasaki-shi, Kanagawa 211-8588 (JP)
(72) Inventor: TAKATA, Hiroaki, Unoke-machi, Kahoku-gun Ishikawa 929-11 (JP); ASHIMOTO, Katsuhiko, Unoke-machi, Kahoku-gun Ishikawa 929-11 (JP)
(74) Representative: Reichel, Wolfgang, Dipl.-Ing.
(86) International application number: JP9800205
(87) International publication number: WO9832081

(57) **Abstract**

A manuscript text composition system has a parameter table (1) for designating parameters corresponding to specific characters, etc. in the form of a table having two or more dimensional coordinate axes. A compiler (7) creates a manuscript text by pasting specific characters, etc. corresponding to the types of the parameters on one of templates, pasting images of a specific version in accordance with instructions given by replacement detection keys, omitting the pasting of specific characters, etc. when there exist no specific characters, etc. corresponding to the replacement detection keys. In the parameter table (1), parameters corresponding to the information recovered by the server are pasted, copying rules are added to the copy instruction column, and replacement detection keys for identifying the data types, etc. of set data are provided. The compiler (7) provides a page break with an empty row as the boundary, and sets jump regions at the upper and lower ends of images included in the manuscript text.

## Description

### TECHNICAL FIELD

This invention relates generally to a manuscript text composition system and method, and a program storage medium thereof, and more specifically to a manuscript text composition system and method, and a program storage medium for implementing the manuscript text composition system and method adapted so that a desired manuscript text can be prepared by placing replacement detection keys in templates, and whenever the existence of such replacement detection keys is detected, by pasting specific characters or character groups, or specific images, or pasting the information fed back, together with the presented information, at the positions of such replacement detection keys, or pasting parameters corresponding to such specific characters or character groups, or specific images using a parameter table for designating parameters in the form of a table having two or more dimensional coordinate axes, and adapted so that the prepared manuscript text can be displayed legibly with a simple processing by making it possible to identify the types and ranges of data in the parameter table during preparation of the manuscript text.

### BACKGROUND OF THE INVENTION

The recent trend is that an increasing amount of data have been prepared in a hypertext format for display on the Internet. To prepare a manuscript text suitable for such application fields, templates for a manuscript text are prepared, in which replacement detection keys are inserted so that a manuscript text can be composed by pasting specific characters or character groups, or specific images at the locations of the replacement detection keys.

That is, a template containing a sentence such as
"Konnichiwa, XX san, genki desuka" (Good day, XX san, how are you?)
is prepared in advance, and a large number of first names, such as "Tanaka", "Nakamura", etc. to be pasted at the position of XX in the template are separately prepared in advance. Thus, a specific manuscript text such as
"Konnichiwa, Nakamura san, genki desuka" (Good day, Nakamura san, how are you?)
is composed by pasting a first name, such as "Nakamura" at the location of XX. Similarly, a specific image can also be pasted at a designated location.

Although preparing a specific manuscript text by the aforementioned pasting operation is one of preferable methods, a large number of templates have to be prepared to achieve this. With increases in the types of such specific characters or character groups, or specific images being pasted, furthermore, it has become more and more difficult to effectively manage "data" corresponding to specific characters or character groups, or specific images being pasted. Under these circumstances, link structures connecting data have been increasingly complicated and ambiguous.

In addition, as the amount of data on specific characters or character groups, or specific images to be pasted has increased, it becomes necessary to effectively manage the relationship between the large amount of manuscript texts obtained by pasting such "data" and the size of display screen of terminal equipment. In other words, the mode of outputting (displaying) manuscript texts has become a problem.

In view of the fact that link structures of individual data have become increasingly ambiguous, as described above, it becomes necessary to execute predetermined processing before the data are pasted so as to reduce the burden on the user and the system management person.

When predetermined data, particularly image data, are pasted in accordance with the existence of replacement detection keys, particular processing is needed. That is, in such a case, a sentence as an explanation of the image is usually added in the vicinity of the image. With the increase in the number of image data, however, the user or the system management person may sometimes forget to link or enter the explanatory character data to be pasted for such image data particularly when changing or adding the image data. In such a case, it would be convenient for the user or the system management person if a brief explanation of such image data can be automatically prepared and linked to the image data.

If there are no predetermined data to be pasted in accordance with the existence of replacement detection keys, special processing is needed. That is, if the user or the system management person happens to forget a link, etc. to the data to be pasted, as described above, it is often the case that omission of the data being pasted or failure to automatically generate and link such data causes no hindrance to the user. In such a case, therefore, it would he convenient for the user or the system management person if the pasting of data can be omitted automatically when there are no data to be pasted.

If there are no data to be pasted in either of the aforementioned cases, if the manuscript text composition system asks the user to link such data by interrupting the processing, such a system would give the user great inconvenience. Such a manuscript text composition system is not recommendable.

In view of the fact that link structures of specific data have become increasingly unclear and ambiguous, as described above, when pasting specific images which are updated from time to time, for example, some measures are needed, such as finding out and pasting the latest version of data that are being updated.

Furthermore, a manuscript text as a processing result must be output in an easy-to-understand manner (displayed in a legible manner) due to the complexity of link structures among data and the size of manuscript texts. That is, output processing must be carried out automatically and at high speed. When a manuscript text is sequentially displayed starting from the top, for example, it is often the case where the size of pasted data is so large that the succeeding sentence or image (pasted data) may not fit into the display screen. Moreover, when a manuscript text including an image is sequentially displayed from the top, a sentence following the image may not fit into the screen frame due to the large size of the image. To cope with this, it is necessary to take measures to easily reedit (revise) the manuscript text so as to prevent sentences from exceeding the screen size.

More specifically, it is necessary to devise measures to allow the user to easily carry out page layout while viewing the screen. It is necessary, for example, to quickly add a page break instruction to the completed manuscript text in response to the user's instruction. Furthermore, even when such a page break instruction is added, data links must be properly maintained. For example, when a new page is opened upon receipt of a page break instruction, it is necessary to automatically change data links so that the data can be linked properly across the pages after that page break. This change must be executed without placing an additional burden on the user (without any additional input).

Furthermore, it is necessary to carry out display processing after a predetermined processing has been executed for the same reason. When a manuscript text including a large image is sequentially displayed from the top, for example, the large image itself may often pose an obstacle to reading sentences before and after that image. In such a case, scrolling such a large image may involve much time for displaying the required sentences. There can be a convenient method to cope with this by quickly jumping over the large image to the target data before and after that large image in response to the user's instruction, unlike normal scrolling or jumping action. To achieve this, it is necessary to have a function to carry out a special jump (link) processing. That is, it is desired that data areas to be displayed on the screen be changed with a simple operation without any burden on the user.

With increases in the types of characters or images to be pasted on a template, as noted above, it become difficult to effectively manage these "data." It is therefore desired that the validity of data be verified when a manuscript text is generated by pasting these data on a "template" by identifying the type and range of data to be pasted. This would contribute to the efficient management of data, such as specific characters or character groups, or specific images.

Among applications for displaying a large amount of hypertext-format data on the Internet, there are an increasing number of applications in which by designating a particular portion of an image, the display screen can be moved to a location corresponding to that portion. By designating the portion corresponding to Tokyo in an image representing the map of Japan showing prefectural borders, for example, the object of display moves to a location containing the detailed description of Tokyo. In order to cause the screen to move to a particular designated part in an image by designating that particular part, as described above, an object in the image, a detailed map of Tokyo in the above instance, is often placed as a map file in the World Wide Web (WWW) server, together with the image.

With the prior art, however, it is necessary to trace the outer periphery of an object in the image. This involves a lot of trouble, especially when objects in many images are linked to each other, or when images are frequently switched as in a product guide.

Accordingly, it is a general object of this invention to provide a manuscript text composition system that enables specific data to be pasted after various types of processing have been executed on them.

It is a more specific object of this invention to provide a program storage medium that stores programs for implementing a manuscript text composition system that enables specific data to be pasted after various types of processing have been executed on them.

It is another object of this invention to provide a manuscript text composition system that enables specific data to be pasted after predetermined types of processing have been executed on them in accordance with the data to be pasted.

It is still another object of this invention to provide a program storage medium that stores programs for implementing a manuscript text composition system that enables specific data to be pasted after predetermined types of processing have been executed on them in accordance with the data to be pasted.

It is a further object of this invention to provide a manuscript text composition system and a program storage medium that can easily select a desired drawing for replacement from among a plurality of revised versions of drawings, and identify said replacement on a display screen.

It is still a further object of this invention to enable high-speed retrieval for groups of revised versions of information in a specified directory.

It is another object of this invention to provide a means for displaying and recognizing only an updated portion of a graphic which is frequently revised.

It is a further object of this invention to provide a means for reducing duplicated image files by providing link structures.

It is still a further object of this invention to embed feedback information in a display screen and integrally display both, in an environment where there is feedback information as a response to presented information.

It is still a further object of this invention to enable any failure of quality in a process to be monitored at all times during the preparation of a work procedure book, in a company, in an environment where there is feedback information as a response to presented information.

It is still a further object of this invention to make CSV format data, which is used to facilitate manipulation of a large amount of data in spreadsheet software, available for preparing a manuscript text, and efficiently process such CSV format data so that manuscript texts can be easily prepared for use not only as hypertext-format manuscript texts for the Internet but also as assembly procedures in manufacturing processes, product catalogs and company guides in marketing business.

It is still a further object of this invention to provide a manuscript text composition system that can easily organize the page layout of a generated manuscript text and properly maintain data links in the manuscript text.

It is still a further object of this invention to provide a program storage medium storing programs for implementing a manuscript text composition system that can easily organize the page layout of a generated manuscript text and properly maintain data links in the manuscript text.

It is still a further object of this invention to provide a manuscript text composition system which performs the function of automatically jumping the screen in a predetermined direction in displaying a generated manuscript text.

It is still a further object of this invention to provide a program storage medium storing programs for implementing provide a manuscript text composition system which performs the function of automatically jumping the screen in a predetermined direction in displaying a generated manuscript text.

It is still a further object of this invention to provide a manuscript text composition system which can efficiently manage data, such as specific characters or character groups, or specific image to be pasted, and verify the validity of data to be described in a parameter table by identifying the type and range of data to be pasted.

It is still a further object of this invention to provide a method for generating hypertexts for use over the Internet that lends itself to a substantial reduction in man-hours for generating or changing hypertexts by displaying an image that is a generated manuscript text to be edited and producing a map file for the image.

### DISCLOSURE OF INVENTION

The manuscript text composition system of this invention basically has templates that specity any one or all of texts and images with replacement detection keys so that part of the texts can be replaced with specific characters or character groups, or part or all of the images can be replaced with specific images, and files that store the specific characters or character groups and the specific images to be specified by the replacement detection keys; a compiler provided in the system creating a screen display program using one of the templates, the specific characters or character groups and/or specific images stored in the files, and a terminal unit provided in the system generating a manuscript text on which the specific characters or character groups and/or the specific images (data to be pasted) are pasted corresponding to one of the templates based on the screen display program.

In addition to the basic construction described above, each of the manuscript text composition system according to this invention has the following features:

A manuscript text composition system of this invention has a parameter table that specifies parameters corresponding to specific characters or character groups and/or specific images in the form of a table having two or more dimensional coordinate axes; when the parameters specified by the parameter table are a predetermined first type of parameters, a compiler replacing the first-type parameters in the parameter table with the first type and a second types of parameters, and a terminal unit generating a manuscript text by pasting on one of the templates the specific characters or character groups and/or the specific images corresponding to the first and second types of parameters designated by the parameter table.

With this manuscript text composition system, parameters of the first type in the parameter table are automatically replaced with the first and second types of parameters by the compiler. Thus, the manuscript text composition system can automatically execute specific processing corresponding to the second-type parameter when the parameters corresponding to the replacement detection key are of the first type, for example.

Another manuscript text composition system according to this invention has a parameter table that specifies parameters corresponding to specific characters or character groups and/or specific images in the form of a table having two or more dimensional coordinate axes; a compiler preparing a screen display program so that when there do not exist any specific characters or character groups and/or specific images corresponding to predetermined replacement detection keys, the pasting of such specific characters or character groups and/or specific images corresponding to the predetermined replacement detection keys is omitted, and a terminal unit generating a manuscript text in which the pasting of the specific characters or character groups and/or specific images specified by the predetermined replacement detection keys is omitted.

With this manuscript text composition system, when there do not exist any specific characters or character groups and/or specific images corresponding to predetermined replacement detection keys, the pasting of the specific characters or character groups and/or specific images corresponding to the replacement detection keys is automatically omitted by the compiler. Thus, specific processing can be automatically executed when there do not exist any specific characters or character groups and/or specific images corresponding to predetermined replacement detection keys.

Still another manuscript text composition system according to this invention stores, together with the aforementioned specific image, images of different versions from the version of the specific image in the aforementioned file, and when an image of a specific version is specified by a specific replacement detection key and there exists the image of that version, the aforementioned display unit pastes that image of the specified version in place of the specific image.

With this manuscript text composition system, when a specific image is updated in terms of time series before pasting, a desired image can be easily selected from among the images being updated, and the replacement of the original specific image with a desired one selected from among images of various versions can be confirmed on the display screen.

Still another manuscript text composition system according this invention has a parameter table that specifies parameters corresponding to specific characters or character groups and/or specific images in the form of a table having two or more dimensional coordinate axes; parameters corresponding to the characters or character groups and/or images pertaining to the information recovered by a server being pasted on the parameter table in an integral and interlinked manner.

With this manuscript text composition system, parameters corresponding to the characters or character groups and/or images pertaining to the information recovered by the server are pasted on the parameter table in an integral and interlinked manner. Thus, the situation of the system can be easily grasped in an environment where there is feedback information as a response to presented information because both presented information and feedback information, which is embedded in the display screen, can be displayed in an integral manner.

Still another manuscript text composition system according to this invention has a parameter table that specifies parameters corresponding to specific characters or character groups, and/or specific images in the form of a table having two or more dimensional coordinate axes; copying rules being added to the copying instruction column of the parameter table, thereby making it possible to arbitrarily match and merge rows and columns of data in a separate table with the rows and columns of data in the parameter table.

With this manuscript text composition system, in which CSV format data for spreadsheet software can be easily merged, a parameter table used for translating templates can be easily prepared. Thus, HTML texts for WWW browsers involving a large amount of data can be prepared while making effective use of resources.

Still another manuscript text composition system according to this invention has a parameter table that specifies parameters corresponding to specific characters or character groups, and/or specific images in the form of a table having two or more dimensional coordinate axes; a screen display program comprising one or a plurality of discrete files, each of which corresponds with each page as a unit for displaying manuscript texts, parameters corresponding to one of templates being described continuously on a plurality of rows corresponding to one coordinate axis in the parameter table, and when an empty row is inserted in any one of the rows, a compiler generating a screen display program comprising a discrete file which is divided into mutually different front and rear parts by the empty row serving as the boundary between them, and linking data in the mutually different discrete files in the screen display program in accordance with the parameter table.

With this manuscript text composition system, as the user who examines the page layout of a produced manuscript text inserts an empty row in the parameter table, one discrete file comprising a plurality of rows is automatically divided by the empty row as the boundary and, discrete files corresponding to pages are automatically generated as a result of division by the empty row as the boundary. Furthermore, data in the mutually different discrete files are automatically linked in accordance with the parameter table. Thus, page break instructions can be easily added to a completed manuscript text, for which the user can easily organic a page layout. When the page break instructions are added, data in different pages can be linked by automatically changing the links, together with the page break instructions without imposing any burden on the user.

Still another manuscript text composition system according to this invention sets jump regions at the upper and lower ends of an image included in a generated manuscript text; a jump instruction to the top of the preceding page in the upward direction of the screen set in the upper-end jump region, and a jump instruction to the top of the succeeding page in the downward direction of the screen set in the lower-end jump region.

With this manuscript text composition system, when an image is included in a generated manuscript text, an upper-end jump region in which a jump instruction to the top of the preceding page in the upward direction of the screen is set, and a lower-end jump region in which a jump instruction to the top of the succeeding page in the downward direction of the screen is set are provided at the upper and lower ends of the image. Thus, when a manuscript text including a large image is sequentially displayed starting from the top, a jump can be quickly accomplished with an instruction entered by the user without scrolling the large image. A jump can be achieved by clicking the mouse in a direction different from the normal click-initiated scroll or jump.

Still another manuscript text composition system according to this invention has a parameter table having two or more dimensional coordinate axes to which specific characters or character groups and/or specific images to be pasted are set, and replacement detection keys for identifying the type and range of data set in the parameter table are provided.

With this manuscript text composition system, replacement detection keys for identitying the type and/or range of data of the parameters set in the parameter table are provided in a template manuscript, and a processing function for identifying the type and/or range of data of the parameters set in the parameter table and notifying the results is provided in a compiler based on the replacement detection keys in the template manuscript. This makes it possible to effectively manage the data on the specific characters or character groups and/or specific images to be pasted, and to verify the validity of the data set in the parameter table.

Still another manuscript text composition system according to this invention displays an image to be edited on a display unit, enters coordinate points of an object to be linked in the image, selects the optimum layout from among the layout examples of registered link objects, generates a link object to which predetermined symbols or numbers are attached, and an image on which link objects and connections between link objects and objects are pasted, enters a link target corresponding to the link object, and generates a map file of the image generated above in the method of generating hypertexts on the Internet.

With this text generating method, man-hours required for generating or changing hypertexts can be substantially reduced by producing a map file of an image based on the inputs of coordinate points of an object on which a link is provided and link targets corresponding to the link objects.

A program storage medium according to this invention is a program storage medium in which programs for implementing the aforementioned manuscript text composition system are stored.

With this program storage medium, the manuscript text composition system described above can be implemented using programs for operating the computer, and the programs can be stored in various appropriate program storage media.

### BRIEF DESCRIPTION OF DRAWINGS

Fig. 1 is a diagram illustrating the operating principle of the first embodiment of this invention.
Fig. 2 is a diagram illustrating the operating principle of the first embodiment of this invention.
Fig. 3 is a diagram of assistance in explaining an example of this invention.
Fig. 4 shows a manuscript text displayed based on the translated template content shown in Fig. 1.
Fig. 5 is a diagram showing the configuration of a system embodying this invention.
Fig. 6 shows a processing flow chart.
Fig. 7 is a diagram of assistance in explaining an example of this invention.
Fig. 8 shows the replacement of parameters.
Fig. 9 shows a processing flow chart.
Fig. 10 shows a manuscript text displayed on the screen.
Fig. 11 shows an example of the parameter table.
Fig. 12 is a diagram of assistance in explaining an example where a template can be specified using a cell specifying replacement detection key.
Fig. 13 is a diagram of assistance in explaining an example where the relative position of a replacement detection key is specified.
Fig. 14 is a diagram illustrating the manner in which a replacement detection key is specified.
Fig. 15 is a diagram giving a summary of description on marks being used.
Fig. 16 is a diagram giving a summary of various modes of normal replacement instructions.
Fig. 17 shows an example of the parameter table.
Fig. 18 shows a processing flow chart.
Fig. 19 shows a manuscript text displayed on the screen.
Fig. 20 is a diagram of assistance in explaining an example of this invention.
Fig. 21 is a diagram of assistance in explaining the processing performed after the versions of a file have been controlled.
Fig. 22 is a diagram of assistance in explaining the manner in which repetition control is carried out.
Fig. 23 is a diagram of assistance in explaining replacement control where the replacement detection key is made invalid or valid.
Fig. 24 is a diagram in explaining template fetch processing.
Fig. 25 is a diagram in explaining the state of the processing conducted after the number of versions of a file has been managed as described in Fig. 21.
Fig. 26 is a diagram of assistance in explaining the pasting processing conducted after data has been processed by detecting the existence of a tag.
Fig. 27 is a diagram of assistance in explaining the manner in which a plurality of templates are specified.
Fig. 28 is a diagram of assistance in explaining the manner in which replacement is carried out after conditions for a comparison object have been reviewed.
Fig. 29 shows a flow chart of the processing shown in Fig. 28.
Fig. 30 is a diagram of assistance in explaining the relationship between files and directories.
Fig. 31 shows the overall operation of file version control that is a feature of the manuscript text composition system embodying this invention.
Fig. 32 is a diagram of assistance in explaining high-speed search for only the groups of information on revised version.
Fig. 33 is a diagram of assistance in explaining the grasping and display of the content of a revised graphic.
Fig. 34 is a diagram of assistance in explaining the linking of graphics in cases where any change in a graphic is not reflected on display.
Fig. 35 shows an example of a parameter table used for preparation of work procedures.
Fig. 36 shows an example of a quality information file.
Fig. 37 is an example of a display screen showing work procedures on which the quality request has been directly pasted.
Fig. 38 is an example of a display screen showing work procedures to which quality request has been linked.
Fig. 39 is a diagram of assistance in explaining features of this invention taking work procedures having quality information functions.
Fig. 40 is a diagram of assistance in generally explaining descriptive forms for table copying.
Fig. 41 is a diagram of assistance in explaining table copying in accordance with Form 1 of the editing table.
Fig. 42 is a diagram of assistance in explaining table copying in accordance with Form 2 of the editing table.
Fig. 43 is a diagram of assistance in explaining table copying in accordance with Form 3 of the editing table.
Fig. 44 is a flow chart showing processing procedures for table copying, particularly corresponding to Form 1 in Fig. 41.
Fig. 45 is a flow chart showing processing procedures for table copying, particularly corresponding to Form 2 in Fig. 42.
Fig. 46 is a flow chart showing processing procedures for table copying, particularly corresponding to Form 3 in Fig. 43.
Fig. 47 shows table data and a template of assistance in explaining the concept of continuation lines in tabled data, and the results of translation converted using them.
Fig. 48 is a flow chart showing processing procedures of assistance in explaining the concept of continuation lines in table data.
Fig. 49 is a diagram of assistance in explaining the operating principle of the fifth embodiment of this invention.
Fig. 50 is a diagram of assistance in explaining the operating principle of the fifth embodiment of this invention.
Fig. 51 is a diagram of assistance in explaining an example of this invention.
Fig. 52 shows a status of the parameter table.
Fig. 53 shows a status of the parameter table.
Fig. 54 shows a processing flow chart.
Fig. 55 is a diagram of assistance in explaining an example of this invention.
Fig. 56 shows a processing flow chart.
Fig. 57 is a diagram of assistance in explaining an example of jump.
Fig. 58 is a diagram of assistance in explaining the operating principle of the sixth embodiment of this invention.
Fig. 59 is a diagram showing a manuscript text displayed.
Fig. 60 is a diagram showing the configuration of a system embodying this invention.
Fig. 61 is a flow chart of processing in a compiler embodying this invention.
Fig. 62 is a flow chart of processing for preparing a screen display program in an embodiment of this invention.
Fig. 63 is an example of replacement instruction in a replacement detection key and processing instruction using the replacement detection key.
Fig. 64 shows a parameter table and a template manuscript for identifying the type and range of data in the parameter table in an embodiment of this invention.
Fig. 65 is a processing flow chart for identifying the type and range of data in the parameter table in an embodiment of this invention.
Fig. 66 shows a parameter table and a template manuscript for setting cell colors in the parameter table in an embodiment of this invention.
Fig. 67 is a processing flow chart for setting colors in a parameter table in an embodiment of this invention.
Fig. 68 is a diagram showing the configuration of the seventh embodiment of this invention.
Fig. 69 is a processing flow chart of a hypertext generating unit embodying this invention.
Fig. 70 is Example (1) screen displayed by the hypertext generating unit.
Fig. 71 is Example (2) screen displayed by the hypertext generating unit.
Fig. 72 is Example (3) screen displayed by the hypertext generating unit.
Fig. 73 is Example (4) screen displayed by the hypertext generating unit.
Fig. 74 is an example of map file generated by the hypertext generating unit.
Fig. 75 shows an example of layout of link objects.
Fig. 76 is a processing flow chart for pasting lines connecting objects and link objects in an embodiment of this invention.
Fig. 77 is an example of display screen in a display unit showing processing for pasting lines connecting objects and link objects.
Fig. 78 is a diagram showing the configuration of the prior art.
Fig. 79 is a diagram showing an example of map file prepared by a map file editor.

### BEST MODE FOR CARRYING OUT THE INVENTION

### (The First Embodiment)

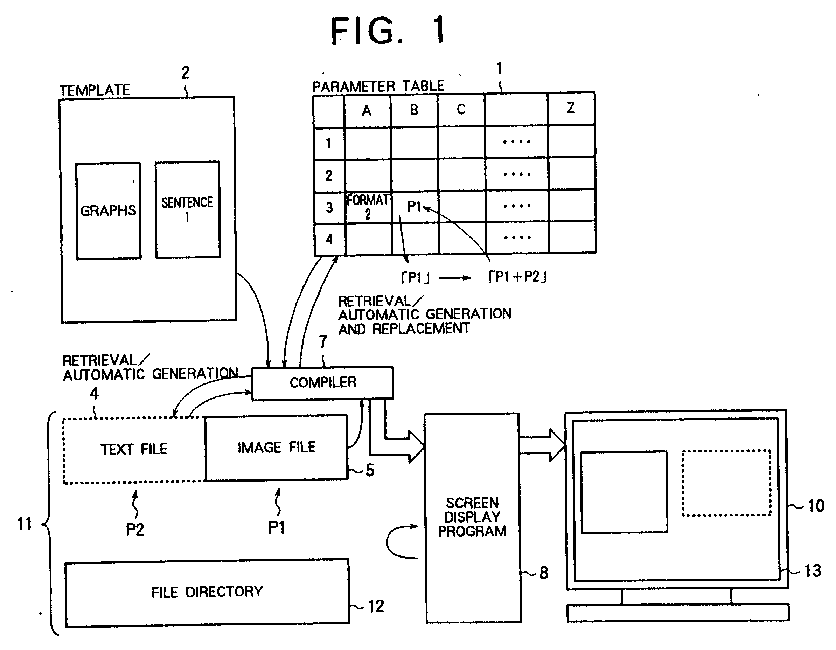

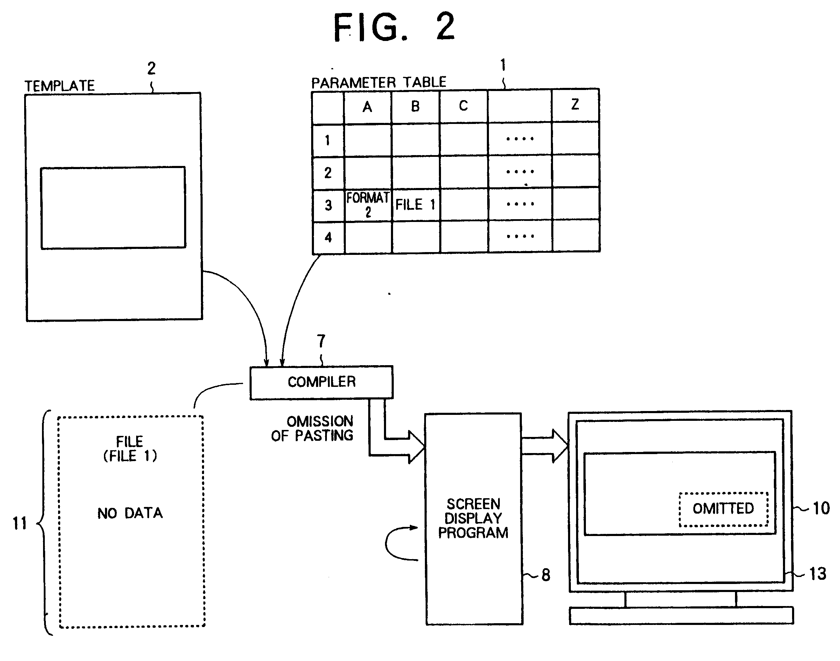

Figs. 1 and 2 are diagrams of assistance in explaining the operating principle of a manuscript text composition system that is the first embodiment of this invention.

In the manuscript text composition system shown in Figs. 1 and 2, provided are templates 2 in which replacement detection keys speck any one or all of texts and/or texts and images so that part of the texts can be replaced with specific characters or character groups, or so that part or all of the images can be replaced with specific images. The manuscript text composition system of this invention has also a file 11 for storing specific characters or character groups, and specific images to be specified by the replacement detection keys; a compiler 7 preparing a screen display program 8 using one of the templates 2 and the specific characters or character groups and/or specific images stored in the file 11, and a terminal unit 10 generating a manuscript text 13 by pasting the specific characters or character groups and/or specific images (data to be pasted) corresponding to one of the template 2 based on the screen display program 8.

The manuscript text composition system shown in Fig. 1 has a parameter table 1 that specifies parameters corresponding to specific characters or character groups and/or specific images in the form of a table having two or more dimensional coordinates; when the parameters specified in the parameter table 1 are predetermined first-type parameters P1, a compiler 7 replacing the first-type parameters P1 in the parameter table 1 with first-type and second-type parameters P1 and P2, and a terminal unit 10 generating a manuscript text 13 by pasting the specific characters or character groups and/or specific images corresponding to the first-type and second-type parameters P1 and P2 specified in the parameter table 1 on one of the templates 2.

The manuscript text composition system shown in Fig. 2 has a parameter table 1 that specifies parameters corresponding to specific characters or character groups and/or specific images in the form of a table having two or more dimensional coordinates; when there do not exist specific characters or character groups and/or specific images corresponding to predetermined replacement detection keys, a compiler 7 preparing a screen display program 8 so that the pasting of the specific characters or character groups and/or specific images corresponding to the predetermined replacement detection keys on one of templates 2 is omitted, and a terminal unit 10 generating a manuscript text 13 where the pasting of the specific characters or character groups and/or specific images on one of the templates 2 is omitted.

With the manuscript text composition system of Fig. 1, the first-type parameters P1 in the parameter table 1 are automatically replaced by the compiler 7 with the first-type and second-type parameters P1 and P2. Thus, when the parameters corresponding to the replacement detection keys are first-type parameters P1, specific processing corresponding to the second-type parameters P2 can be automatically executed.

When image data are pasted on the template 2 in accordance with the existence of replacement detection keys, for example, first-type parameters P1 are used as parameters for pasting the image data, and second-type parameters P2 are used as parameters for pasting a brief explanation of the image data. With the manuscript text composition system of Fig. 1, even when the user happens to forget to link or enter character data to be pasted corresponding to the image data, a sentence describing the image can be added in the vicinity of the image in the generated manuscript text 13. Thus, the user reading that brief explanation can understand its outline, or the fact that the explanation of the image data is different from the normal one reminds him that he has forgotten the link of character data to be provided.

With the manuscript text composition system of Fig. 2, when there do not exist specific characters or character groups and/or specific images corresponding to predetermined replacement detection keys, the pasting of the specific characters or character groups and/or specific images corresponding to the replacement detection keys is automatically omitted by the compiler 7. Thus, when there do not exist specific characters or character groups and/or specific images corresponding to predetermined replacement detection keys, specific processing can be automatically executed.

Now, assume that a sentence to be pasted on the template 2 in accordance with the existence of predetermined replacement detection keys is a brief note. With this system, if the user or the system management person happens to forget to link or enter the note, the display of the note can be omitted in the manuscript text 13 when it is output. The user who reads the display can understand the outline of the manuscript text 13 even in the absence of the note.

Each of the manuscript text composition system shown in Figs. 1 and 2 can be implemented using programs for operating the computer, as described above. These programs are stored in various program storage media suitable for storing them.

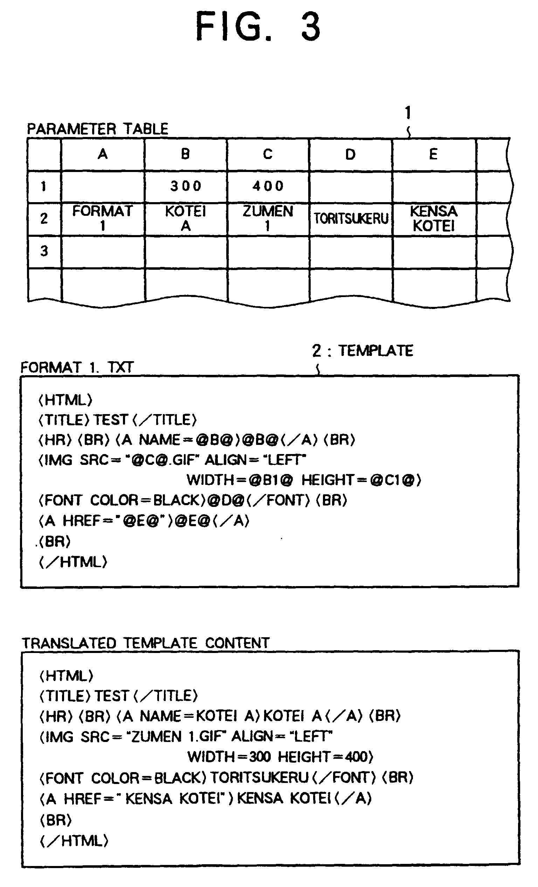

Fig. 3 is a diagram of assistance in explaining an example of this invention. Numeral 1 in the figure denotes a parameter table, 2 a template, and 3 a translated template content, respectively. This invention provides a tool for easily creating hypertext markup language (HTML) based on the output data (in CSV (comma separated value) format) of a spreadsheet software, for example.

A brief explanation of tags and extensions used in HTML will be given in the following. As is well known, HTML is a language described in such a manner that a WWW (World Wide Web) browser (application software for information retrieval over the Internet) can display information on the display screen.

Tags in HTML define rules for display, and are usually delimited using 〈 and 〉. Some of HTML tags are given below:
〈HTML〉 --- 〈/HTML〉: indicates that the --- portion enclosed is an HTML text.
〈HEAD〉 --- 〈/HEAD〉: indicates that the enclosed portion is the portion in which document information is described.
〈BODY〉 --- 〈/BODY〉: indicates that the enclosed portion is the content displayed by the browser.
〈TITLE〉 --- 〈/TITLE〉: indicates that the enclosed portion is the title displayed on the title bar of a window.
〈H〉 --- 〈/H〉: indicates that data is displayed in a type font (in bold typeface) specified in the enclosed portion, and in a size indicated by the suffix to H; 〈H1〉 representing the maximum size and 〈H6〉 the minimum one.
〈UL〉 --- 〈/UL〉: denotes that the data is an unordered list.
〈LI〉: denotes a list item, prefixed by • when used between 〈UL〉 and 〈/UL〉.

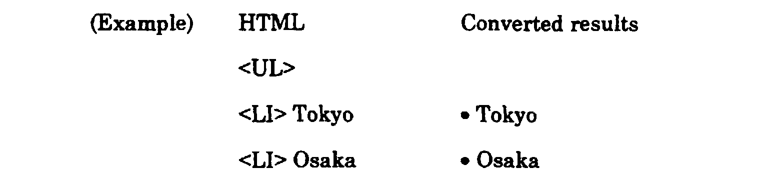

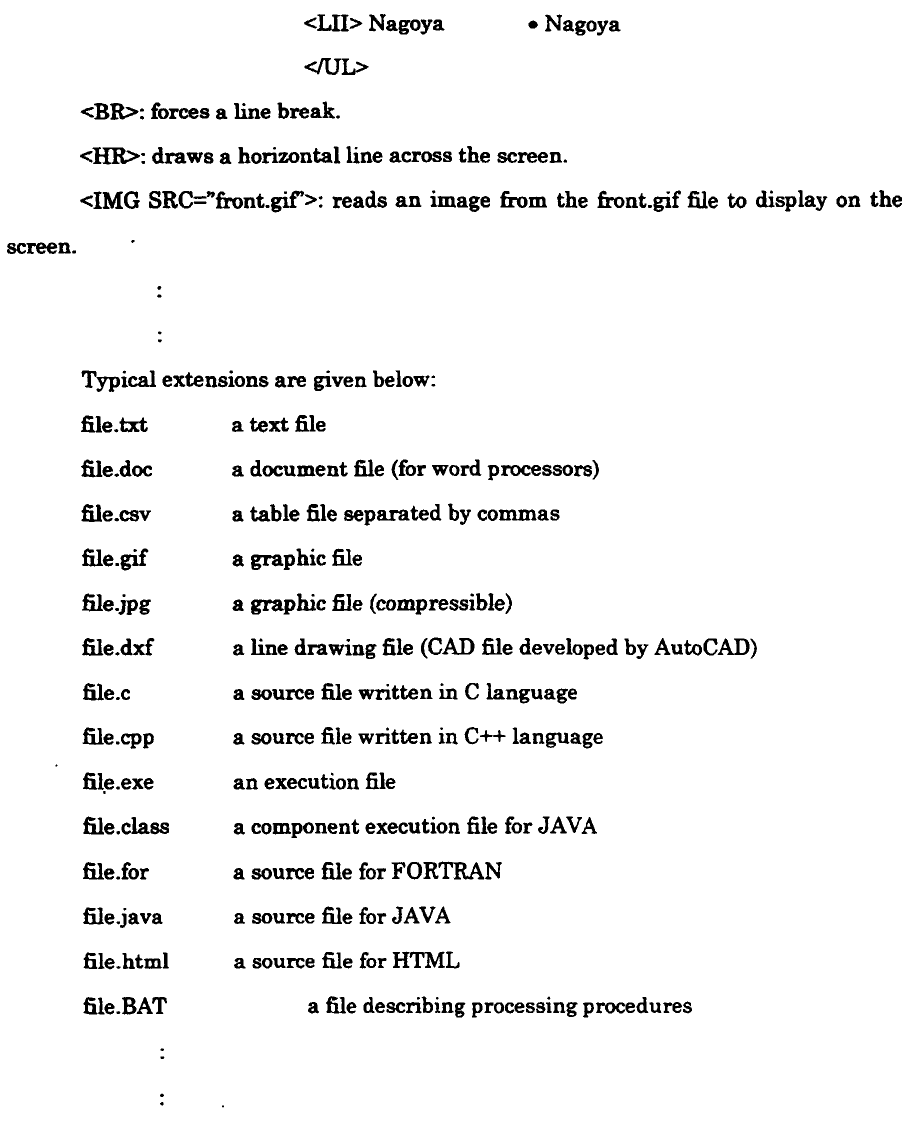

Now assume that "format1.txt" shown in the figure is given as one of the templates 2, and parameters relating to "Format1.txt" are described in the second row, for example, of the parameter table 1 shown in the figure.

In this case,
(i) since data "Kotei A" are described in column "B" in the second row of the parameter table 1, corresponding to the location described as "@B@" in the third row of "Format1.txt", data "Kotei A" are substituted in the third row of the translated template content 3 for "@B@" given above, and
(ii) "Zumen 1", "300" and "400" are substituted in the translated template content 3 for the locations described as "@C@", "@B1@" and @C1@" in the fourth row of "format 1.txt".

This is attributed to that data "Zumen 1" are described in "Column C" of the 2nd Row, data "300" are in "Column B of the 1st Row", and data "400" are in "Column C of the 1st Row" of the parameter table 1.

When one cell (coordinate position C2) in the parameter table 1 is specified with only "C", as in "@C@" above, the row position of that cell is known in advance (in the above example, it is known in advance that "format1.txt" is being processed). When one cell is specified with a coordinate value of "C1" as in "@C1@", the row position of that cell is different from the row now being processed.

In this invention where the template 2 is translated using the parameter table 1, what is expressed by two specific marks, such as "@---@" above, is termed a "replacement detection key". The replacement detection key is an insertion marker specifying the insertion of data or a file.

In the translated template content 3 shown in Fig. 3, symbols used have the following meanings:
(a) 〈HTML〉 --- 〈/HTML〉: denotes the start and end of a document.
(b) 〈TITLE〉 --- 〈/TITLE〉: denotes that "---" in between is displayed as a title on top of the screen.
(c) 〈HR〉: denotes that a horizontal line is drawn after a line break.
(d) 〈BR〉: denotes a line break.
(e) 〈A NAME=---〉---〈/A〉: denotes the name of an anchored point (Anchor). Also denotes the name of a target being linked (jumped) when used in 〈A HREF=#---〉---〈/A〉, which will be described later.
(f) 〈IMG SRC=***---〉: denotes that a graphic in file *** is pasted.
(g) ALIGN="left": denotes that something is pasted on the left margin.
(h) WIDTH=* or HEIGHT=*: denotes that the width is * or the height is *.
(i) 〈FONT COLOR=---〉---〈/FONT〉: denotes that characters are displayed in "---" color.
(j) 〈A HREF=#---〉---〈/A〉: denotes linkage (jump) to a location specified by "---".

Based on these definitions, the translated template content 3 shown in Fig. 3 mean that
(i) it is a manuscript written in HTML,
(ii) its title is "TEST",
(iii) a horizontal line is drawn under the title followed by a line break, and its anchor name is "Kotei A", followed by a line break again,
(iv) A graphic form gif in File "Zumen 1" of a width of 300 and height of 400 is pasted on the left margin,
(v) character "Toritsukeru" is described in black color followed by a line break,
(vi) the target being linked is "Kensa Kotei",
(vii) a line break, and
(viii) end of a document.

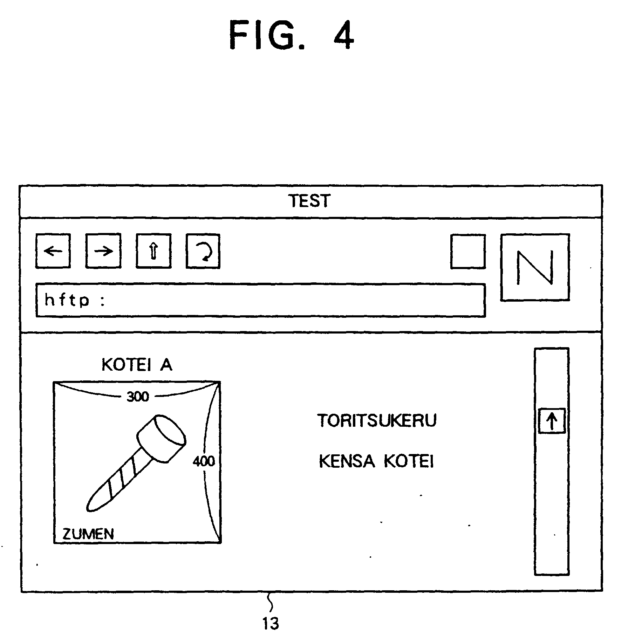

Fig. 4 shows a manuscript text 13 displayed based on the translated template content shown in Fig. 3.

As described above, title "TEST" is displayed, anchor name "Kotei A" is displayed, the graphic form gif, a screw, for example, in file "Zumen 1" is displayed at a desired location in a desired size, and character "Toritsukeru" is displayed in black color. The target being linked is displayed as "Kensa Kotei". The target being linked is a marker to which the processing is advanced when it is clicked with the mouse.

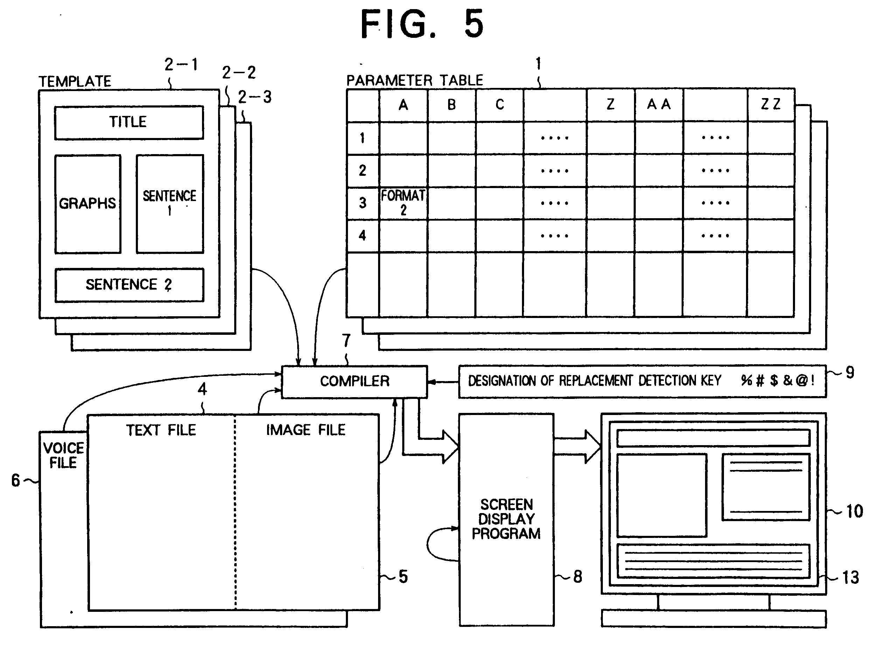

Fig. 5 is a diagram of assistance in explaining the configuration of a system embodying this invention. In the figure, numerals 1 and 2 correspond to like numerals used in Fig. 3. The parameter table is constructed in three dimensions, for example, and the template 2 has a plurality of templates 2-1, 2-2, 2-3 ---. The template 2 specifies any one or all of texts and images with replacement detection keys (of a higher level) in such a manner that part of the texts can be replaced with specific characters or character groups, or that part or all of the images can be replaced with specific images. The template 2 is included in a file 11 as a discrete file for each template 2-i.

Numeral 4 in the figure refers to a text file in which individual files specified by the aforementioned replacement detection keys are stored. Similarly, numeral 5 refers to an image file in which individual images specified by the replacement detection keys are stored, and numeral 6 refers to a voice file in which individual pieces of voice information specified by the replacement detection keys are stored.

That is, the file 11 stores the specific characters or character groups and/or specific images specified by the aforementioned replacement detection keys. The file 11 stores the specific characters or character groups and/or specific images specified by the aforementioned replacement detection keys as independent discrete files 4, 5 and 6. The file 11 has a file directory 12 for storing the name of, and the extension indicating the type of, each of the discrete files 4, 5 and 6 stored in the file 11, as shown in Fig. 1. It may be assumed that a file name contains an extension as necessary.

Numeral 7 refers to a compiler for creating a screen display program 8 (that is, the translated template content 3) based on the content of a specific template 2-i, the parameter table 1, a text file 4 and/or an image file 5 and/or a voice file 6 to be used as necessary. Numeral 8 refers to a screen display program compiled by the compiler 7 so as to display screens in HTML, for example. Numeral 9 refers to a replacement detection key designating unit for which the operator specifies at the time of system startup that predetermined marks, such as %, #, --- are used as replacement detection keys used in this invention. (Needless to say, those marks that were once designated as the replacement detection keys can be canceled later.)

Numeral 10 refers to a terminal unit, including a display. The terminal unit 10 creates a manuscript text 13 obtained by pasting specific characters or character groups (text file 4) and/or specific images (image file 5) on any one of the templates 2 in accordance with the screen display program 8. Consequently, the terminal unit 10 is a manuscript text composition unit or image display unit.

A template 2-i conceptually represents a full page of text since "Title" is described at the topmost, a specific "Graphs" at the left top, a specific "Sentence 1" at the right top, a specific "Sentence 2" at the lower part of the template 2-i, respectively. In practice, however, a template 2-i is provided using a description presented as "format1.txt" in Fig. 3, rather than a conceptual representation as described above.

Now assume that the template 2-i corresponds with "Format 2" and parameters relating to "Format 2" are described in the third row of the parameter table 1. It is also assumed that, as a result of retrieval of Column A of the parameter table 1, a description on "Format 2" is found in the third row. This means that the third row is a row in which parameters relating to "Format 2" are described. As it is found that "Format 2" is the name of a desired template, the manuscript (text) of that template 2 is read.

To display an image corresponding to "Format 2" on the display of the terminal unit 10, the compiler 7 generates a screen display program 8 using a template 2-i (corresponding to Format 2), the content of the parameter table 1, and the contents of any corresponding specific files when it is assumed that specific text file names and/or specific image file names and/or specific image file names are described in a "cell" of the parameter table 1. The screen display program 8 fetches the content each of the text file 4 and/or the image file 5 and/or the voice file 6 as necessary to display on the display of the terminal unit 10.

The manuscript text composition system of this invention, including the manuscript text composition system shown in Fig. 5, is implemented using a program for operating the computer, as described in the aforementioned description and a description which will be made in reference to the processing flow chart given below. This program is stored in various program storage media suitable for storing it.

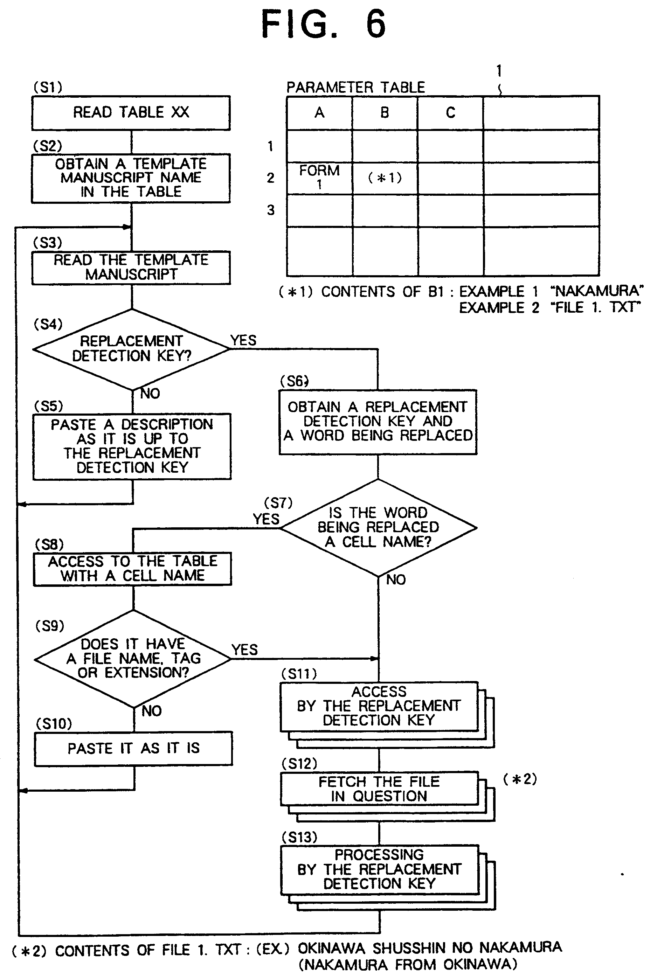

Fig. 6 is a processing flow chart. Numeral 1 in Fig. 6 denotes a parameter table.

Now, in order to facilitate the understanding of description, let us take an example, in which it is assumed that
(i) template 2-i corresponds to a specific template Form 1, where there is a description that
   "Konnichiwa, %B2% san, genki desuka" (Good day, %B2% san, how are you?).
   where "%---%" is a replacement detection key.
(ii) parameters for Form 1 are described in the second row of the parameter table 1, and "Nakamura" is described as (Example 1) in a cell represented by the coordinate value of (B2), and "file1.txt" is described as (Example 2).

First, the case of (Example 1) will be described.
Step (S1): Assuming that the second row in the parameter table 1 is to be processed, the second row is read.
Step (S2): From the fact that "Form 1" is found described in a cell (coordinate value A2) of column A in the second row from which parameters were read in the parameter table 1, it is known that the corresponding template 2-i is "Form 1".
Step (S3): Template 2-i is read. In this example, it is known that
   "Konnichiwa, %B2% san, genki desuka"
   is described in template 2-i as shown above.
Step (S4): Each word of the description is checked sequentially from "Kon" to "nichi" and "wa" ---, to see if each word is a replacement detection key.
Step (S5): Since the portion of description up to "Konnichiwa" has no replacement detection key, "Konnichiwa" is pasted as it is at least for the current processing stage of Step (S5) at that moment.

In the processing flow chart shown in Fig. 6, the processing is returned to Step (S3) again, and "%B2%" is read this time in Step (S3).
Step (S4): YES is selected. Then, the processing proceeds to Step (S6).
Step (S6): Replacement detection key "%---%" and replacement word "B2" are obtained.
Step (S7): Since the replacement word is "B2", it is known that it indicates a "cell name", and YES is selected.
Step (S8): Using the obtained cell name ("B2" in this case), access is made to the corresponding cell in the parameter table 1.
Step (S9): Since the content of the corresponding cell are "Nakamura" in this example (and since it has no tags or extensions), NO is selected.
Step (S10): The content of Cell, "Nakamura", are pasted as they are.

Thus, the processing up to "Konnichiwa, Nakamura" has been completed.

Then, the processing is returned to Step (S3), and each character, ranging from "sa" to "n", ",", "gen", "ki", "de", "su" and "ka" is processed in Step (S4) and Step (S5) to create a manuscript text reading
"Konnichiwa, Nakamura san, genki desuka" (Good day, Nakamura san, how are you?).

Next, (Example 2) above will be described.

First, the processing up to Step (S8) is executed as in the case of (Example 1) above. That is, characters up to "Konnichiwa" are pasted as they are in Steps (S1) through (S5) since they have no replacement detection keys. The processing is returned to Step (S3) where "%B2%" is read, and the processing further proceeds to Step (S6). Steps (S6) through (S8) are executed as in the case of (Example 1) above.
Step (S9): Since the content of cell "B2", is "file1.txt" in this example, YES is selected.
Step (S11): The processing proceeds to access by type of replacement detection key. Since the replacement detection key is "%---%" in this case, the processing corresponding to this replacement detection key is started. (Access by type of replacement detection key will be described later.)
Step (S12): The file designated by replacement word "file1.txt," that is, "file 1" is fetched. It is assumed here that the text of the file1 file has a description of "Okinawa shusshin no Nakamura" (Nakamura from Okinawa).
Step (S13): In this example, the processing of pasting "Okinawa shusshin no Nakamura" above is executed. As a result, the processing up to this moment brings about the text: "Konnichiwa, Okinawa shusshin no Nakamura san" (Good day, Nakamura san from Okinawa).

After this, a manuscript text 13 of
"Konnichiwa, Okinawa shusshin no Nakamura san, genki desuka" (Good day, Nakamura san from Okinawa, how are your?)
is created, in the same manner as in (Example 1).

In this invention, various manuscript texts 13 can be created from one template 2 by using a parameter table 1 and giving predetermined descriptions in desired cells, as described above. This can of course be implemented merely by rewriting the contents of "cells".

Although this invention is originally based on using the contents of cells, this invention also allows the "file1.txt" specified by the content of Cell B2 in the above description to be described directly in the description of the template 2-i, such as
"Konnichiwa, %file1.txt% san, genki desuka".

In this case, needless to say, NO is selected in Step (S7) shown in Fig. 6 when "%file1.txt%" has been found, and the processing proceeds to Step (S11).

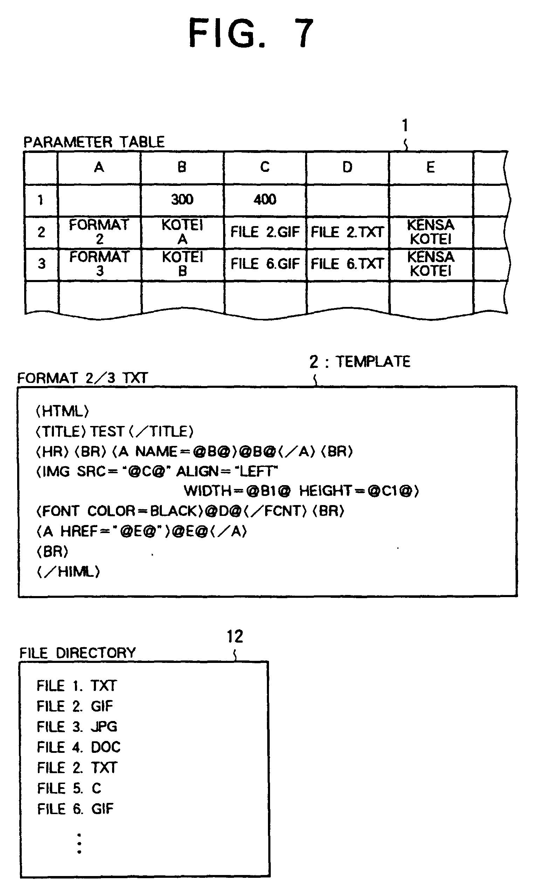

Fig. 7 shows another example of parameter table of this invention. The parameter table 1 in this example is comparable to the parameter table 1 in Fig. 3.

The parameter table 1 in this example specifies the parameters corresponding to specific characters or character groups and/or specific images in the form of a table having two or more coordinate axes. The parameters in the parameter table 1 comprise the file names and extensions of discrete files 4, 5 and 6.

In "Format 2" in the parameter table of this example, "Zumen 1" of a "screw" in Fig. 3 is specified as "file2.gif" representing an image file that stores the image of "Zumen 1", the sentence "Toritsukeru" is specified as "file2.txt" representing a text file 4 that stores that sentence.

"Format 3" in the parameter table 1 in this example is also one of the templates 2 specifying parameters as in the case of "Format 2". A manuscript text 13 similar to that shown in Fig. 4 can be obtained by compiling and executing the template 2 in "Format 3". The file names of the discrete files 4, 5 and 6 are stored in the file directory 12, together with the extensions thereof, as shown in Fig. 7. The file directory 12 is a dedicated directory special to each template 2, in which the file names, including extensions, of all discrete files used in the corresponding template 2 are stored.

This invention can deal with descriptions using file names, etc. in the parameter table 1. Consequently, a complete manuscript text 13 can be obtained by preparing a template 2, an image file 4 and a text file corresponding to the image file 4 as independent (discrete) files, and linking them later in the parameter table 1.

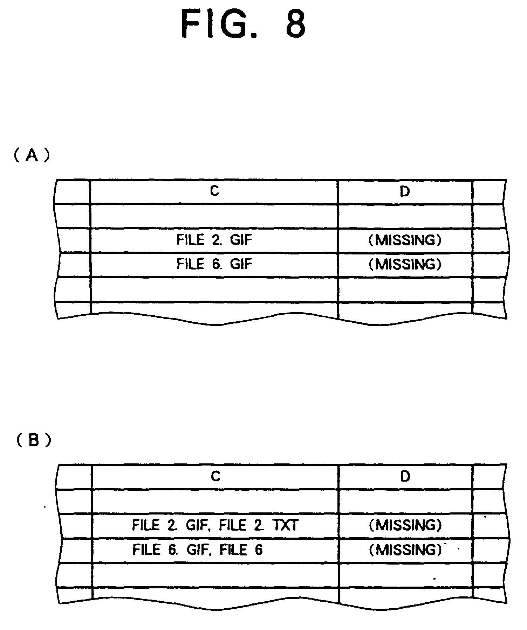

However, with an enormous increase in the number of files and increasingly complicated link structures, as noted earlier, part of descriptions in the parameter table 1 may sometimes be omitted by mistake. That is, what should have originally been described as shown in Fig. 7 may become as shown in Fig. 8 (A) due to the omission of a link to a sentence corresponding to an image.

According to this invention, when a parameter specified in the parameter table 1 is a predetermined first-type parameter P1, as shown in Fig. 1, the compiler 7 replaces the first-type parameter P1 in the parameter table 1 with the first-type parameter P1 and a second-type parameters P2. As a result, the terminal unit 10 generates a manuscript text 13 by pasting the specific characters or character groups and/or specific images corresponding to the first-type and second-type parameters P1 and P2 after replacement on one of the templates 2. That is, the compiler 7 executes in advance the optimization of the parameter table 1 used for compiling. Along with this, specific processing for the second-type parameter P2 can be automatically executed.

The second-type parameter P2 is generated by the compiler 7. That is, the compiler 7 searches the file directory 12 using the file name of discrete file 4, 5 or 6, which is a first-type parameter P2, to extract the second-type parameters P2 for specifying another discrete file 4, 5 or 6 having the same file name as and an extension different from the original discrete file 4, 5 or 6.

When the second-type parameter P2 cannot be extracted even after the search of the file directory 12, the compiler 7 creates the second-type parameter P2 (therefore, the file name of the discrete file 4, 5 or 6 corresponding to the second-type parameter P2). That is, the compiler 7 creates the second-type parameter P2 by adding an extension different from that of the discrete file 4, 5 or 6 to the file name of the discrete file that is the first-type parameter P1. At this time, the compiler 7 creates the file 4, 5 or 6 corresponding to the created second-type parameter P2 using the discrete file 4, 5 or 6 that is the first-type parameter P1 in the parameter table 1.

It is assumed here for simplicity that the first-type parameter P1 is a parameter for specifying an image file for storing images, for example, as shown in Figs. 7 and 8. The first-type parameter P1 is a parameter having an extension of ".gif", and the file specified by the first-type parameter P1 is a image file 5 having an extension of ".gif"; ex. "file2.gif". It is assumed that the second-type parameter P2 is a parameter for specifying a text file storing characters or character groups, for example. The second-type parameter P2 is a parameter having an extension of ".txt", and the file specified by the second-type parameter P2 is a text file having an extension of ".txt"; ex. "file2.txt".

Parameters "file2.gif" and "file2.txt" have the same file name of "file2" and different extensions of ".gif" and ".txt". The first-type and second-type parameters P1 and P2 are distinguished by their extensions in this way.

When there is a first-type parameter "file2.gif" in the parameter table 1, the compiler 7, for example, searches the file directory 12 using the file name of "file2" to extract the second-type parameter "file2.txt" specifying a discrete file 4 having the same file name of "file2" and a different extension of ".txt".

There can be cases where although there is a first-type parameter "file6.gif" in the parameter table 1, the compiler 7 cannot extract the second-type parameter "file6.txt" specifying a discrete file having the same file name of "file6" and a different extension of ".txt" from the file directory 12. In such a case, the compiler 7 creates a second-type parameter "file6bbbb" using the file name of "file6". "bbbb" here denotes a blank.

At the same time, the compiler 7 creates a text file 4 corresponding to the previously created second-type parameter "file6bbbb" using the first-type parameter "file6.gif". The file name of this text file is "file6bbbb", the same as that of the created second-type parameter. The content of this text file is a character string (or a predetermined number of characters from the character string) representing the file name of the existing file "file6.gif". The string representing the name of a file being extracted here is the image name attached to an image stored in the file "file6.gif".

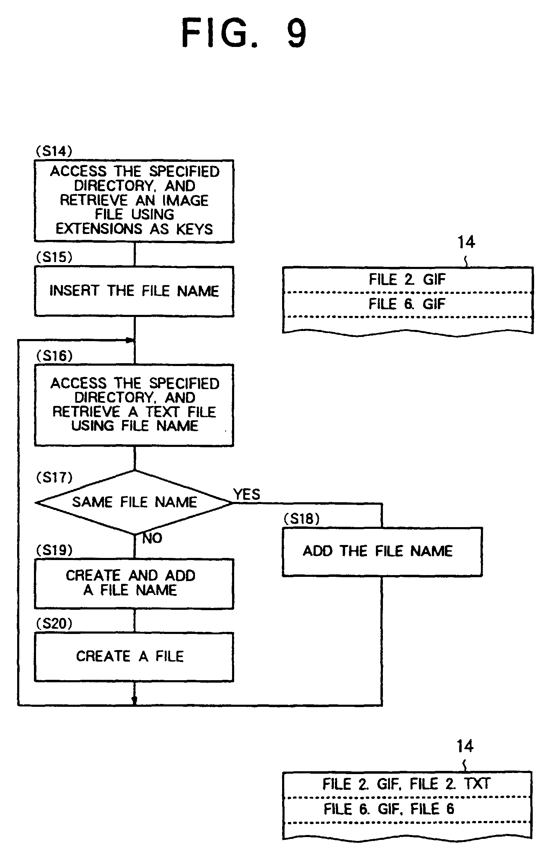

Next, the processing executed by the compiler 7 in the above example will be described, referring to Fig. 9.
Step (S14): A specified directory in the file directory 12 is accessed and searched using the extension of ".gif" to extract the file name of an image file existing in the parameter table 1. That is, "fileX.gif" in the file directory 12 is to be retrieved.
Step (S15): File names, "file2.gif" and "file6.gif", of the image files extracted are stored sequentially from the head in a work area 14 on the memory.
Step (S16): A file name of "file2" is read out from the head of the work area 14. Using this file name, the file directory 12 is searched to see if there is any text file having the same file name.
Step (S17): Whether any text file having the same file name has been extracted as a result of search is examined. Since a file "file2.txt" is found extracted, "YES" is selected.
Step (S18): "file2.txt", the file name of the extracted text file, is attached to the cell of the parameter table 1 where there is a parameter for specifying an image file having the file name of "file2.gif". In this case, the content of Cell "C2" is rewritten from "file2.gif" to "file2.gif, file2.txt".

Next, the next file name of "file6" is read out of the work area 14, and Step (S16) and the subsequent steps are repeated.
Step (S16): A file name of "file6" is read out. Using this file name, the file directory 12 is searched.
Step (S17): Whether any text file having the same file name has been extracted as a result of search is examined. Since a file "file6.txt" is not found extracted, "NO" is selected.
Step (S19): a file name "file6bbbb", which has the same file name as the file "file6.txt" and has no extension, is created and attached to the cell of the parameter table 1 where there is a parameter for specifying the image file having the file name of "file6.gif". In this case, the content of Cell "C3" is rewritten from "file6.gif" to "file6.gif, file6bbbb".
Step (S20): The file name of an image file having the file name of "file6.gif" is read, and a file containing this file name is created. The file name of this file is "file6bbbb", the same as that of the above parameter.

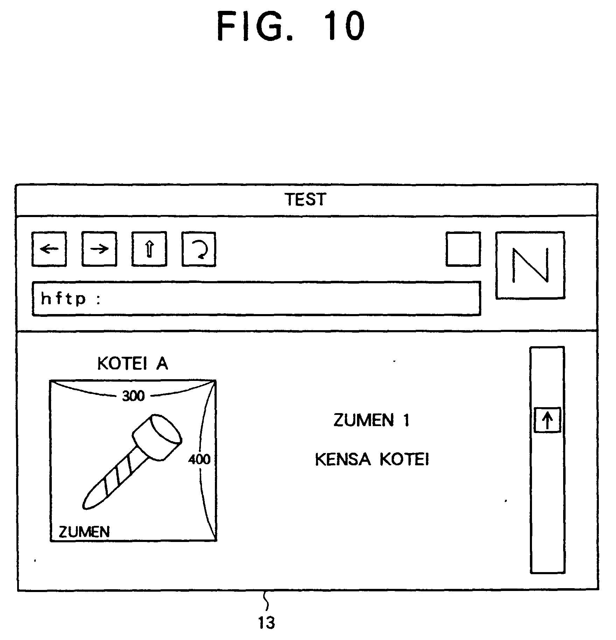

With the above steps, the first-type parameters, "file2.gif" or "file6.gif", in the parameter table 1 is replaced with the first-type and second-type parameters, "file2.gif, file2.txt" or "file6.gif, file6bbbb", respectively, as shown in Fig. 8 (B). Thus, A manuscript text 13 as shown in Fig. 4 or 10 can be obtained by compiling the template 2 using the parameter table 1 obtained in the aforementioned manner.

If the content of "file2.txt" is "Toritsukeru", the manuscript text 13 obtained is as shown in Fig. 4. That is, when "file2.gif, file2.txt" in Cell "C2" of the parameter table 1 is compiled from the template 2, a graphic indicating a screw in "file2.gif" and the string "Toritsukeru" in "file2.txt" are pasted on the template 2. Thus, the string "Toritsukeru", which has been properly prepared but has not been linked, is automatically linked properly to the corresponding image.

If the file name of "file6." is "Gamen 1", the manuscript text 13 obtained is as shown in Fig. 10. That is, when "file6.gif, file6.txt" in Cell "C3" of the parameter table 1 is compiled from the template 2, a graphic indicating a screw in "file6.gif" and the string "Gamen 1" in "file6.txt" are pasted on the template 2. Thus, a brief explanation can be automatically added to an image. This explanation, which is the name of that image, for example, is useful information to the user. If the file name of "file6" is "Hidari Sokuban Zu", this effect is remarkable. By reading this explanation of "Gamen 1", the system management person can know that "file6.txt" has not been prepared or linked.

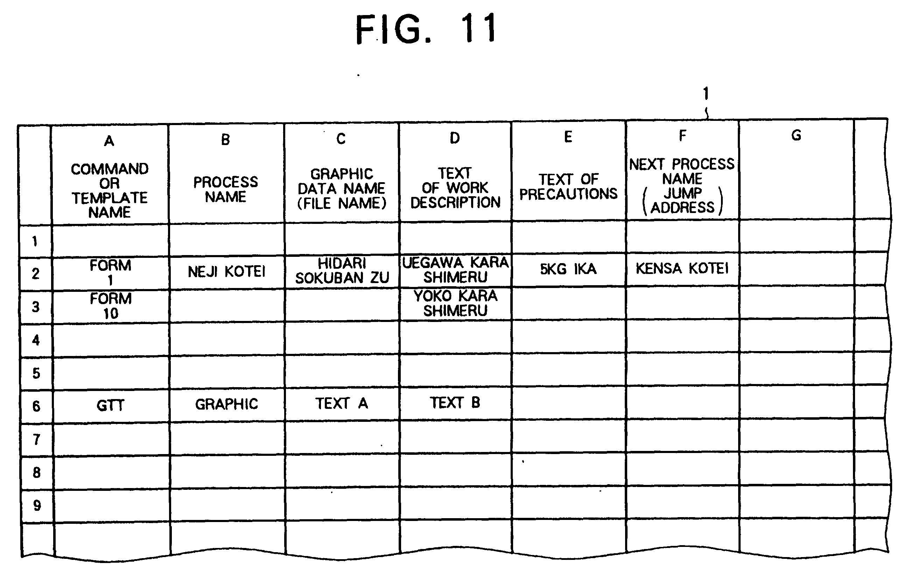

Fig. 11 shows an example of the parameter table. In the figure, one cell is shown as specified by two-dimensional coordinates.

Columns A, column B, column C, --- in the parameter table 1 shown in the figure, have the following descriptions:
Column A: Command or template name ("Command" is assumed to include "Conditional Expression.")
Column B: Process name
Column C: Graphic data name (file name)
Column D: Text of work description
Column E: Text of precautions
Column F: Next process name (link target)
:
:
and a predetermined allocation is carried out for each of them. Each row, such as the first row, the second row, --- is shown as corresponding to each template 2. In the figure, the second row, for example, gives parameters corresponding to template "Form1".

In this way, the content of a description in each cell can be specified in terms of template name (that is, coordinates in the row), and in terms of process name, graphic data name, etc. (that is, coordinates in the column) by predetermining rows and columns at the startup of the system.

Now, assume that the content of Cell "D2" in template "Form1" is changed from "Uegawa kara shimeru" (Tighten the screw from above) to "Yoko kara shimeru" (Tighten the screw from the side), for example. In this case, if the description of "Yoko kara shimeru" exists in the corresponding parameters of the template "Form10" in the third row in the figure, the description of "Uegawa kara shimeru" in Cell "D2" is replaced with "Refer to one cell below D2." This permits only the parameter "text of work description" in Form1 to be replaced with "Yoko kara shimeru".

In this case, the fact that the description of "Yoko kara shimeru" itself exists at the location of "text of work description," that is, coordinate "D3" in the Form 10 row can be known only if the user remembers that "Yoko kara shimeru" is described in the template name of "Form 10."

In this way, the advantage of the parameter table having a multiple-dimensional coordinate system can he fully utilized with increases in the contents of descriptions in the parameter table.

Although one row is supposed to correspond to one template 2 in the description given above, it is needless to say that this is only a standard form, and that a description to match a plurality of rows to be related to one template 2 is permitted. In place of the above-mentioned standard form, parameters necessary for command name "GTT" can be described arbitrarily, as shown by "Graphic", "Text A" or "Text B" in the figure, independently of the designation of the contents of rows, such as "Process Name", "Graphic Data Name (File Name)", --- in the sixth row of Fig. 11.

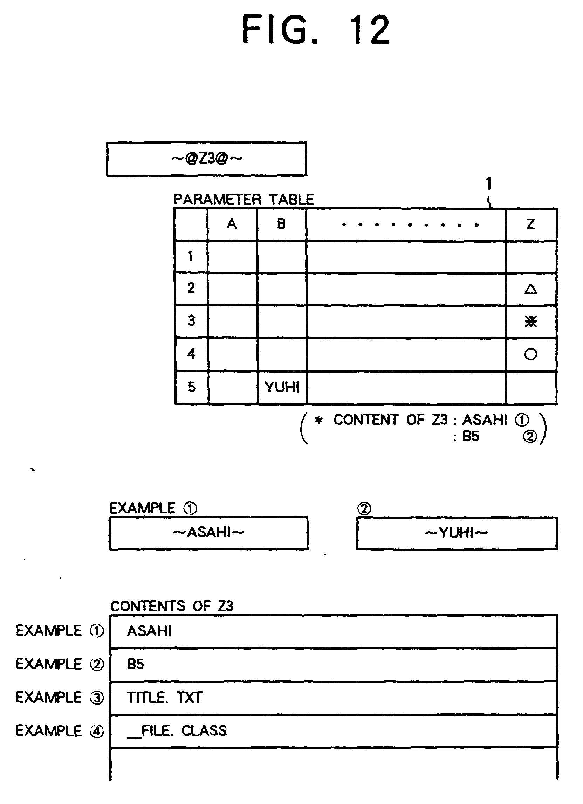

Fig. 12 is a diagram of assistance in explaining an example where the content of a cell can be designated by a replacement detection key for designating a cell

What kind of marks can be used as replacement detection keys will be described later. Now assume that there exists a replacement detection key such as
"∼@Z3@∼"
in a description in a template 2. "∼" denotes a description, such as "Konnichiwa" or "san, genki desuka", which includes no replacement detection keys, as described in reference to Fig. 6, while "@---@" are marks representing a replacement detection key.

If there exists
"∼@Z3@∼",
it instructs that the content of a cell having coordinate (Z3) in the parameter table 1 is to be replaced. In the example shown in Fig. 12, if "asahi" (in Example ①), for example, is described in Cell (Coordinate Z3) in the parameter table 1, the result of replacing the above description
"∼@Z3@∼"
will be
"∼ asahi∼",
as shown in Example ① in the figure. If "B5" (in Example ②) is described in Cell (Coordinate Z3), it means that the content of Cell (Coordinate B5) is to be used. Since the content of Cell (Coordinate B5) is described as "yuhi," the replacement result will be
"∼yuhi∼",
as shown in Example ② in the figure.

The contents of individual cells have various types, such as
a type where the content itself of a cell ("asahi" in the present case) is replaced, as in Example ①,
a type where the content of the cell indicates the coordinate of another cell ("B5" in this case), as in Example ②,
a type where a text name (text name "TITLE.txt" in this case) is described to indicate that the content of the text called "TITLE.txt" is used for replacement, as in Example ③, and
a type where a command name, or a conditional expression name, (command name "-FILE.class" in this case) is described to indicate that command "-FILE.class" is executed prior to replacement, and the execution result is replaced (in the case of a conditional expression, check is made to see if the conditional expression is satisfied, and the check result is used for replacement), as in Example ④.

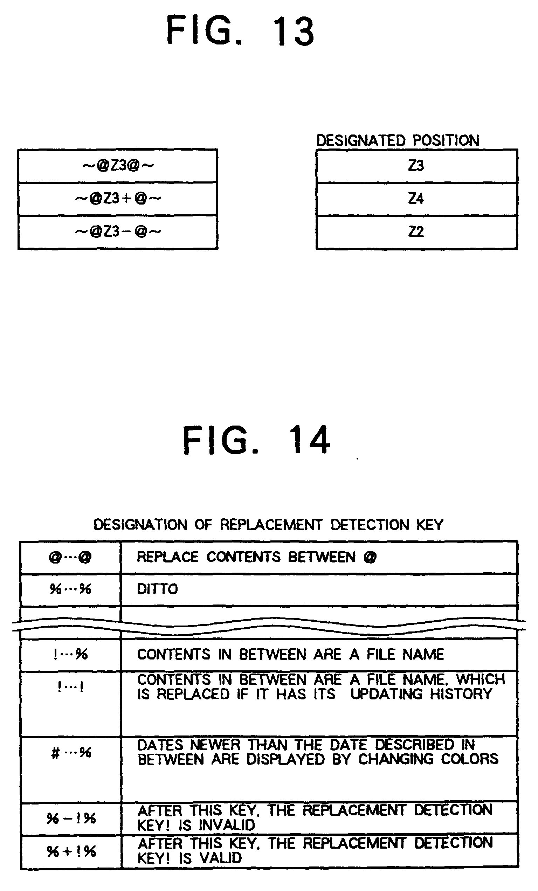

Fig. 13 is a diagram of assistance in explaining an example where the relative position of a cell is designated.

When "∼@Z3@∼" is described, as in the example shown in Fig. 12, it is indicated that the content of Cell (Coordinate Z3) is used. Taking advantage of this, another cell can be designated by indicating its relative coordinate position from Cell (Coordinate Z3).

When there exists a description of
"∼@Z3+@∼"
as shown in Fig. 13, a cell located in the same column of the next row, viewed from Cell (Coordinate Z3), that is, a cell of coordinate Z4, is designated. In terms of the example of the parameter table 1 shown in Fig. 12, the content of "○" in Cell (Coordinate Z4) is used for replacement.

When there exists a description of
"∼@Z3―@∼",
as shown in Fig. 13, a cell located in the same column of one row preceding Cell (Coordinate Z3), that is, Cell (Coordinate Z2), is designated. In terms of the example of the parameter table 1 shown in Fig. 12, the content of "△" in Cell (Coordinate Z2) is used for replacement.

Fig. 14 is a diagram illustrating the manner in which the replacement detection key is specified.

What mark is used as a replacement detection key is specified at the startup of the system by the replacement detection key designating unit 9 shown in Fig. 5.

"@---@" shown in Fig. 14 indicates that the content of "---" between @ is replaced as a replacement detection key. If designated appropriately in advance in replacing the same content of "---" as a key, "%---%" in Fig. 14 can also be used.

The replacement detection key uses the same marks of @ or % before and after the content to be replaced, as in "@---@" or "%---%", and the type of processing can be specified using different marks. That is, "!---!" shown in Fig. 14 means that the content of "---" is a file name, and the file having that file name is replaced with the latest of the updated file, if it has an updating history.

A pair of different marks can be used before and after the content, as in "!---%" or "#---%" shown in Fig. 14.

"%―!%" shown in Fig. 14 can be used when a mark that has been designated in advance as a replacement detection key, "!", for example, is used for other purposes than the replacement detection key by nullifying the mark "!". "%+!%" shown in Fig. 14 is for specifying that the mark "!" that has once been nullified as the replacement detection key is used again as a replacement detection key.

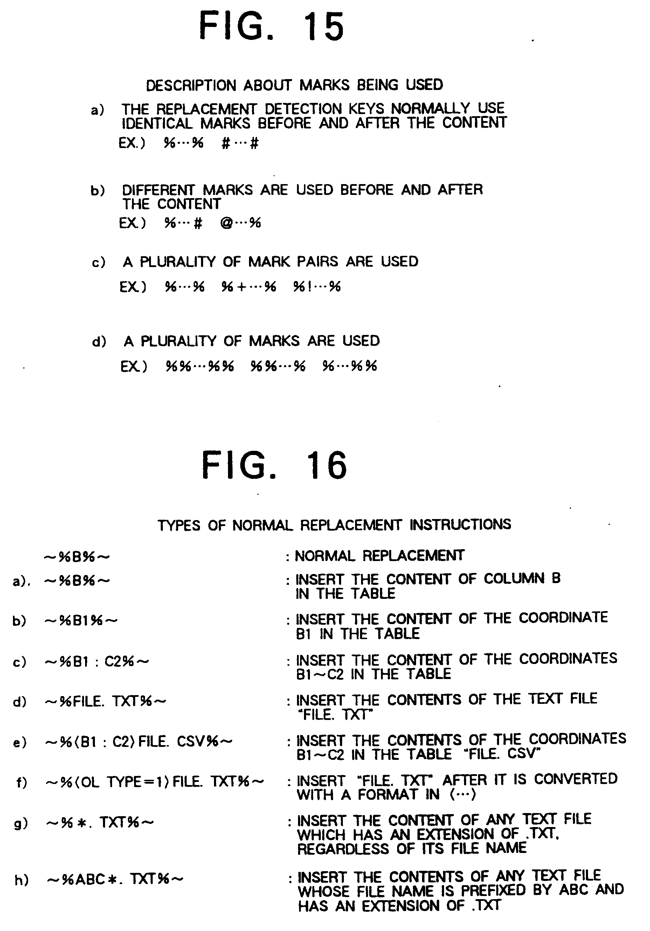

Fig. 15 is a diagram summarizing the description of marks to be used.
a) The replacement detection key normally uses the same marks before and after the content, as in "%---%" or "#---#".
b) A pair of different marks may be used before and after the content, as in "%---#" or "@---%".
c) Combinations of different types of marks can be used, as in "%―---?%" or %+---%" or "%!---%".
d) Combinations of a plurality of the same marks can be used, as in "%%---%%" or "%%---%", or "%---%%".

These marks and the meanings thereof are designated by the replacement detection key designating unit 9 shown in Fig. 5, as described above.

Fig. 16 is a diagram illustrating various forms of the normal replacement instruction. In the figure, "%---%" denotes the normal replacement instruction.
a) "∼%B%∼": The content of Column B in the parameter table is inserted at the time of replacement.
b) "∼%B1%∼": The content of Cell (Coordinate B1) in the parameter table is inserted at the time of replacement.
c) "∼%B1:C2%∼": The contents of cells enclosed by a rectangle defined by Cell (Coordinate B1) in the parameter table as the left top corner and Cell (Coordinate C2) as the right bottom corner are inserted at the time of replacement..
d) "∼%file.txt%∼": The content of a file having a file name of "file.txt" is used at the time of replacement.
e) "∼%〈B1:C2〉file.csv%∼": The contents of cells enclosed by a rectangle defined by Cell (Coordinate B1) in a parameter table having a table name of "file.csv" as the left top corner and Cell (Coordinate C2) as the right bottom corner are inserted at the time of replacement.
f) "∼%〈OL TYPE=1〉file.txt%∼": The content of a file having a file name of "file.txt" is converted with a format specified by "---" (in this example, "OL TYPE=1") in 〈---〉, and inserted at the time of replacement.
g) "∼%*.txt%∼": The content of a wild-card text file having an extension of ".txt", whose file name is not specified, is inserted at the time of replacement.
h) "∼%abc*.txt%∼": The content of a text file having a file name prefixed by "abc" and having an extension of ".txt" is inserted at the time of replacement.

In the following, various processing forms using the replacement detection keys will be described.

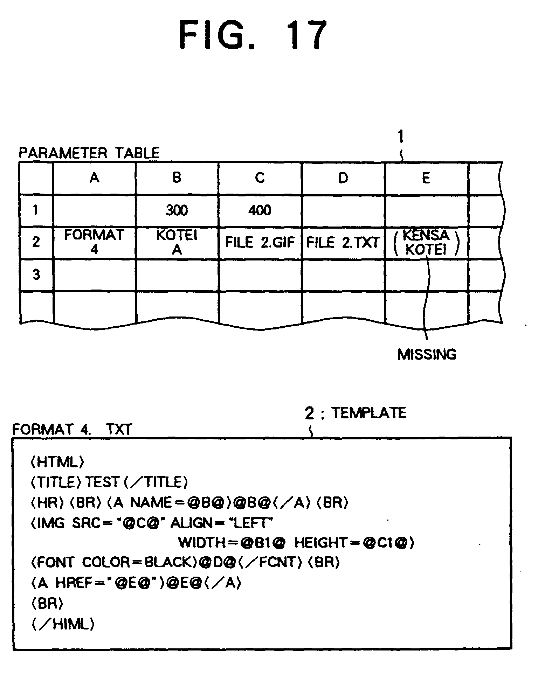

Fig. 17 shows another example of parameter table of this invention. The parameter table 1 in this example is comparable to the parameter table 1 in Fig. 3.

The parameter table 1 in this example specifies the parameters corresponding to specific characters or character groups and/or specific images in the form of a table having two or more coordinate axes. The parameters in the parameter table 1 comprise the file names and extensions of discrete files 4, 5 and 6.

In "Format 4" in the parameter table 1 of this example, therefore, "Zumen 1" in Fig. 3 is specified as "file2.gif" representing an image file that stores the image of "Zumen 1", the sentence "Toritsukeru" is specified as "file2.txt" representing a text file 4 that stores the sentence, with "Kensa Kotei (Inspection Process)" left as it is. A manuscript text 13 similar to that shown in Fig. 4 can be obtained by compiling and executing the template 2 in "Format 4".

However, with link structures becoming increasingly complicated, as noted earlier, part of descriptions ("Kensa Kotei", for example) in the parameter table 1 are not present, or may sometimes be omitted by mistake, as shown in Fig. 17. When even "Kensa Kotei" is specified as "file3.txt", which originally represents a text file 4 storing that sentence, in the parameter table 1, there can be cases where the "file3.txt" file described in the parameter table 1 is not prepared as the number of files becomes enormous and the link structures become complicated.

In this case, it may often be better to omit the pasting of the file than suspending the processing or automatically generating the file, as described with reference to Fig. 7, etc., to cope with the absence of the data or file. This is the case, for example, where the word "Toritsukeru", for example, cannot be omitted since it is an explanation of the image, while the word "Kensa Kotei" can be omitted because it is obvious that "Kensa Kotei" (Inspection Process) is preceded by the installation process.

According to this invention, when there exist no specific characters or character groups and/or specific images (or files thereof) corresponding to predetermined replacement detection keys, the compiler 7 prepares a screen display program 8 so as to omit the pasting of the specific characters or character groups and/or specific images (data to be pasted) corresponding to the predetermined replacement detection keys, as shown in Fig. 2. As a result, the terminal unit 10 creates a manuscript text 1 in which the pasting of the specific characters or character groups and/or specific images specified by the predetermined replacement detection keys is omitted.

It is assumed here for simplicity that normal replacement is carried out by the replacement detection key "@---@", as described above, and that the replacement detection key "#---#" shown in Fig. 17 is used as a predetermined replacement detection key mentioned above. The replacement detection key "#---#" is a key for instructing the insertion of the data or file allowed to omit in a manuscript text 13 (insertion data or insertion file) into the template 2. The predetermined replacement detection key "#---#" can be changed from the replacement detection key designating unit 9 shown in Fig. 5.

Consequently, the pasting of the files "file2.gif" and "file2.txt" is not omitted because these files are designated by the replacement detection keys "@C@" and "@D@", as shown in Fig. 17. But the pasting of "Kensa Kotei", which is designated by the replacement detection key "#E#", may be omitted. That is, "Zumen 1", which is the drawing of a "screw", for example, and the sentence "Toritsukeru" as the explanation thereof may not be omitted, but "Kensa Kotei" as an insertion file may be omitted.

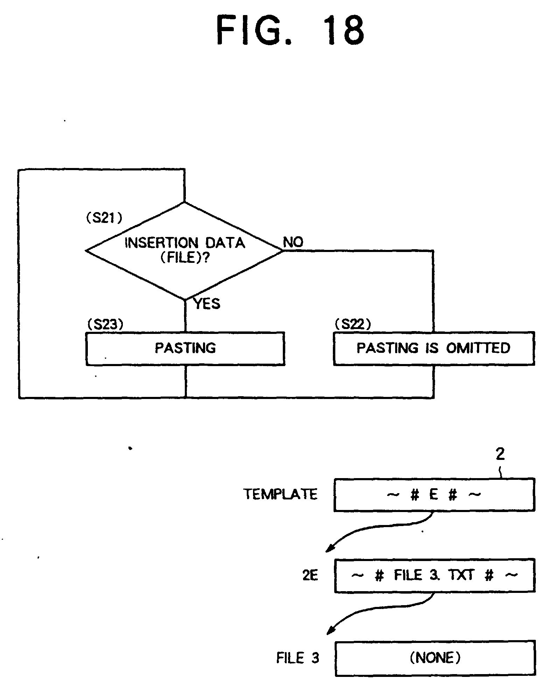

Next, the processing carried out by the compiler 7 in this ease will be described, referring to Fig. 18.

In Steps (S11) through (S13) in the processing flow chart shown in Fig. 6, as the predetermined replacement detection key "#E#" is detected, the processing corresponding to the replacement detection key "#E#" is started.

Step (S21): Whether a replacement word as insertion data is obtained from Cell (2E) of the parameter table 1 specified by the replacement detection key "#E#" is checked. In this case, NO is selected because the insertion data "Kensa Kotei" that should have been described is not found.

Step (S22): The pasting of the insertion data on the translated template content 3 shown in Fig. 3 is omitted.

In Step (S21), when the original insertion data "Kensa Kotei" is obtained from Cell (2E) of the parameter table 1, YES is selected, and the following processing is carried out.

Step (S23): The insertion data "Kensa Kotei" is pasted on the translated template content 3 shown in Fig. 3. As a result, the translated template content 3 becomes similar to that shown in Fig. 3.

When the "files3.txt" representing a text file 4 for storing the insertion data "Kensa Kotei" is described in Cell (2E) of the parameter table 1, the following processing is carried out.

In Step (S21), when no description of the insertion data "Kensa Kotei" is found in the insertion file "file3.txt" as a result of check, the pasting of the insertion file "file3.txt" is omitted in Step (S22). When that description is found in the insertion file "file3.txt", then the pasting of the insertion file "file3.txt" is carried out in Step (S23).

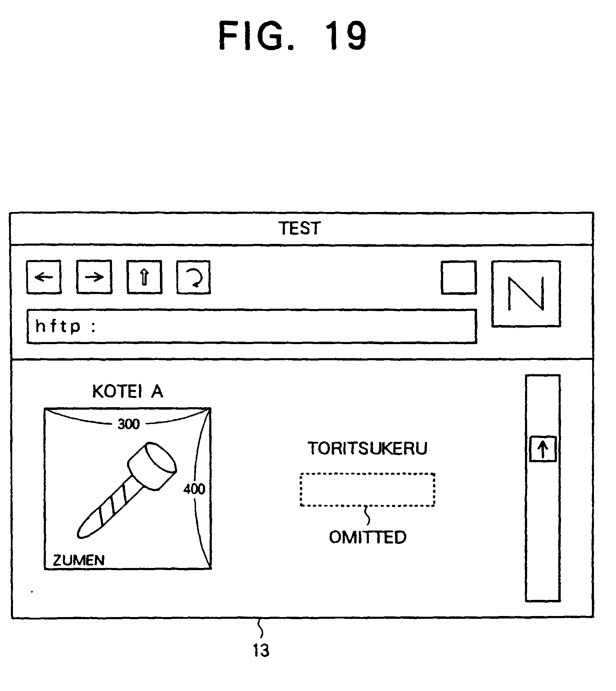

When the format 4 in the parameter table 1 is compiled from the template 2 based on the results of the above processing, a manuscript text 13 as shown in Fig. 19 can be obtained if the insertion data "Kensa Kotei" is not linked. If the insertion data "Kensa Kotei" is linked, a manuscript text as shown in Fig. 4 can be obtained.

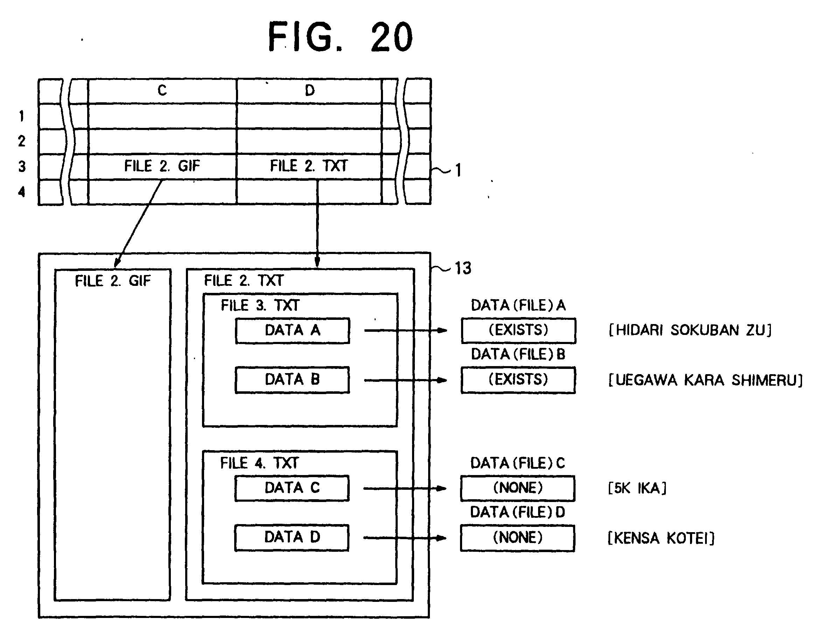

Fig. 20 shows an example where the insertion of insertion data or insertion file is instructed using a predetermined replacement detection key "#---#", as in the case of Fig. 19.

This is an example where "Zumen 1" as the drawing of a "screw", for example, the explanation thereof, etc. are collectively shown as "Memorandum for Zumen 1" in the manuscript text 13. That is, the text file "file2.txt" as "Memorandum for Zumen 1" corresponding to the image file "file2.gif", which is "Zumen 1", is pasted on the template 2.

The file "file2.txt" contains the files "file3.txt" and "file4.txt" as insertion files. Furthermore, the file "file3.txt" contains data A and B as insertion data, and the file "file4.txt" contains data C and D as insertion data.

Consequently, the file "file2.txt" has a description of "22#file3.txt#22#file4.txt#22", the file "file3.txt" has a description of "33#A#33#B#33", and the file "file4.txt" has a description of "44#C#44#D#44", where "22", "33" and "44" are descriptions other than replacement detection keys.

For example, data A comprises a string AAA, data B a string BBB, data C a string CCC, and data D a string DDD. The string AAA denotes "Hidari Sokuban Zu", the string BBB "Uegawakara Shimeru", the string CCC "5k Ika", and the string DDD "Kensa Kotei". (Refer to Fig. 11.) In this example, it is assumed for the sake of simplicity that the string AAA and the string BBB are described correctly, and the string CCC and the string DDD are not described.

In this example, predetermined replacement detection keys "#file3.txt#" and "#file4.txt#" are detected in Steps (S11) through (S13) in the processing flow chart shown in Fig. 6, and the processing corresponding to these replacement detection keys is carried out. That is, that these are file names is known from the replacement words "file2" and "file3" obtained from the text "file1", and the file 11 is accessed using these file names. The replacement detection key "#---#" and the replacement words "A" and "B" are first obtained from the text "file3".

It is assumed for the sake of simplicity that the replacement words "A" and "B" (and "C" and "D") are file names. In this case, the file 11 is accessed using the replacement words "A" and "B" obtained. In Step (S21), whether strings are described in the files "A" and "B" is detected. Since the string AAA and the string BBB are described correctly, as described above, the string AAA and the string BBB are obtained as insertion data for insertion into the template 2 in Step (S23).

With the above processing, the content of the file "file2.txt" becomes "2233AAA33BBB3322#file4#22" by pasting "33AAA333BBB33" on "#file3#" in "22#file3#22#file4#22".

Next, the file 11 is accessed by obtaining the replacement detection key "#---#" and the replacement words "C" and "D" from the text "file4". Then, whether strings are described in the files "C" and "D" is detected in Step (S21). Since the string CCC and the string DDD are not described, as described above, the insertion of the string CCC and the string DDD is omitted in Step (S23).

With the above processing, the content of the file "file2.txt" is first changed to "2233AAA33BBB3322#file4#22", and then to "2233AAA33BBB3322 (the content of file4 omitted) 22" by omitting the pasting it on "#file4#".

As a result, "Memorandum for Zumen 1" comprising the strings "Hidari Sokuban Zu" and "Uegawakara Shimeru" corresponding to "Zument 1", which is the drawing of a "screw", for example, is pasted in the ascending order in the manuscript text 13. Assuming that the string CCC and the string DDD are described correctly, "Memorandum for Zumen 1" comprises the string "Hidari Sokuban Zu", "Uegawakara Shimeru", "5k Ika" and "Kensa Kotei" in the ascending order.

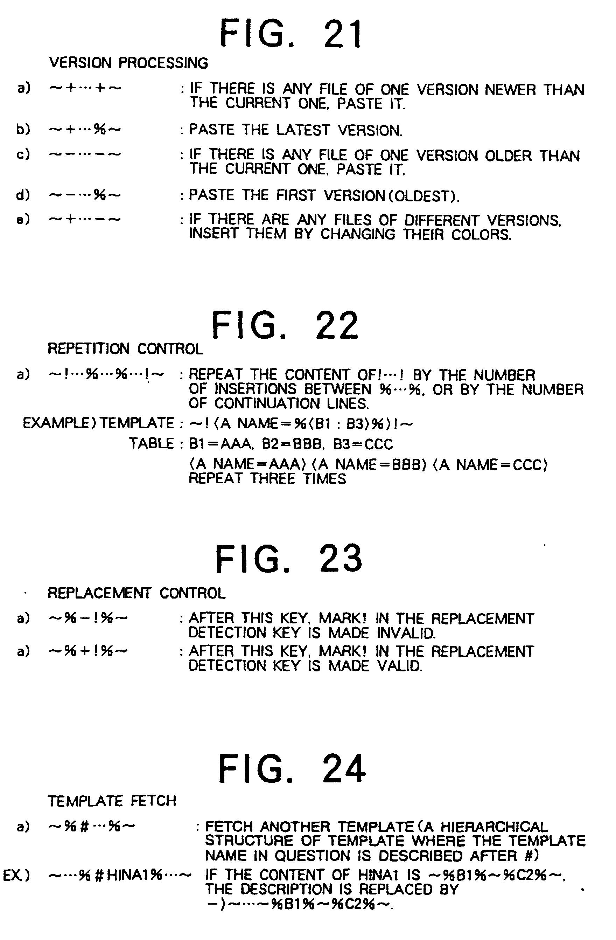

Fig. 21 is a diagram of assistance in explaining the processing conducted after file versions have been controlled. In the processing shown in Fig. 21, candidate files being pasted are retrieved and checked for the number of their versions, and a file being pasted is finally determined by comparing the versions with the scheduled date for compiling.
a) "∼+---+∼": If there is a file of one version newer than the current one (or the scheduled date for compiling --- the same applies hereinafter), it is selected as a file being pasted.
b) "∼+---%∼": The file of the latest version is selected as a file being pasted.
c) "∼―---―∼": If there is a file one version older than the current one, it is selected as a file being pasted.
d) "∼―---%∼": The file of the first version will be pasted.
e) "∼+---―∼": If there is any different version for the file designated by "---", it is inserted at the time of replacement, with its display color changed.

Fig. 22 is a diagram of assistance in explaining the manner in which repetition control is conducted. In the manner shown in Fig. 22, if there are a plurality of data being inserted for a certain template 2, replacement processing is repeated by that number.
a) "∼!---%---%---!": The processing designated by "---" in "!---!" is repeated by the number of data or the number of continuation lines designated by "---" in "%---%".

Now, assume that
"∼!〈A NAME=%〈B1:B3〉%〉!∼"
is described as a template 2, the content of Cell (Coordinate B1) in the parameter table 1 is "AAA", the content of Cell (Coordinate B2) is "BBB", and the content of Cell (Coordinate B3) is "CCC". Since the number of data is three; "AAA", "BBB" and "CCC", the processing is repeated three times as follows.
〈A NAME=AAA〉
〈A NAME=BBB〉
〈A NAME=CCC〉

Fig. 23 is a diagram of assistance in explaining replacement control for making a replacement detection key invalid or valid. In the manner shown in Fig. 23, a mark that has once been designated as a replacement detection key is made invalid in the subsequent processing, or a mark that has once been made invalid is made valid in the subsequent processing (the same as the case shown in Fig. 14).
a) "∼%―!%∼": If this replacement detection key exists, the marks "!" appearing in the subsequent processing are made invalid as one of the replacement detection keys.
b) "∼%+!%∼": If this replacement detection key exists, the marks "!" that have once been made invalid as the replacement detection keys are made valid again as one of the replacement detection keys in the subsequent processing.

Fig. 24 is a diagram of assistance in explaining template fetch processing.

To avoid the existence of too many templates 2, if there is the same technology as the content of a certain template 2 in the content of another different template 2, this processing makes it possible to fetch the content of the different template 2 in the content of the original template 2.
a) "∼%#---%∼": A description is given in the name of an alternative template 2 being fetched in "---" of "#---" so as to fetch the content of the alternative template 2 in the content of a current template 2.

If there exists a description of
"∼---%#hina1%---∼"
in part of the content of a current template 2, for example, and if the template 2 having the template name of "hina1" has a description of
"∼---%B1%∼%C2%---∼",
processing is conducted on the assumption that part of the content of the current template 2 is
"∼---%B1%∼%C2%---∼".

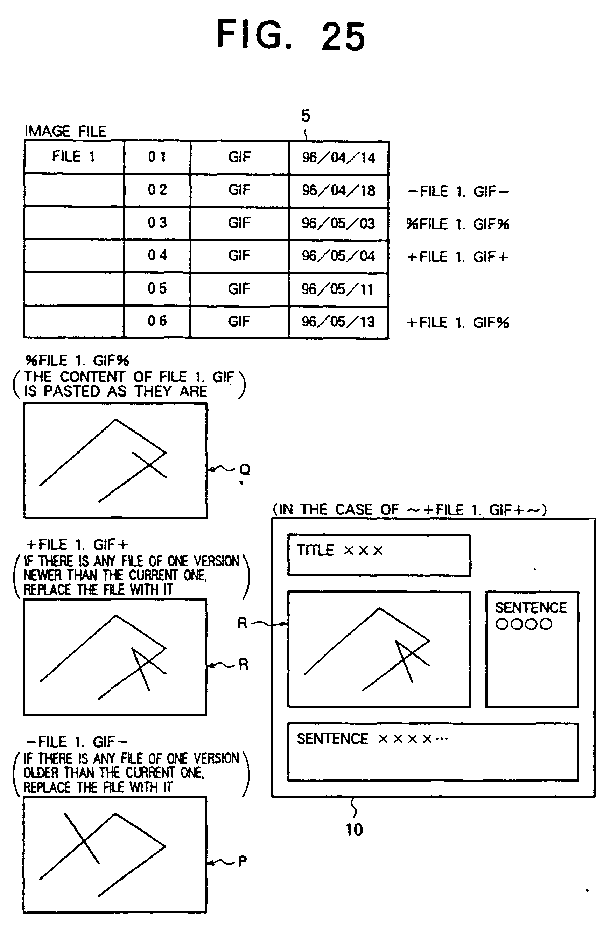

Fig. 25 is a diagram of assistance of explaining the state of processing corresponding to the processing after file versions have been controlled, as shown in Fig. 21. In the figure, numeral 5 refers to an image file shown in Fig. 5, in which there exists a graphic identified by the name of "file1.gif". Now, assume that the first version (no. of versions: 01) of the graphic was prepared on '96/04/14 (April 14, 1996), the second version (no. of versions: 02) on '96/04/18 , the third version (no. of versions: 03) on '96/05/03, the fourth version (no. of versions: 04) on '96/05/04, the fifth version (no. of versions: 05) on '96/05/11, and the latest version (no. of versions: 06) on '96/05/13, respectively. Numeral 10 refers to a terminal unit shown in Fig. 5.

Assume that a description of
"∼%file1.gif%∼"
is given in a certain template 2 to use a specific file "file1.gif" as described above. In this case, if the replacement detection key of "%---%" indicates simply replacing "---" , and replacement is conducted on the reference date of May 3, 1996, for example, then, a graphic Q shown in Fig. 25 is pasted.

If a description of
"∼+file1.gif+∼"
is given in that template 2, check is made to see if there exists any file one version newer than the third version based on the reference date of May 3, 1996. If any, the fourth version, that is, a graphic R shown in the figure that was prepared on May 4, 1996, is pasted. The display image shown on the terminal unit 10 in Fig. 25 schematically represents the state where the graphic R of the fourth version was pasted.

If a description of
"∼-file1.gif-∼"
is given in the template 2, check is made to see if there exists any file one version older than the third version based on the reference date of May 3, 1996. If any, the second version, that is, a graphic P shown in the figure that was prepared on April 18, 1996 is pasted.

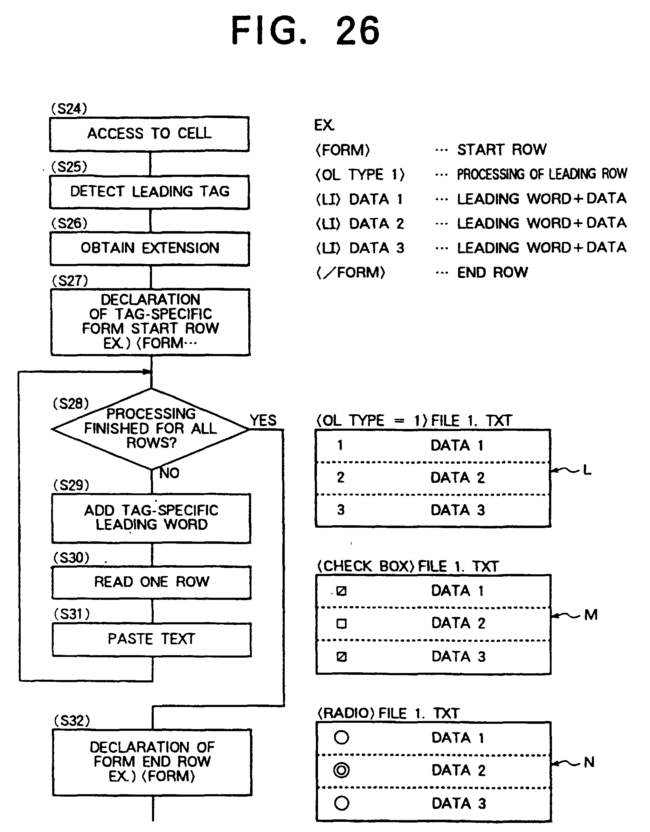

Fig. 26 is a diagram of assistance in explaining the pasting processing to be carried out after the existence of a tag has been detected and the relevant data has been processed.

Now, assume that the content of a certain template 2 instructs to refer to a cell of coordinate (K3), for example, in the parameter table 1. A description of
OL TYPE=〈OL TYPE1〉file1.txt
is given in the cell, and a description of
〈FORM〉
〈OL TYPE1〉
〈LI〉DATA1
〈LI〉DATA2
〈LI〉DATA3
〈/FORM〉
is given in a file designated by "file1".
Step (S24): The cell (coordinates K3) is accessed, as stated in the above assumption.
Step (S25): The existence of the leading tag given by 〈---〉 in the content of the cell is detected.
Step (S26): Next, the existence of the extension given by ".txt", for example, is detected.
Step (S27): Since there exists a description of "file1.txt" in the content of Cell (Coordinates K3), a file designated by "file1" is accessed, and the contents of files given as examples at the right top of Fig. 26 are sequentially read one by one. This will be described in detail later, referring to Fig. 6. Now, the processing proceeds to Step (S11) shown in Fig. 6, entering 1 of tag-wise processing.

In tag-wise processing, 〈OL TYPE1〉, for example, instructs preparation of a table describing each data by adding numbers "1", "2" and "3" to the head each of DATA1, DATA2 and DATA3, as shown in Table L shown at the right bottom of Fig. 26.

〈CHECK BOX〉 instructs preparation of a table describing each data by adding small squares □ to the head of each data, as shown in Table M shown at the right bottom of Fig. 26.

Furthermore, 〈RADIO〉 instructs preparation of a table describing each data by adding small white circles ○ at the head of each data, as in Table N shown at the right bottom of Fig. 26.
Step (S28): 〈FORM〉, 〈OL TYPE 1〉--- are sequentially read from the file "file1", and 〈LI〉DATA1 is also read. In this case, NO is selected because it is not the end of all rows. If YES is selected, the processing proceeds to Step (S32), resulting in the end of Form.
Step (S29): Preparation is made for adding a tag-wise leading word, that is, numeral "1" in this case, to the head of DATA1, and numeral "1" is added.
Step (S30): DATA1 is read.
Step (S31): "1 DATA1" is obtained, and the text is pasted. Then, return to Step (S28).

The processing proceeds in the following manner.

The processing goes to Step (S28), Step (S29), Step (S30), and Step (S31), and "2 DATA2" is pasted. And then, the processing repeats the cycle of Step (S28), Step (S29), Step (S30), and Step (S31), and "3 DATA3" is pasted. Finally, the processing goes to Step (S32).

In the case of the aforementioned 〈CHECK BOX〉,
□ DATA1
□ DATA2
□ DATA3
are pasted. In the case of 〈RADIO〉,
○ DATA1
○ DATA2
○ DATA3
are pasted. Small squares with diagonals, and double circles as shown in Fig. 26 are the marks added appropriately to predetermined data.

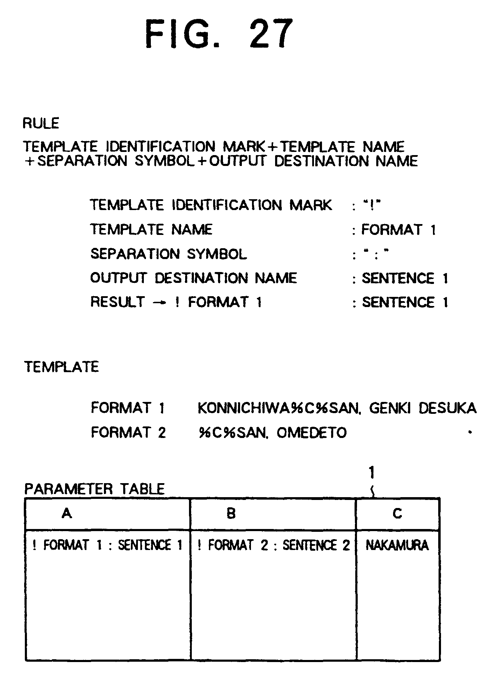

Fig. 27 is a diagram of assistance in explaining the manner in which a plurality of templates are specified. In the parameter table 1 shown in Figs. 3, 5 , 6 and 11, the column in which the name of template is described in a given horizontal row is defined as column A, so that the existence of a template name can be checked merely by searching the predetermined column A in the parameter table 1.

Even different templates 2, however, may have the same parameters for instructing replacement processing with a replacement detection key. Take as a simple example "Format 1" that is a template 2. Assume that "Format 1" has a description of
"Konnichiwa%C%san, genki desuka" (Good day, %C%san. How are you?), and the content of Cell C is "Nakamura". It is also assumed that in "Format 2" as another template 2 has a description of
"%C%san, omedeto" (%C%san, congratulations),
and the content of Cell C is "Nakamura".

If there exist "Format 1" and "Format 2", and both "Format 1" and "Format 2" are processed in the manner shown in Figs. 3, 5, 6 and 11 as described above, parameters for "Format 1" would have to be pasted in a horizontal row in the parameter table 1, while parameters for "Format 2" in another horizontal row. In the most complicated case, the same content of "Nakamura" would have to be described in Cell C in each of the horizontal rows. When "Nakamura" is changed to "Tanaka", for example, the content of Cell C in each of the horizontal rows would have to be rewritten separately to "Tanaka"

In the example shown in Fig. 27, the content of a certain cell, Cell C, for example, is used in common to output separate sentences. That is, an expression of
"template identification mark+template name+separation symbol+output destination name"
is used as the rule for this processing, and two or more of this expression are described in cells in the same horizontal row of the parameter table 1.

Now, assume that mark "!" is used as the template identification mark, "Format 1" as the template name, and ":" as the separation symbol, respectively. To output data by setting the output destination name as "Sentence 1", the above expression will be
"!Format 1: Sentence 1".
Similarly, to output data by setting the output destination name as "Sentence 2" using "Format 2", the above expression will be
"!Format 2: Sentence 2".

If the content of template "Format 1" is
"Konnichiwa%C%san, genki desuka",
and the content of template "Format 2" is
"%C%san, omedeto",
then,
"!Format 1: Sentence 1"
is described in an appropriate cell (A) in a horizontal row of the parameter table 1,
"!Format 2: Sentence 2"
is described in an appropriate cell (B), and "Nakamura" is described in Cell C, as shown in Fig. 27.

With this expression, when the parameter table 1 is read in Step (S1), as shown in the flow chart in Fig. 6 above,
"!Format 1: Sentence 1" and "!Format 2: Sentence 2"
are found out, and templates "Format 1" and "Format 2" are obtained, as in Step (S2), and
"Konnichiwa%C%san, genki desuka" for Format 1 and
"%C%san, omedeto" for Format 2
are found out. At this time, the content of Cell (C), "Nakamura", is pasted, as described above, and
"Konnichiwa Nakamura san, genki desuka" for Sentence 1 and
"Nakamura san, omedeto" for Sentence 2
are output to two separate output destinations. In this case, if the content of Cell (C) above is changed to "Tanaka", "Nakamura" in Sentences 1 and 2 above is changed to "Tanaka".

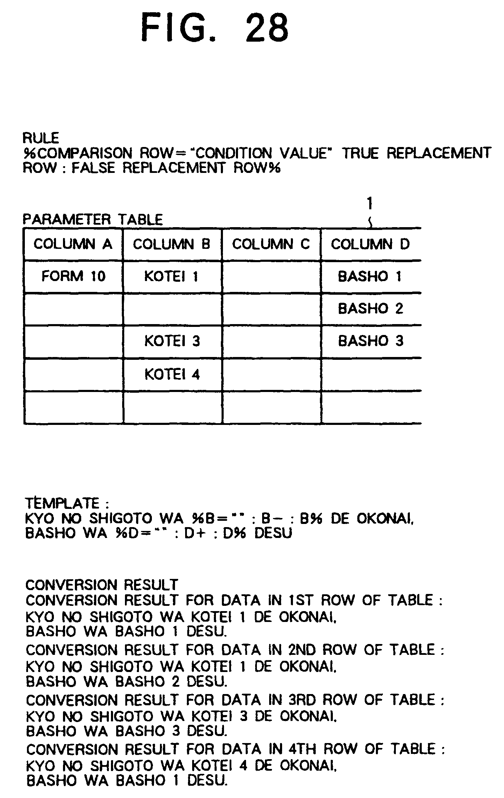

Fig. 28 is a diagram of assistance in explaining the manner in which replacement is conducted after conditions for comparison have been checked.

In outputting a desired sentence, it is desired that if an object agrees with certain conditions (if it is true), a first sentence should be output, and if the object does not agree with the conditions (if it is false), a second sentence should be output.

The example shown in Fig. 28 is to meet such a demand. That is, an expression of
"%comparison column="condition value": true replacement column: false replacement column%"
is used as the rule for processing.

Now, assume that
i. template name "Form 10" is described in column A, "Kotei 1" in column B, no description is given in column C, and "Basho 1" is described in column D of the first horizontal row,
ii. no description is given in columns A, B and C, "Basho 2" is described in column D of the 2nd horizontal row,
iii. no description is given in column A, "Kotei 3" is described in column B, no description is given in column C, and "Basho 3" is described in column D of the third horizontal row, and
iv. no description is given in column A, "Kotei 4" is described in column B, no description is given in columns C and D of the fourth horizontal row
   in the parameter table 1, as shown in Fig. 28.

The terms used in the above rule have the following meanings:
- Comparison row: Row being compared and judged
- "Condition value": Strings for comparing with the content of a comparison row
- True replacement column: Column in which strings of characters to be replaced when the result of comparison between a comparison column and the condition value is true (equal) are registered.
- False replacement column: Column in which strings to be replaced when the result of comparison between a comparison column and the condition value is false (not equal) are registered.

As described in reference to Fig. 13 above, descriptions may include replacement columns suffixed by + or ―.
Replacement column + (Ex.: D+): To be replaced by the content of the replacement column in the next row (Ex.: Column D). If the replacement column is in the final row, it is replaced by the content of the replacement column in the leading row (Ex.: Column D).
Replacement column ― (Ex.: B―): To be replaced by the content of the replacement column in the preceding row (Ex.: Column B). If the replacement column is in the leading row, it is replaced by the content of the replacement column in the leading row (Ex.: Column B).

In the above example, assume that a description of 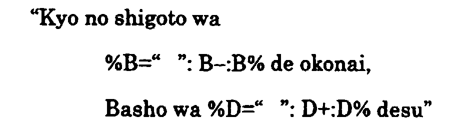 is given in a template 2.

In the first row in the parameter table 1,
(a) Column B is false because it is not equal to empty (non-description), and therefore the content of Column B, that is, "Kotei 1" is replaced, and
(b) Column D is false because it is not equal to empty (non-description), and therefore the content of Column D, that is, "Basho 1" is replaced.
   In the second row in the parameter table 1,
(c) Column B is true because it is equal to empty (non-description), and therefore the content of Cell "B―", that is, "Kotei 1" is replaced, and
(d) Column D is false because it is not equal to empty (non-description), and therefore the content of Cell "D", that is, "Basho 2" is replaced.
   In the third row in the parameter table 1,
(e) Column B is false, and "Kotei 3" is replaced, and
(f) Column D is false, and "Basho 3" is replaced.
   In the fourth row in the parameter table 1,
(g) Column B is false, and "Kotei 4" is replaced, and
(h) Column D is true, and the content of Cell "D+", that is, "Basho 1" is replaced.

As shown in Fig. 28, from the above results, the first row becomes
"Kyo no shigoto wa "Kotei 1" de okonai, basho wa "Basho 1" desu".
(Today's work will be performed in accordance with "Process 1", and the site of work is "Site 1".)

The second row becomes
"Kyo no shigoto wa "Kotei 1" de okonai, basho wa "Basho 2" desu".
(Today's work will be performed in accordance with "Process 1", and the site of work is "Site 2".)

The third row becomes
"Kyo no shigoto wa "Kotei 3" de okonai, basho wa "Basho 3" desu".
(Today's work will be performed in accordance with "Process 3", and the site of work is "Site 3")

The fourth row becomes
"Kyo no shigoto wa "Kotei 4" de okonai, basho wa "Basho 1" desu".
(Today's work will be performed in accordance with "Process 4", and the site of work is "Site 1".)

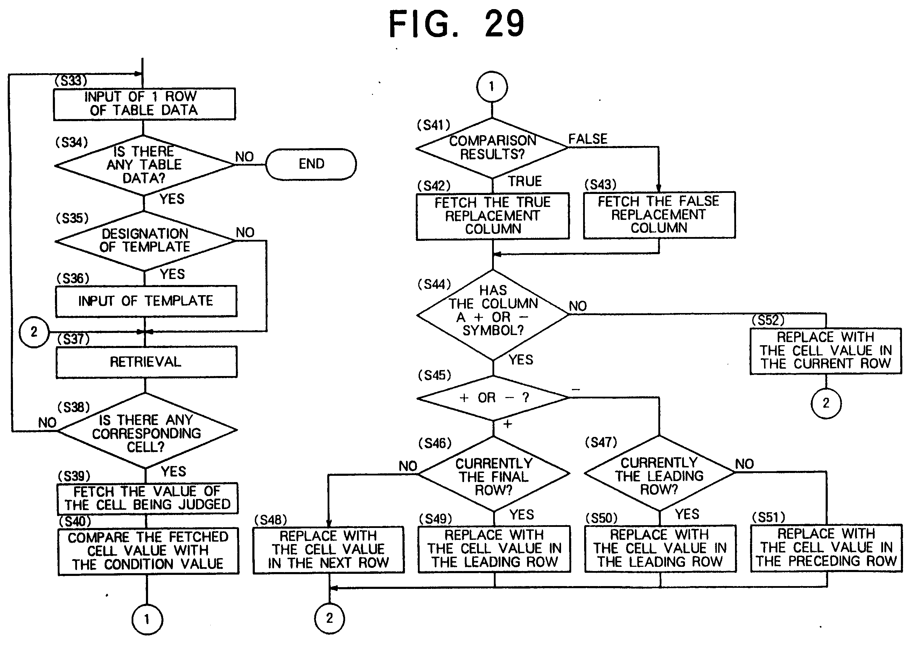

Fig. 29 shows the flow chart of processing shown in Fig. 28.
Step (S33): Input data in one row of the parameter table 1.
Step (S34): Whether the data is described is checked. If the data is not described, the processing is ended.
Step (S35): Whether the row in question has any template designation is checked.
Step (S36): If any, the template 2 is entered.
Step (S37): Cells in that row are retrieved.
Step (S38): Whether there are any corresponding cells is checked.
Step (S39): The value of the cell being judged is fetched.
Step (S40): The fetched cell value is compared with the condition value.
Step (S41): Whether the comparison result is true or false is checked.
Step (S42): If true, the true replacement column is fetched.
Step (S43): If false, the false replacement column is fetched.
Step (S44): Whether the column in question has a + or ― symbol is checked.
Step (S45): Whether the mark is + or ― is checked.
Step (S46): Whether the current row is the final row is checked.
Step (S47): Whether the current row is the leading row is checked.
Step (S48): It is replaced with the value in the cell in the next row.
Step (S49): It is replaced with the value in the cell in the leading row.
Step (S50): It is replaced with the value in the cell in the leading row.
Step (S51): It is replaced with the value in the cell in the preceding row.
Step (S52): It is replaced with the value in the cell in the current row.

In this invention, as briefly described with reference to Fig. 6, the content of a cell is checked in Step (S9) to see if the content of a cell in the parameter table 1 has a file name, etc., or a tag or extension. Based on the check results, various types of access processing are conducted in Step (S11), according to the replacement detection keys.

Various types of processing as described in reference to Figs. 16 through 29 above are performed in Steps (S12) through (S13) after classifying them into various types of corresponding access processing in Step (S11), except for simple replacement processing, such as "∼@**@∼" or "∼%**%∼".

### (The Second Embodiment)

The second embodiment of this invention makes it possible to request various versions by using insertion tags comprising specific symbols for requesting image files to be inserted. That is, when an insertion tag having a specific symbol is detected, files of the same kind in the same directory that are different in version are collected, from which desired files are selected for replacement.

The second embodiment of this invention prepares a list of revised versions of graphic files in a designated specific directory, and pastes in an image the link information that links only the revised versions of graphic files based on the list of revised versions. This enables high-speed retrieval of information on revised versions.

The second embodiment of this invention prepares a list of revised versions of graphics, calculates the difference between old and new versions of image files, and adds the difference to the latest version by changing its color. The second embodiment also calculates a rectangular region containing all the difference regions, and pastes link information on the new and old versions within the rectangular region.

Furthermore, the second embodiment of this invention prepares a list of revised versions comprising graphics of old and new versions, and calculates the difference between the old and new versions. As a result, if the difference is zero, link information is pasted on the graphic of the old version. This enables a reduction in duplicated image files to be achieved with link structures.

The manuscript text composition system of the aforementioned second embodiment of this invention has the same configuration as that of the first embodiment. Figs. 3 through 6 referred to in the description of the manuscript text composition system of the first embodiment are therefore referred to as they are in the following description of the manuscript text composition system of the second embodiment.

That is, the manuscript text composition system of the second embodiment of this invention offers a tool for easily generating HTML with the output data (CSV format) of spreadsheet software. The manuscript text composition system of the second embodiment having the configuration shown in Fig. 5 generates a translated template content 3 from the template 2 in accordance with the description of the parameter table 1 shown in Fig. 5 and generates a manuscript text 13 shown in Fig. 4 based on the generated translated template content 3 by executing the processing shown in Fig. 6.

The manuscript text composition system of the second embodiment of this invention is implemented on a computer having the aforementioned and other hardware resources using a program for operating the computer, as described above and as will be described in the following, referring to the process flow charts given below. This program is stored in various program storage media suitable for storing it.

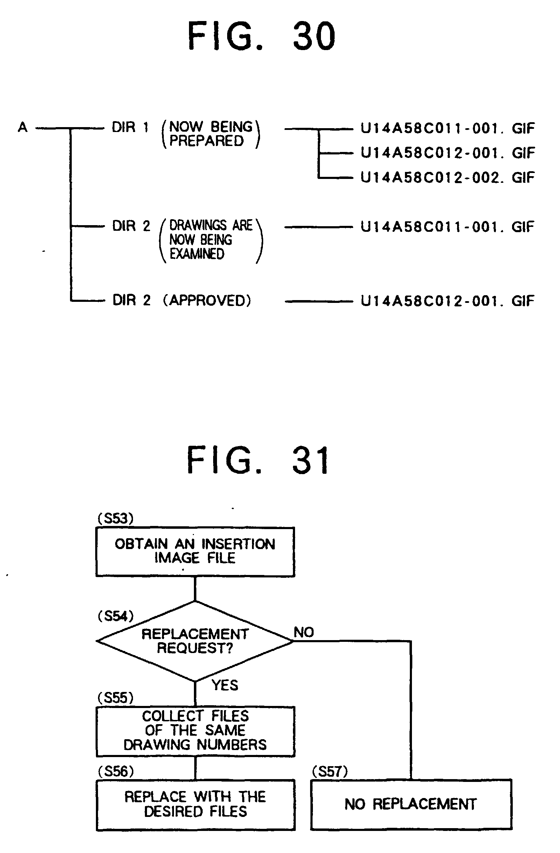

Next, the version control of files in the manuscript text composition system that is a distinct characteristic of this invention will be described in the following. To this end, insertion tags will be first described, referring to Fig. 21, and then the relationship between files and directories will be described, referring to Fig. 30.

Fig. 21 is a diagram of assistance in explaining insertion tags required for the version control of files, as described in the description of the first embodiment. In the example shown in Fig. 21, a file being pasted is first retrieved, and its version is compared with the designated date for compiling to determine a particular file being pasted. Detection keys, such as "∼+---+∼", are the same as described earlier.

Fig. 30 shows the relationship between a file and a directory, taking a CAD data file as an example. The CAD data file usually has a file name comprising a drawing number, suffixed by version information.

### Example) U14A58C011-001.gif

- Drawing number:: U14A58C011
- Version:: 001 (1st version)

A plurality of files having a plurality of drawing numbers and a plurality of versions are stored in each directory, classified into dir 1 (now being prepared), dir 2 (now being inspected) and dir 3 (approved), for example, as shown in Fig. 30. To designate these files, it is necessary to designate the name of directory, in addition to their drawing numbers and versions. The file name, such as "file1.gif", used in this specification should be deemed as including the name of directory.

Fig. 31 shows the overall operations for the version control of files that is a characteristic of this invention. To begin with, when an image file being inserted, such as %file1.gif%, is requested in Step (S53), that image file is obtained, as is apparent from the above description. "%---%" here is a file to be replaced on the basis of the compiling date, in other words, a file to be replaced invariably, with a designated specific file. Another arbitrary symbol, such as "#---#", may of course be used in place of "%---%". This invention can request various versions of a file using insertion tags of specific symbols to permit flexible replacement depending on the state of preparation of the file, instead of fixed replacement.

Judgment of insertion tags is accomplished in Step (S54) in Fig. 31. When the tag in question is "+---+", for example, that is for requesting a file of one version newer that the current version, files of the same type (same drawing number) in the same directory that are different only in terms of version are collected (Step (S55)), from which the desired file is selected for replacement (Step (S56)), though the details of the processing will be described later. If no request for replacement is made in Step (S54), no replacement is carried out (Step (S57)).

Fig. 25 is referred to in order to describe the processing of version control in further detail. Numeral 5 in Fig. 25 represents image files shown in Fig. 5 of the same drawing number in the same directory that are different in terms of version. Among them included is a graphic designated by "file1.gif", as described in the first embodiment; its first version (version 01) prepared on '96/04/14 (April 14, 1996), its second version (version 02) revised on '96/04/18, with the subsequent versions revised on the dates shown, and the latest version (version 06) on '96/05/13.

When a given template 2 has a description of
"∼%file1.gif%∼"
to use a specific file "file1.gif" as shown above, a graphic Q shown in Fig. 25 is pasted, as in the case of the first embodiment. It is assumed here that a replacement detection key "%---%" is defined as instructing the replacement of "---" using May 3, 1996, for example, as the reference date.

However, if the template 2 has a description of
"∼+file1.gif+∼",
whether there are files of one version newer than the third version based on May 3, 1996. If such files exist, then a file of the fourth version, that is, a graphic R as shown in the figure that was created on May 4, 1996 is pasted.

If the template 2 has a description of
"∼―file1.gif―∼",
then a file of one version newer than the third version, or of the second version, that is, a graphic P as shown in the figure that was created on April 18, 1996 is pasted.

Such graphics can be displayed by changing the color and size of image flame in accordance with the presence/absence of replacement, the version of the file, or the state of the graphic (now being prepared, now being inspected, or approved). If a graphic file is replaced with that of a new version, for example, the color of the frame is changed from clear to red, and the size of the flame is changed in accordance with the state of the graphic.

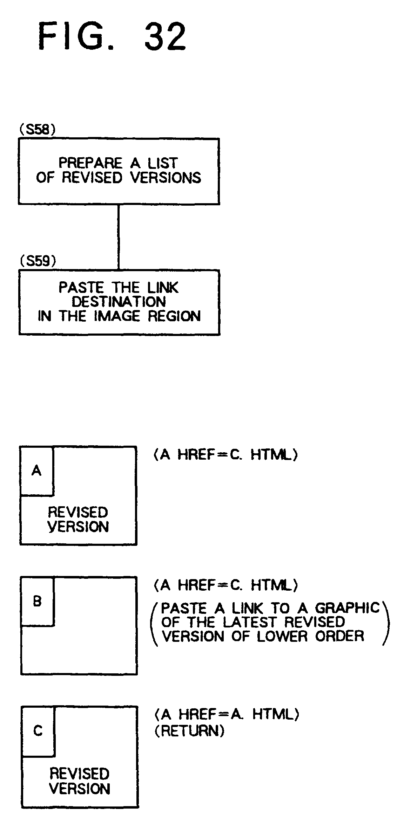

Fig. 32 is a diagram of assistance in explaining the high-speed retrieval of only information on revised versions. When there are a large number of graphic files in a given directory, and they are subjected to frequent revisions, there may often be the need to see only the updated files selectively among them. Fig. 32 shows the method of achieving this.

Assume that there are three graphics of A, B and C in a given directory, of which the graphics A and C have revised versions, but the graphic B has no revised versions. In such a case, the method shown in Fig. 32 provides a link connecting the graphics A and C having revised versions.

As shown in Step (S58), a list of revised versions of all the graphic files in a designated specific directory is prepared. In Step (S59), link information that links only the revised versions is pasted in an image based on the list of revised versions.

When the left upper corner of a graphic A, for example, which is displayed on the screen, is clicked with the mouse, the display screen jumps to a graphic C that is the next revised version linked to the graphic A, and then returns to the graphic A as if it moves around the linked graphics. The graphic B having no revised versions is linked to the nearest revised version of a lower order, or the graphic C in this case. This enables a high-speed retrieval of only revised-version information.

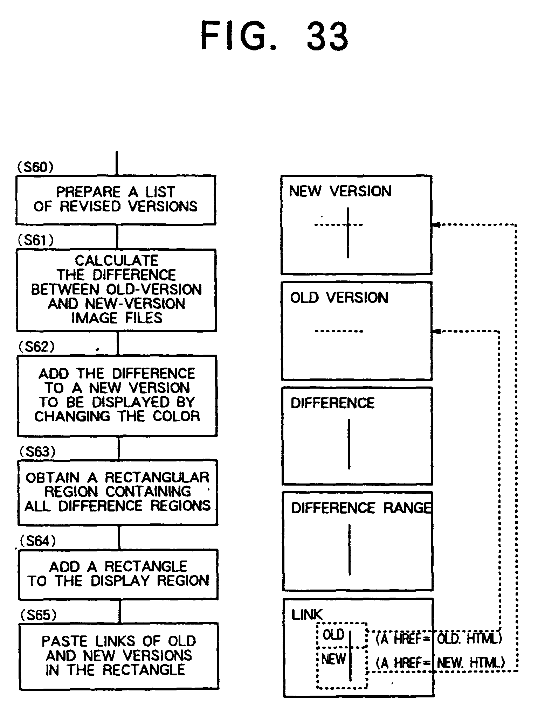

Fig. 33 is a diagram of assistance in explaining how to grasp and display the contents of the revised versions of a graphic. In cases where a graphic is revised frequently, there may sometimes be the need to display and recognize only the updated portions. This invention provides a means for easily display only the revised portions.

In Step (S60), a list of revised graphics comprising new and old versions is prepared for each graphic. In Step (S61), the difference between old and new versions of an image file for a specific graphic is calculated. It is assumed that the "new-version" graphic shown on the right side of Fig. 33 comprises horizontal broken lines and vertical solid lines, while the "old-version" graphic comprises horizontal broken lines. The difference calculated assumes vertical solid lines, as shown in Fig. 33.

In Step (S62), the difference is added to a new version being displayed by changing the color. In other words, only the color of the difference is changed on the new-version graphic displayed.

In Step (S63) a rectangular region including all the difference region is obtained, and the rectangle is added to the display region in a distinguishable color in Step (S64). In Step (S65), a link connecting the old and new version is provided in the rectangle. When the upper half of the rectangle is clicked, the display screen jumps to the old version, while clicking the lower half causes the screen to jump to the new version. Thus, the difference between the new- and old-version graphics is displayed, together with the new- and old-version graphics, in a simple manner so as to facilitate the grasping of the contents of revisions.

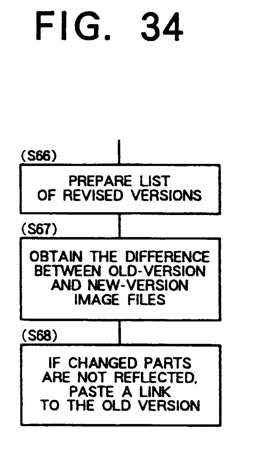

Fig. 34 is a diagram of assistance in explaining the method of linking when any change in graphics is not be reflected in the display screen. If the image file in question is three-dimensional data, any change in hidden portions is not reflected in the displayed image. In a perspective view of a die, for example, with the one-spotted side visible on the screen, any change in the invisible (hidden) side marked with six spots is not reflected on the screen. Or, too small a change in an image file, from a Phillips screw (with a cross-shaped recess in its head) to a slotted head screw, for example, is not reflected in the display screen. This invention provides a means for implementing a reduction in duplicated image files with a link structure.

In Step (S66), a list of revised versions comprising old-version graphics and new-version graphics. In Step (S67), the difference between the new- and old-version graphics is obtained. In Step (S68), when the resulting difference is zero, a link is provided to connect the old-version graphic to display the old-version graphic in place of the new-version graphic. With this, a reduction in duplicated image files can be implemented with a link structure. This leads to a reduction in read data, and accordingly in communication time.

### (The Third Embodiment)

The manuscript text composition system of the third embodiment of this invention has such a construction that the feedback information fed back from the user in response to presented information is pasted, together with the original information, on the parameter table to display both the presented information and the feedback information on a screen.

The manuscript text composition system of the third embodiment of this invention has a similar construction to that of the manuscript text composition system of the first embodiment. Figs. 3 through 6 referred to in the description of the manuscript text composition system of the first embodiment are used as they are in the description of the manuscript text composition system of the third embodiment.

That is, the manuscript text composition system of the third embodiment gives a tool for easily generating HTML using the output data (CSV format) of spreadsheet software. The manuscript text composition system of the third embodiment having a construction shown in Fig. 5 creates a translated template content 3 from the template 2 in accordance with the parameter table 1 shown in Fig.3 and creates a manuscript text 3 shown in Fig. 4 based on the translated template content 3 by executing the processing shown in Fig. 6.

The manuscript text composition system of the third embodiment of this invention is implemented on a computer having the aforementioned and other hardware resources using a program for operating the computer, as described above and as will be described in the following, referring to the process flow charts given below. This program is stored in various program storage media suitable for storing it.

In order to describe the manuscript text composition system of the third embodiment, Fig 12 used in the description of the first embodiment is referred to. Fig. 12 is a diagram of assistance in explaining an example where a template 2 can be specified using a cell specifying replacement detection key.

As described above, if the template 2 has a description of
"∼@Z3@∼",
it is instructed that the content of a cell having coordinates (Z3) in the parameter table 1 be replaced. The results of replacement of the above replacement detection key are as shown in Example ① or ② in Fig. 12. The content of description in each cell can take various forms as shown in Examples ① through ④ in Fig. 12.

The manuscript text composition system having such a construction can be applied to the preparation of a manuscript text based on the feedback information function that is a characteristic of the third embodiment.

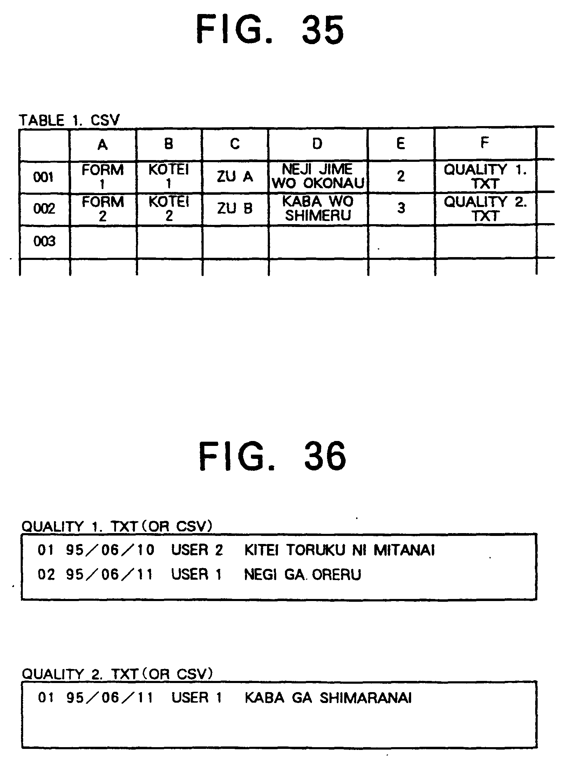

Fig. 35 shows "Table1.csv", which is a CSV format file corresponding to the aforementioned parameter table, prepared on the basis of a work procedure book, for example. Column A designates the name of a template, and Columns B∼D designate characters or character groups, and graphics being pasted on the display screen. Column E represents the number of fed-back quality requests, that are not essential to this invention. Column F, which is characteristic of this invention, designates quality information files storing the fed-back quality requests.

Fig. 36 shows two examples of quality information files, which may be prepared either in CSV or TXT format.

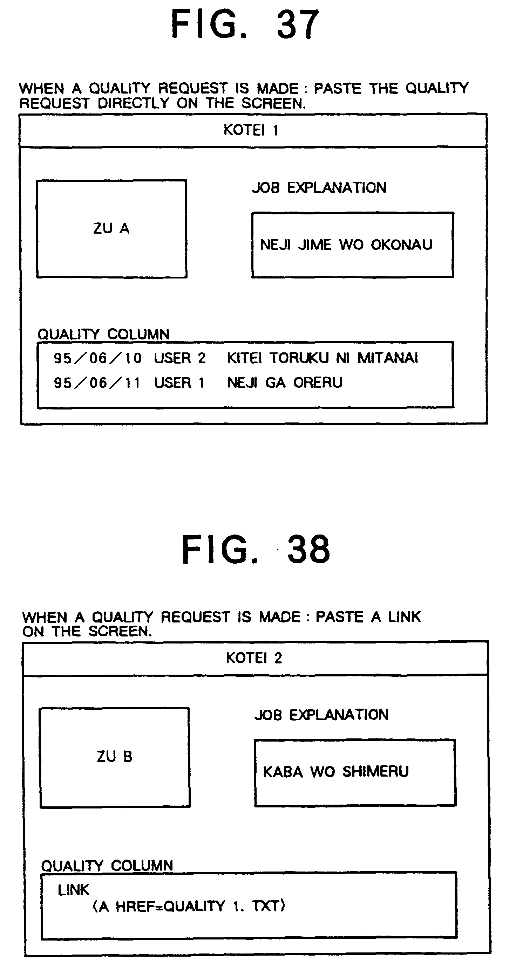

Figs. 37 and 38 are display screens in which fed-back quality requests are displayed, together with the presented information, taking a work procedure book as an example; Fig. 37 being a screen on which the fed-back quality requests are directly pasted as they are, and Fig. 38 being a screen on which a link to the fed-back quality requests is provided.

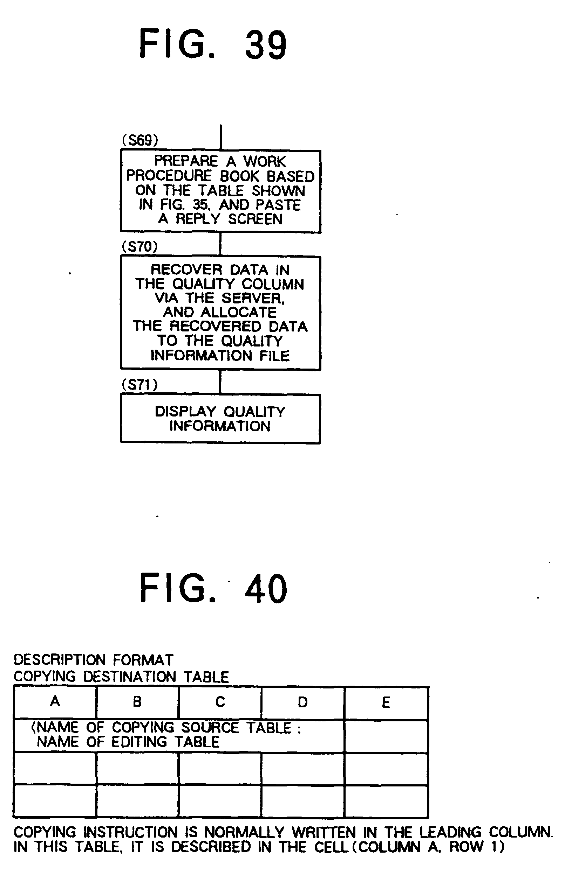

Fig. 39 is a diagram of assistance in explaining work procedures, taking as an example a work procedure book having quality information functions. Step (S69) in Fig. 39 prepares a work procedure book using Table2.csv as shown in Fig. 35, which is equivalent to a parameter table, prepares a translated template content, and pasted on the display screen as shown in Fig. 37 or 38. The content of the quality information file is also allocated on the screen by the template.

Next, the processing proceeds to Step (S70) in Fig. 39. The user examines the work procedure book on the Internet screen, for example, and if he has any quality request data to be fed back, feeds back them over the Internet. Fig. 37 is based on the assumption that the user "tighten the screw" as instructed in Kotei 1 (Process 1) presented together with Zu A (Drawing A), which is a relevant drawing, but he faces a trouble, such as "lack of specified torque" or "breakage of the screw". In such a case, the user feeds back the quality trouble information using the terminal unit. Such data recovered by the server are written in the aforementioned quality information file. Fig. 36 shows an example of such a quality information file.

In Step (S71), quality requests as the content of the file are displayed on the screen as they are allocated by the template. Figs. 37 and 38 show examples of such display screens. Fig. 37 shows the content of a quality information file displayed directly on the screen. As shown in Fig. 38, when there are too many contents of a quality information file to be displayed in one display screen, there may be cases where quality information should preferably be displayed in separate screens that are connected with link structures. When connected with link structures, the presence/absence of quality request data can be displayed and identified by changing drawing flames, display colors and other display factors.

### (The Fourth embodiment)

The manuscript text composition system of the fourth embodiment of this invention can arbitrarily combine and merge the rows and columns of data in the parameter table with the rows and columns of data in a separate table by describing in the copying instruction columns of the parameter table a copying symbol character ("〈", for example) that specifies copying.

The manuscript text composition system of the fourth embodiment of this invention can easily process a large amount of data by describing a continuation designation symbol ("―", for example) in the continuation line instruction column of the parameter table, and repeating the character string enclosed by repeat tags in the template.

The manuscript text composition system of the fourth embodiment of this invention has the same configuration as the manuscript text composition system of the first embodiment of this invention. Consequently, Figs. 3 through 6 referred to in the description of the manuscript text composition system of the first embodiment of this invention will be referred to as they are for the description of the manuscript text composition system of the fourth embodiment of this invention.

The manuscript text composition system of the fourth embodiment of this invention gives a tool for easily creating HTML using output data (CSV format) of spreadsheet software. The manuscript text composition system of the fourth embodiment of this invention having a configuration shown in Fig. 5 creates the translated template content 3 in accordance with the description of the parameter table 1 shown in Fig. 3, and generates a manuscript text 13 shown in Fig. 4 based on the translated template content 3 by executing the processing shown in Fig.6.

The manuscript text composition system of the fourth embodiment of this invention is implemented on a computer having the aforementioned and other hardware resources using a program for operating the computer, as described above and as will be described in the following, referring to the process flow charts below. This program is stored in various program storage media suitable for storing it.

Fig. 12 describing the first embodiment is referred to, as in the case of the third embodiment, in describing the manuscript text composition system of the fourth embodiment of this invention. Re-description of Fig. 12 will be omitted here.

The manuscript text composition system of the fourth embodiment of this invention provides a means for easily preparing the aforementioned parameter table dealing with a large amount of data. Figs. 40 ∼ 43 are diagrams of assistance in explaining a means for enabling merging of CSV format data for spreadsheet software used for the parameter table.

Fig. 40 is a diagram of assistance in generally explaining the descriptive format of table copying. Fig. 40 is based on the assumption that the table shown in a table of CSV format data for spreadsheet software. The general descriptive format of table copying according to this invention is to describe the name of a copying source table and the name of an editing table, following a copying designation symbol (normally "〈"), in a copying instruction column (the copying instruction column is normally a leading column, that is, the cell (Column A, 1st Row)) of data in a copying destination table. That is,
〈Name of copying source table: Name of editing table.

Description of the name of the source table is to identify a table being copied with its table name, while description of the editing table, the details of which will be described later, is to identity a table in which copying format is described.

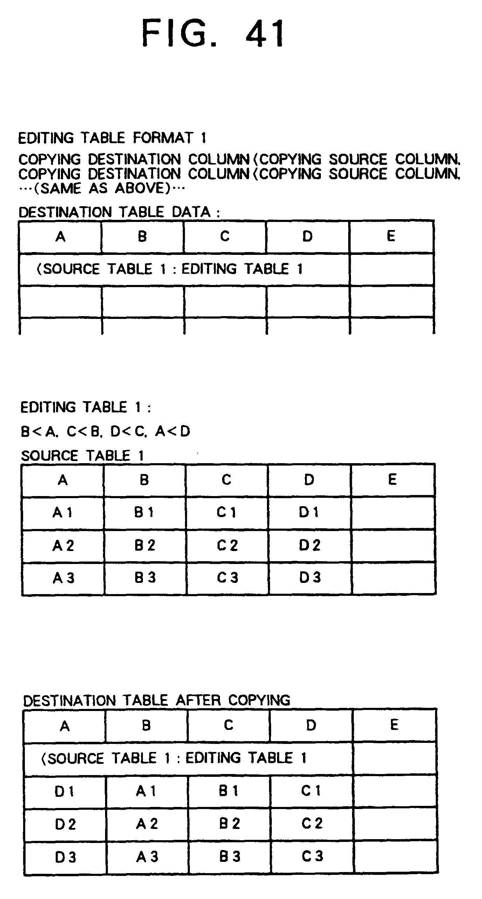

Fig. 41 shows table copying in accordance with Format 1 as the first example of the editing table. "Editing Table 1" that is the name of an editing table describing this Format 1 is described, with the copying destination symbol "〈" and "Copying source table 1" that is the name of the copying source table, in Column A as the leading column of the destination table, as noted earlier, and is shown in Fig.41. Format 1 of the editing table is as follows:
Copying destination column〈copying source column, copying destination〈copying source column --- (same as left) ---

Data in the source columns are sequentially copied into the destination columns in accordance with the coping rules by matching source row data to destination row data. All the copying rules are executed for each row of source table data to prepare one row of table data in the destination table. Copying is carried out until source table data are exhausted. More specifically, Editing Table 1 is described as follows:
B〈A, C〈B, D〈C, A〈D

This means that Source Column A is copied into Destination Column B, Source Row B into Destination Row C, Source Row C into Destination Row D, and Source Row D into Destination Row A, respectively. Source Table 1 shown in Fig. 41 is an example of tables being copied, and means that Column A is copied into Column B, Column B into Column C, Column C into Column D, and Column D into Column A, respectively, based on the aforementioned editing table, as shown in the table (copying destination table after copying) at the lower part of Fig. 41.

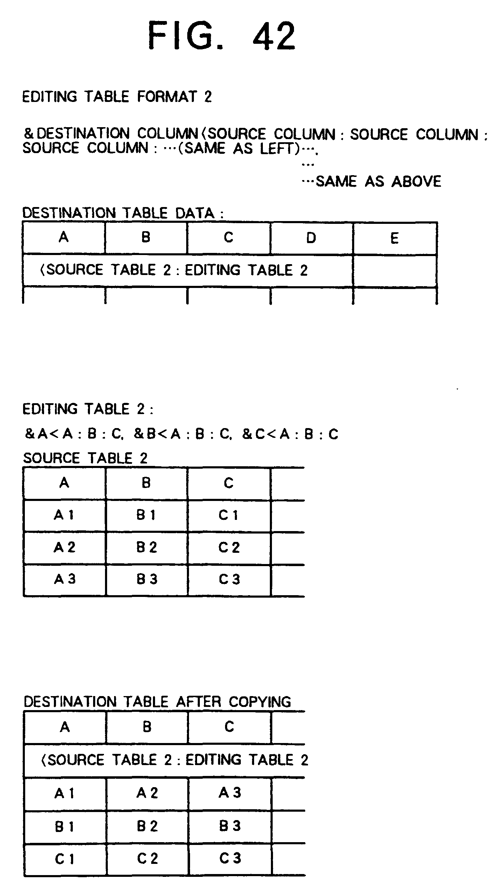

Fig. 42 shows Format 2 as the second example of the editing table. Format 2 of the editing table is as follows:

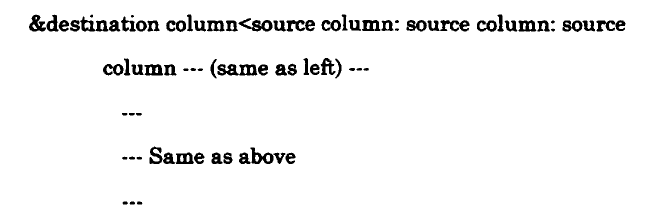

Data in one row in a source table are matched to one column covering a plurality of rows in a destination table, and sequentially copied in accordance with the rules. Table data of one row covering a plurality of rows are prepared in a copying destination table. Coping is carried out until the copying rules are exhausted in the editing table. & is used as an example of tag representing the same column covering a plurality of rows.

More specifically, Editing Table 2 is described as follows:
&A〈A: B: C,
&B〈A: B: C,
&C〈A: B: C

This means that A, B and C in the first row in a source table are copied into Column A in a destination table, A,B and C in the second row in the source table into Column B in the destination table, and A, B and C in the third row in the source table into Column C in the destination table, respectively. Fig. 42 illustrates that Copying Source Table 2 is copied into a copying destination table in accordance with the rules

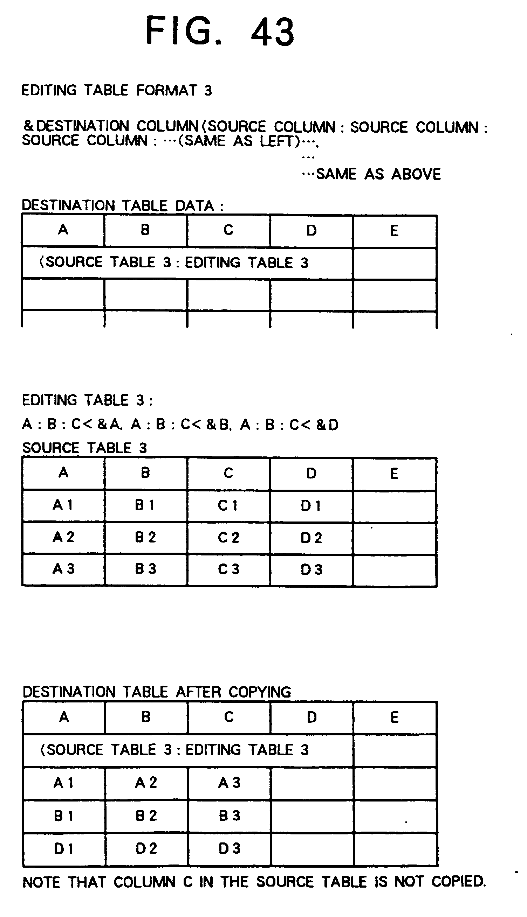

Fig. 43 shows Format 3 as the third example of the editing table. Format 3 of the editing table is as follows:

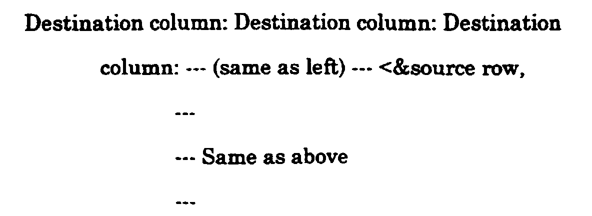

Table data in the same column covering a plurality of rows in a source table are matched to row data in a destination table, and data in the same designated column in the source table are sequentially copied into one row in the destination table. One line of table data is prepared in the destination table for data in the same row covering a plurality of rows in the source table. Copying is carried out until the copying rules are exhausted. & is shown as an example of tag representing the same column covering a plurality of rows.

More specifically, Editing Table 3 is described as follows:
A: B: C〈&A,
A: B:C〈&B,
A: B: C〈&D

This means that Column A in the source table is copied into A, B and C in the first row in the destination table, Column B in the source table into A, B and C in the second row in the destination table, and Column D in the source table into A, B and C in the third row in the destination table, respectively. Note that Column C in the source table is not copied in this example. Fig. 43 shows an example where the source table 3 is copied into the destination table in accordance with these rules.

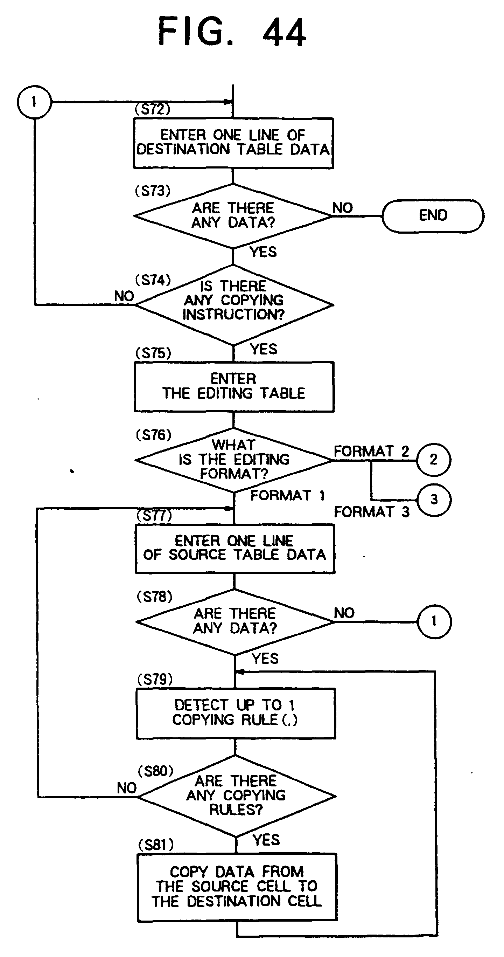

The aforementioned copying procedures will be described, referring to flow charts in Figs. 44 ∼ 46. First, one line of table data in the destination table is read in Step (S72) in Fig. 44. In Step (S73), whether there are any input data is judged, and if there are no input data, copying processing is ended. In Step (S74), a copying designation symbol (normally 〈) is retrieved. If no copying designation symbol is found, the processing is returned to the start of this flow chart (Step (S72) in Fig. 44).

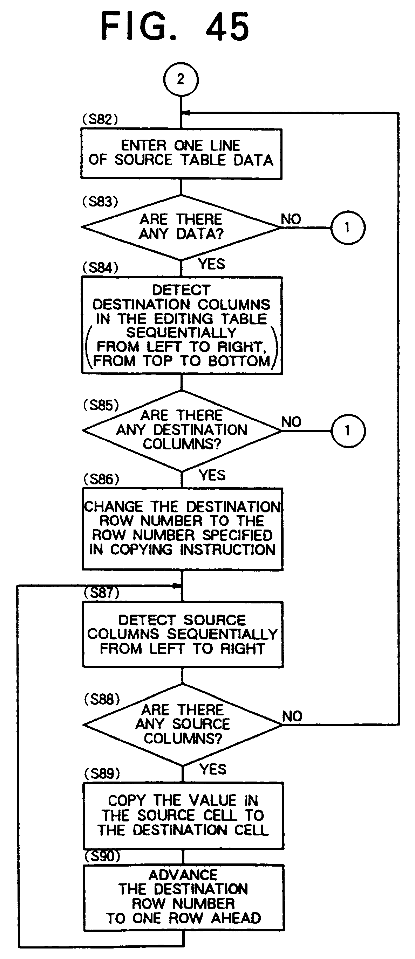

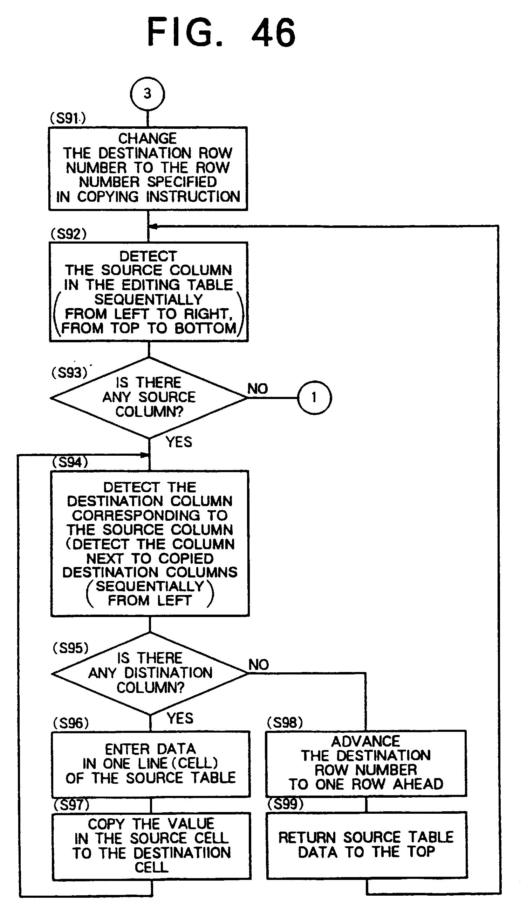

If the first row of data in the destination table in Fig. 41 is entered, for example, the processing proceeds to Step (S75) because there is a description of copying designation symbol. In Step (S75), a specified editing table is entered. In Step (S76), the aforementioned editing format is judged by referring to Figs. 41 ∼ 43, and if it is Format 2, the processing proceeds to Step (S82) in Fig. 45, and if it is Format 3, the processing proceeds to Step (S91) in Fig. 46. If it is Format 1, the processing proceeds to Step (S77) in Fig. 44, where one row of the source table data specified by the editing table is entered. In Step (S78), whether there are data is judged, and if there are no data, the processing is returned to the start of the flow chart.

Assuming that the first row (A1, B1, C1 and D1) in Source Table 1 in Fig. 41 is entered, for example, the processing proceeds to Step (S79), where if the copying rules (B〈A,) at the beginning of description in the editing table in Fig. 41, the processing proceeds downwards from Step (S80) to Step (S81), where the cell A1 (Column A, 1st Row) in the source table is copied into the destination cell (Column B, 2nd Row). The processing is then returned to Step (S79), where the next copying rule is detected. In the example shown in Fig. 41, since there are no copying rules after the fourth copying rule (A〈D) has been completed, the processing is returned from Step (S80) to Step (S77), where the second row of data in the source table is processed. In the example shown in Fig. 41, since there are no data after three rows of data in the source table have been processed, the processing is returned from Step (S78) to the beginning of the flow chart.

If the editing format is Format 2, as described, referring to Fig. 42, the processing proceeds from Step (S76) in Fig. 44 to Step (S82) in Fig. 45, where one data of data in the source table is entered. If there are no data, the processing is returned from Step (S83) to the start of Fig. 44. If the first row (A1, B1 and C1) of Source Table 2 in Fig. 42 is entered, for example, the processing proceeds to Step (S84), where copying destination columns in Editing Table 2 shown in Fig. 42 are detected sequentially from left to right, and from top to bottom. In this example, since there are no copying destination columns after columns have been detected up to Column C, the processing is returned from Step (S85) to the start. Assuming that Column A in the destination table has been detected based on the initial copying rule (&A〈A: B: C), the processing proceeds to Step (S86).

In Step (S86), row numbers in the destination table are set. The first row number is set in the next row in which the copying designation symbol is described, for example. In Step (S87), columns in the source table are detected sequentially from left to right. Assuming that the first row (A1, B1, C1) is entered, as noted above, it is sequentially detected in the order of A1, B1 and C1. Since there are no columns in the source table after C1 has been detected, the processing is returned from Step (S88) to Step (S82), where the next row of data in the source table is entered.

As the first column (A1), for example, has been detected, (A1) is copied into the cell (Column A, 2nd Row) in the destination table in Step (S89). In Step (S90), row number in the destination table is advanced by one row. In this example, row number is advanced from the second row to the third row, where the next copying is carried out. The processing is then returned to Step (S87), where the next column in the source table, (B1) in this example, is detected, and the subsequent processing is carried out in the same manner. Upon completion of one row in the source table, the processing is returned from Step (S88) to Step (S82) to process the next row. As all rows have been processed, the processing is returned from Step (S83) to the start of the flow chart.

In Step (S76) of Fig. 44, when editing format is judged to be Format 3 described above, referring to Fig. 43, the processing proceeds to Step (S91) in Fig. 46, where row number in the destination table is set to the next row where there is a copying instruction, as shown in Fig. 43, for example. In Step (S92), source columns in the editing table are detected sequentially from left to right, and from top to bottom. In Step (S93), whether there are source columns is judged. In Editing Table 3 of Fig. 43, there are three source columns. Upon completion of processing of all these source columns, the processing is returned from Step (S93) to the start of the flow chart.

In Step (S94), Columns A, B and C in the destination table corresponding to Column A in the source table are detected sequentially in accordance with the first copying rule (A: B: C〈&A) in Fig. 43, for example. In Step (S95), whether there are destination columns is judged, and the processing proceeds to Step (S98) upon completion of processing of all the destination columns A, B and C. Otherwise, one row (one cell) of data in the source table is entered in Step (S96). In this example, A1, the cell (Column A, 1st Row) in the source table is first entered, and copied into a cell in the destination table, 2nd Row of Column A in this example in Step (S97). The processing is returned to Step (S94), where the next destination column, Column B in this example, is detected, and thus A2 in the source table is copied into Column B in the destination table.

In this example, after processing has been finished up to Column C in the destination table, the processing proceeds to Step (S98), where row number in the destination table is advanced by one row. In Step (S99), table data in the source table are returned to the leading row. In Step (S92), Column B in the source table is processed in the same manner in accordance with the next copying rule. As all the processing has been finished, the processing is returned from Step (S93) to the start.

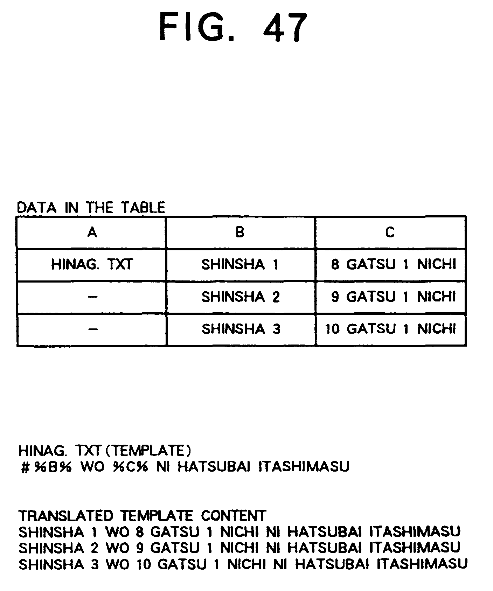

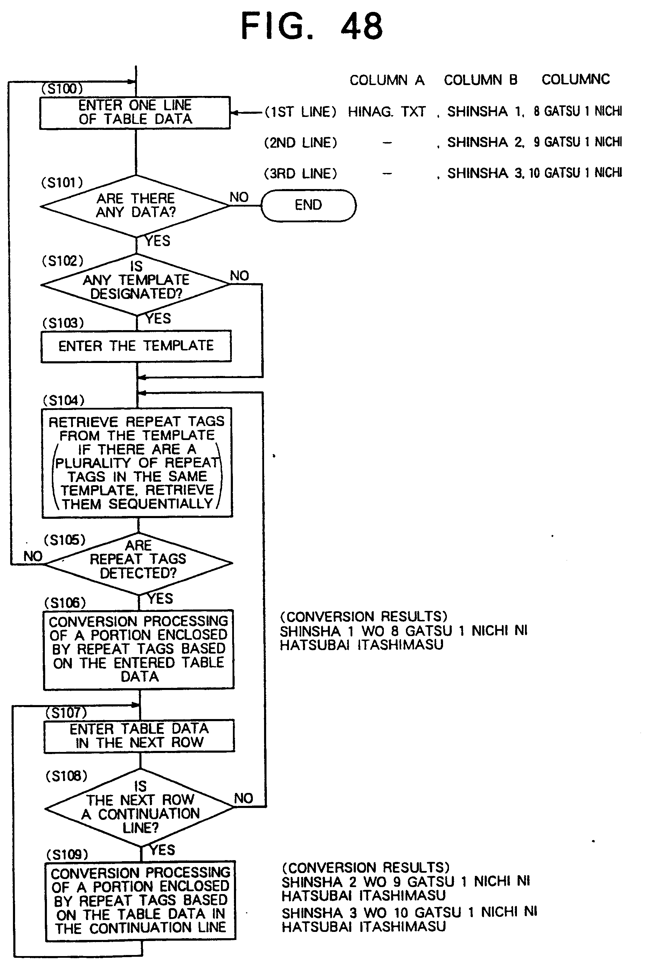

Figs. 47 and 48 are diagrams of assistance in explaining the concept of continuation lines in table data. Fig. 47 shows an example of table data and template used for that purpose, and the translation results converted using them.

The table data shown in Fig. 47 are characterized in that a continuation designation symbol (normally "―") is described in the continuation line designating column (normally the leading column, Column A in Fig. 47). This continuation designating symbol (―) has the character string to be repeated described in a cell by the number of repetition. In the template, on the other hand, a character string being repeated is designated by enclosing it with repetition tags ("#---#"). %B% and %C% represent replacement tags to be replaced with the contents of Columns B and C. respectively. Although the template normally comprises a plurality of lines, as shown in Fig. 3, the template "hinag.txt" shown in Fig. 47 is an excerpt of the template.

Since %B% and %C% in the template shown in the figure as an example are replaced with the contents of Columns B and C in the table shown in Fig. 47, it is apparent from the above description that the first row in this table is converted in the following manner.
"Shinsha wo 8 gatsu 1 nichi ni hatsubai itashimasu." (New car sales will begin on August 1.)

Since this template has repetition tags (#), the string enclosed by #, that is, %B% wo %C% ni hatsubai itashimasu" is repeated twice, the number of the continuation designating symbol (―) in the table shown in Fig. 47, in the second and third rows in the table. That is, the following conversions are added.
"Shinsha wo 9 gatsu 1 nichi ni hatsubai itashimasu."
"Shinsha wo 10 gatsu 1 nichi ni hatsubai itashimasu."

Upon completion of this conversion, conversion is carried out for other parts of the template comprising a plurality of lines. Upon completion of all the conversions, this processing is terminated.

The processing of continuation lines will he described in further detail by referring the processing procedures shown in Fig. 48, together with Fig. 47. In Step (S100), one line of table data is read, and whether there are any input data is judged in Step (S101). If there are no input data, the continuation line processing is finished. In Step (S102), whether there is any template designation is judged, and if there is a template designation, a template is entered in Step (S103).

Now, assume that the first line of table data is entered in the example shown in Fig. 47. Since there is a designation of hinag.txt as a template, this is entered. In Step (S104), repetition tags (normally #---#) are retrieved from the template entered. If there are a plurality of repetition tags in the same template, they are retrieved sequentially. If any repetition tags have not detected in Step (S105), the processing is returned to Step (S100). If any repetition tags have been detected, the portion enclosed by the repetition tags is converted based on the table data entered in Step (S106). As a result, "Shinsha 1 wo 8 gatsu 1 nichi ni hatsubai itashimasu." is obtained, as described earlier.

In Step (S107), the next line of table data is entered, and whether it is a continuation line is judged in Step (S108). If it is not a continuation line, the processing is returned to Step (S103) to retrieve the next repetition tags from the template. If the next line is a continuation line, the portion enclosed by the repetition tags is converted based on the table data of the continuation line in Step (S109). As a result, "Shinsha 2 wo 9 gatsu 1 nichi ni hatsubai itashimasu." is obtained. The processing is then returned to Step (S107) where the next line is entered, and a similar judgement is made. In the example shown in Fig. 47, a similar conversion is carried out again since the next line is a continuation line. As a result, "Shinsha 3 wo 10 gatsu 1 nichi ni hatsubai itashimasu." is obtained. Upon completion of all the processing of continuation lines, the processing is returned to Step (S104) to retrieve the next repetition tags.

### (The Fifth Embodiment)

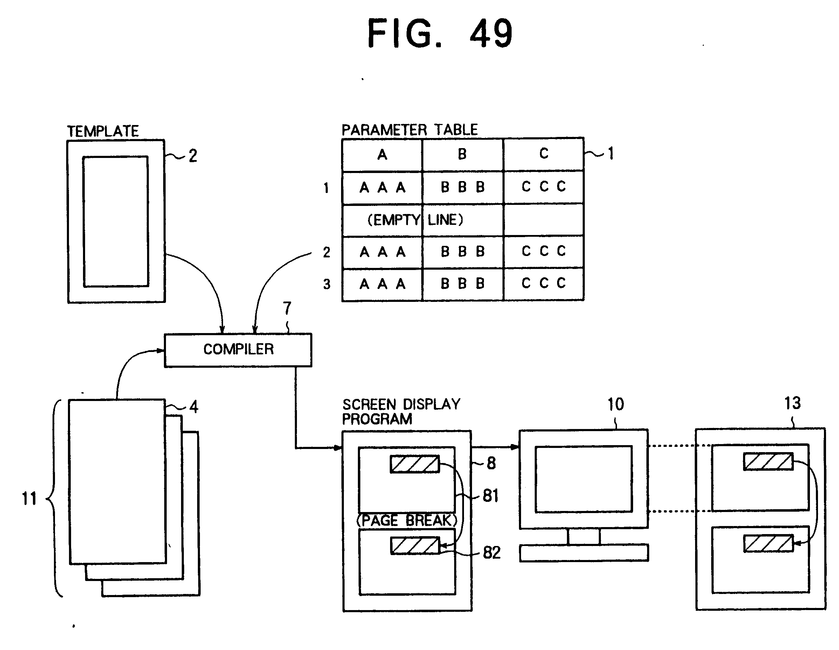

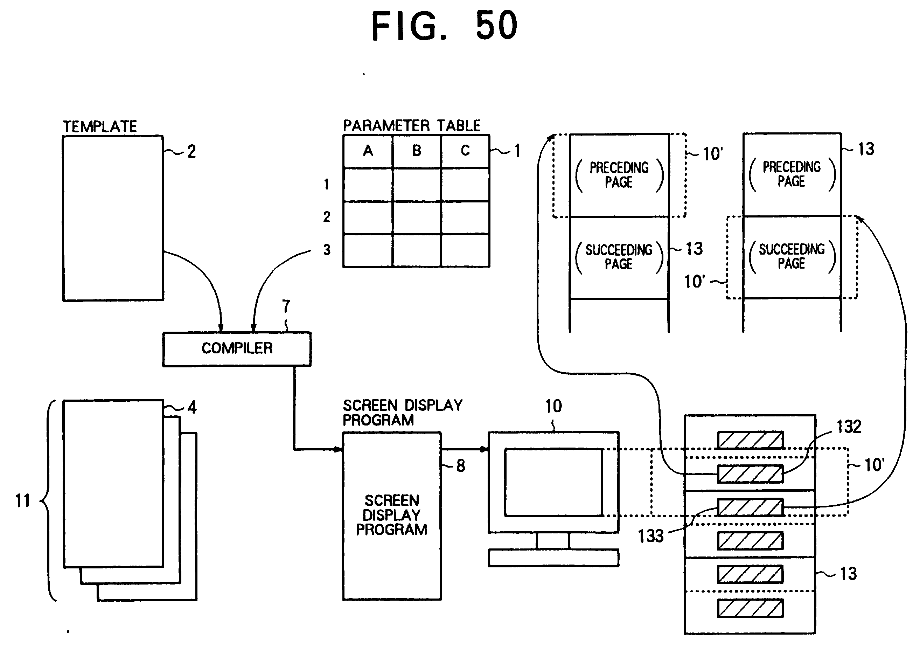

Figs. 49 and 50 are diagrams of assistance in explaining the operating principle of the fifth embodiment of this invention, showing the configuration of a manuscript text composition system according to this invention.

In the manuscript text composition system shown in Figs. 49 and 50, templates 2 for specifying with replacement detection keys to replace part of any one or all of texts with specific characters or character groups, or to replace part or all of images are prepared, and a file 11 storing the specific characters or character groups and/or specific images specified by the replacement detection keys is provided; a compiler 7 preparing a screen display program 8 using one of the templates 2, and the specific characters or character groups and/or specific images stored in the file 11, a terminal unit 10 creating a manuscript text 13 on which the specific characters or character groups and/or specific images corresponding to one of the templates 2 based on the screen display program 8.

The manuscript text composition system shown in Fig 49 has a parameter table 1 for specifying parameters corresponding to specific characters or character groups and/or specific images in a table format having two or more dimensional coordinate axes. The screen display program 8 comprises one or a plurality of discrete files, each of which corresponds to each page as a unit of display of the manuscript text 13. The parameters corresponding to one of the templates 2 are continuously described in a plurality of rows corresponding to one coordinate axis in the parameter table 1, and when an empty row is inserted at any location of the rows, the compiler 7 generates a screen display program 8 comprising a discrete file which is divided into mutually different front and rear parts by the empty row forming the boundary between them, and links data in the mutually different discrete files in the screen display program 8 in accordance with the parameter table 1.

In the manuscript text composition system shown in Fig. 50, the compiler 7 or the terminal unit 10 sets an upper jump regions 132 and 133 at the upper and lower ends of an image when the image is included in a generated manuscript text 13; a jump instruction to the top of the preceding page in the upward direction of the screen is set in the upper-end jump region 132, and a jump instruction to the top of the succeeding page in the downward direction of the screen is set in the lower-end jump region 133.

In the manuscript text composition system shown in Fig. 49, when the user who sees the page layout of the generated manuscript text 13 inserts an empty row in the parameter table 1, one discrete file consisting of a plurality of rows is automatically divided into mutually different discrete files with the empty row as a boundary. That is, discrete files corresponding to pages are automatically created with the empty row as a boundary. Furthermore, the data in the mutually different discrete files are automatically linked in accordance with the parameter table 1. That is, the data are linked exceeding the boundaries of discrete files in the screen display program 8.

With this arrangement, when one sentence or one image in the obtained manuscript text 13 overflows from the screen, for example, the user can easily reedit the text 13 by inserting the empty row, so that the sentence or image is rearranged so as not to overflow from the screen. That is, the user can easily add the instructions for the page break and layout the page again. Furthermore, when the page break instructions are added, data in different pages can be linked by automatically changing the links, together with the page break instructions without imposing any burden on the user. Accordingly, the manuscript text composition system of the present invention makes it possible to easily layout the page of the generated manuscript text 13 and to correctly maintain the data link.

In the manuscript text composition system shown in Fig.50, when the image is included in the generated manuscript text 13, the upper-end jump region 132 in which the jump instruction to the top of the preceding page in the upward direction of the screen and the lower-end jump region 133 in which the jump instruction to the top of the succeeding page in the downward direction of the screen are set in the upper-end and lower-end of the image, respectively.

With this arrangement, when a manuscript text 13 including a large image is displayed sequentially from the top, for example, the user can jump to a desired part of the manuscript text 13 in accordance with the user's instruction without scrolling the large image. When the user clicks the upper end of the screen, the upper-end jump region 132 enables a jump to the top of the preceding page, while the user clicks the lower end of the screen, the lower-end jump region 133 enables a jump to the top of the succeeding page. That is, clicking the upper-end and lower-end jump regions enables jumps in directions different from scroll or jump with normal clicking. The manuscript text composition system of this invention can automatically implement a function to jump the screen in a predetermined direction in the display output of the generated manuscript text 13.

The manuscript text composition system of the fifth embodiment shown in Figs. 49 and 50 has the same configuration as the manuscript text composition system of the first embodiment. Figs. 3 through 6 referred to in the description of the manuscript text composition system of the first embodiment are therefore referred to as they are in describing the manuscript text composition system of the fifth embodiment.

That is, the manuscript text composition system of the fifth embodiment provides a tool for easily generating HTML using output data (CSV format) of spreadsheet software. The manuscript text composition system of the fifth embodiment has a configuration as shown in Fig. 5, and creates a translated template content 3 from the template 2 in accordance with the description in the parameter table 1 shown in Fig. 3 and creates a manuscript text 13 shown in Fig. 4 based on the translated template content 3 by executing the processing shown in Fig. 6.

The manuscript text composition system of the fifth embodiment of this invention, including the manuscript text composition system shown in Figs. 49 and 50, is implemented on a computer having the aforementioned and other hardware resources using a program for operating the computer, as described above and as will be described in the following, referring to the process flow charts given below. This program is stored in various program storage media suitable for storing it.

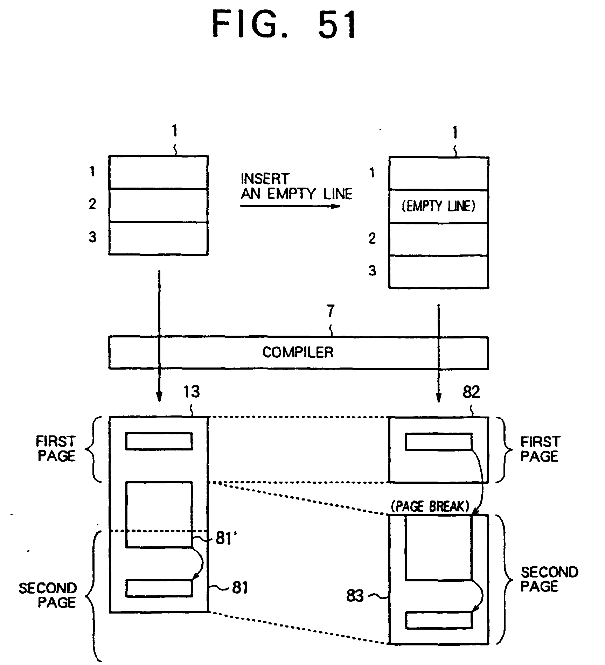

There may be cases where the display (layout) of the completed manuscript text 13 does not meet the user's intention. When the user pastes large data 81' on the template 2 using the parameter table 1, as shown in Fig. 51, for example, the pasted data 81' may not fit in the screen displaying the first page. This is attributable to the fact that the display screen is of a fixed size, while the size of the data pasted on the template 2 is not fixed. Consequently, the relationship between the display of the manuscript text 13 and the display screen must be determined by the actual compiling results. In this case, breaking the page immediately before such a large pasted data 81' can prevent the pasted data 81' from overflowing from the screen.

The manuscript text composition system of this invention facilitates page break (page layout) in a manuscript text 13 by easily implementing a page break instruction by inserting an empty row in the parameter table 1, as shown in Fig. 49. The manuscript text 13 is not limited to that generated using means described by referring to Figs. 49 and 50, and Figs. 3 through 6 above, but may be that generated using means described in Figs. 11 through 16, and Figs. 21 through 29 in the following.

In the manuscript text composition system of this invention, the compiler 7 detects that the parameters corresponding to one of the templates 2 are continuously described in a plurality of rows corresponding to one coordinate axis in the parameter table 1 and an "empty row" is inserted in a given location in the rows, and carries out compiling. At this time, the compiler 7 creates a screen display program 8 comprising mutually different discrete files with the empty row as the boundary, with the data in the mutually different discrete files linked in accordance with the parameter table 1. This linking is carried out for the mutually different discrete files in the screen display program 8 using newly generated file names. To achieve this, the compiler 7 creates the names of discrete files using the row number of the row in the parameter table 1. and attaches the newly created names to the discrete files.

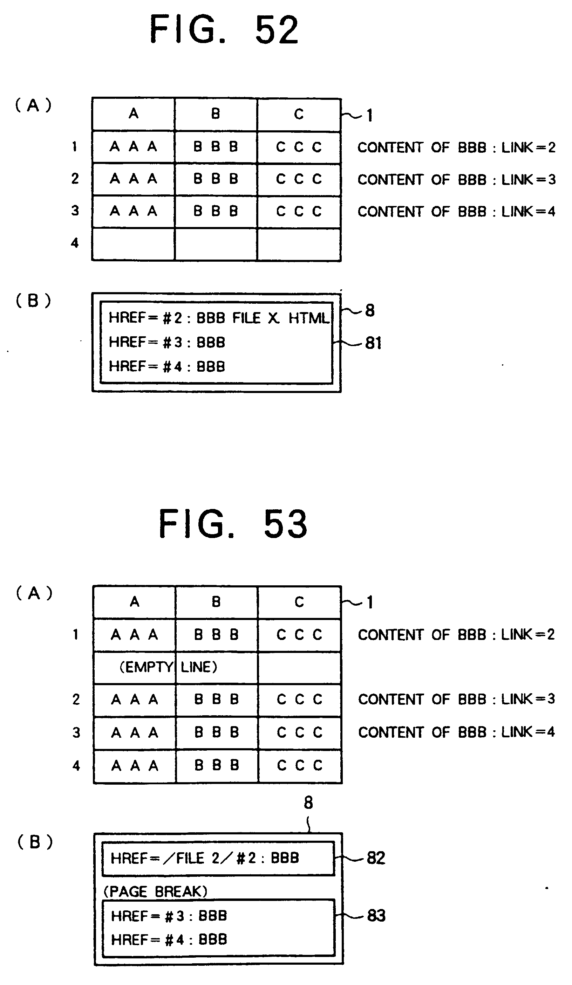

Now, assume that a parameter table 1 for a certain created manuscript text 13 is described in Fig. 52(A). AAA, BBB and CCC in the table are character strings described in Columns A, B and C, respectively (the contents thereof are different from each other). Assume that the character string BBB in Cells (B1), (B2) and (B3) are
LINK=2,
LINK=3,
LINK=4,
respectively. Also, assume that the string "LINK=2", for example, specifies a link to the second row in the parameter table 1. The same applies to other character strings. Thus, the parameters corresponding to one of the templates 2 are continuously described in a plurality of rows corresponding to one coordinate axis in the parameter table 1.

In this case, the screen display program 8 as the compiling result of the tempate 2 comprises one discrete file 81, as shown in Fig. 51, which includes descriptions of
HREF=#2:BBB FILEX.html,
HREF=#3:BBB,
HREF=#4:BBB.
"HREF=#2:BBB FILEX.html" corresponds to LINK=2, and represents the compiling result thereof. "HREF=#3:BBB" and "HREF=#4:BBB" correspond to LINK=3 and LINK=4, respectively, and represent the compiling results thereof.

"HREF=" used here specifies a link to a link target that is described immediately after it. The key "#", which is used independently, specifies a link to data in the same file. Consequently, "#2:BBB FILEX.html", for example, specifies a link to the character string "BBB" in the "2nd row" in the same file "FILEX" in which contains that description and which is "HTML document". In "#3:BBB" and "#4:BBB", the name of file is omitted because there is only one and the same file. "X" represents an unspecified file since the existence of only one file makes it unnecessary to specily a file name.

For the sake of simplicity, it is assumed that the amount of data to be pasted on the template 2 by "#2:BBB FILEX.html" and "#4:BBB" is small, and that the amount of data 81' to be pasted on the template 2 as the compiling result of "#3:BBB" is large, as shown in Fig. 51. Under such conditions, there may be cases where the data 81' being pasted may not fit into the display screen. That is, the data 81' being pasted may be displayed with the intermediate portion thereof cut off.

To cope with this, the user inserts a page break instruction immediately before the data 81' being pasted, as shown in Fig. 53. As described above, the manuscript text composition system of this invention can easily implement a page break instruction by inserting an empty row in the parameter table 1. Since the amount of the data 81' being pasted by "#3:BBB" is large, an empty row is inserted immediately before the data 81' being pasted (after the first row and before the second row of the parameter table 1), as shown in Fig. 53 (A). By doing this, the subsequent rows (after the second row) in the parameter table 1 are shifted by one row accordingly. The row number of each row remains unchanged because no row number is added to the empty row.

The compiler 7 detects that the user has inserted an empty row, and that the insertion is made between Row Numbers 1 and 2 that have been continuously described in the parameter table 1. In response to the page break instruction comprising an empty row, the compiler 7 rearranges a screen display program 8 that has been one discrete file 81 into that comprising two discrete files 82 and 83 corresponding to the description made before the empty row, as shown in Fig. 51. That is, the discrete file 81 is divided into mutually different discrete files 82 and 83, with the empty row as the boundary.

The compiler 7 then creates discrete file names "FILE1" and "FILE2" using Row Numbers "1" and "2" before and after the inserted empty row in the parameter table 1, and add them to the corresponding discrete files 82 and 83. That is, discrete files "FILE1" and "FILE2" are created. Since Row Numbers in the parameter table 1 are unique, the newly created file names are also unique. Thus, duplication of file names can be avoided.

The compiler 7 then links the data in the created discrete files "FILE1" and "FILE2" using the newly created file names in accordance with the parameter table 1.

That is, the description
HREF=#2:BBB FILEX.html
in FILE1 is changed to
HREF=/FILE2/#2:BBB.
where "/---/" specifies a link to the data stored in a different file. --- is the name of the different file to be linked. "/FILE2/#2:BBB" therefore specifies a link to the character string "BBB" in the "second row" in the file "FILE2" that is different from the file "FILE1" having that description. That is, by inserting an empty row, the data 81' after the empty row is divided into FILE1 having that description and FILE2 that is difference from FILE1, and is automatically linked to FILE2 after division. Thus, the data 81' can be correctly pasted on the template 2.

The descriptions
HREF=#3:BBB,
HREF=#4:BBB
in FILE2 are left as they are. Both "#3:BBB" and "#4:BBB" exist in FILE2 after division. Consequently, these descriptions are not changed since both the link source and target exist in the same file.

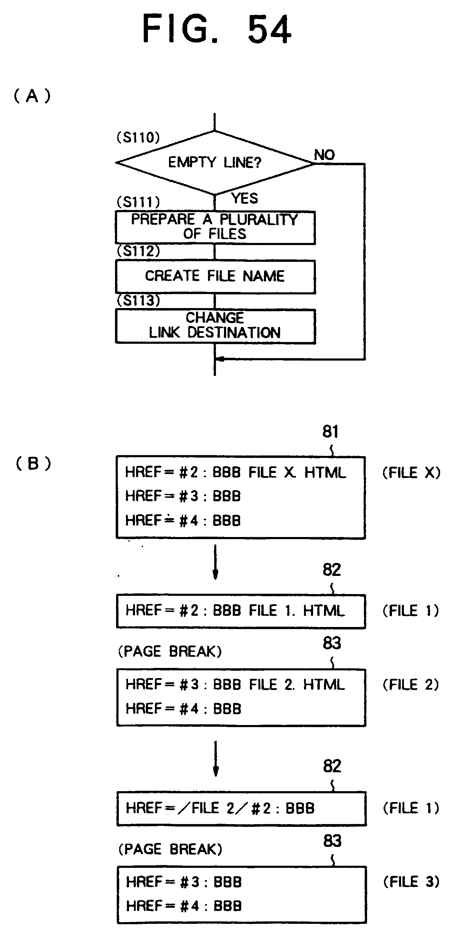

Fig. 54(A) shows the page break processing carried out by the compiler 7.
Step (S110): Whether an empty row is inserted in a plurality of rows having continuous descriptions in the parameter table 1 is checked.
Step (S111): When an empty row is inserted, the discrete file 81 corresponding to the row having continuous descriptions is divided to create discrete files 82 and 83.
Step (S112): Using row numbers before and after the empty row inserted in the parameter table 1, file names are created for the discrete files 82 and 83 generated in Step (S111) and attach them to the discrete files 82 and 83.
Step (S113): Using the created file names, the link targets of data in the discrete files are changed in accordance with the initial parameter table 1.

When no empty row is inserted in Step (S110), on the other hand, the processing from Step (S111) through Step (S113) is omitted. The discrete file 81 is therefore left as it is.

Details of changing data linking executed by the compiler 7, particularly the details of Step (S113), will be described in the following, referring to Fig. 54 (B).

As described above, when an empty row is inserted in the parameter table 1, one discrete file FILEX in the screen display program 8 is divided into two discrete files 82 and 83, to which the file names "FILE1" and "FILE2" created using row numbers in Step (S115) are attached. At this time, the description of the link target is not changed (not in the manner as shown in Fig. 54 (B)). The discrete file 81 is divided (generated) so that the portion from the first empty row to the next empty row is made as a discrete file.

Next, in Step (S113), the description
HREF=#2:BBB FILEX.html
in FILE1 is changed to
HREF=#2:BBB FILE1.html.
That is, "FILE1", a file name having that description, is added. In addition, the descriptions
HREF=#3:BBB,
HREF=#4:BBB
in FILE2 are changed to
HREF=#3:BBB FILE2.html,
HREF=#4:BBB.
Since "#4:BBB" is in the same file as "#3:BBB", the file name "FILE2" is not added.

Next, the description
HREF=#2:BBB FILE1.html
in FILE 1 is changed to a description showing a correct link target:
HREF=/FILE2/#2:BBB
in the same STEP (S113). That is, the original discrete file is divided into difference discrete files because the second row in the parameter table 1 that is the link target. This indicates that it is necessary to change the file name of the link target. Thus, "/---/" is described. Since file names are created using row numbers in the parameter table 1, the file names of divided discrete files are known as FILE2. As a result, "/FILE2/" is obtained.

The description
HREF=#3:BBB FILE2.html
in FILE2 is changed to
HREF=#3:BBB.
In this case, the description exists in FILE2, and the third row of the parameter table 1 as the link target is also in the same file. Therefore, there is no need of a file name for the link target. Furthermore,
HREF=#4:BBB
in FILE2 is left unchanged since the link target is in the same file because there is no empty row between the row numbers "3" and "4".

Link targets can be changed in the aforementioned manner, as shown in Fig. 54 (B). Thus, any data can be linked in accordance with the original parameter table 1 (before an empty row is inserted).

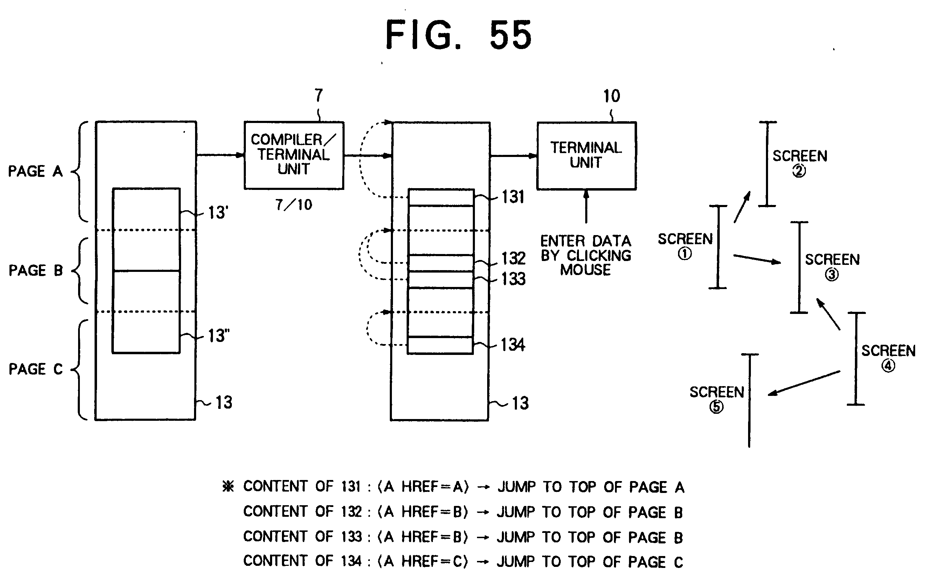

Aside from easy changeability of page layout, completed manuscript texts 13 may include large images. That is, when the user pastes large image data on the template 2, as shown in Fig. 55, the image data pasted by the user may not fit in the display screen. In such a case, jumping the screen to a portion immediately above or below the large image without scrolling would be convenient for the user. That is, the user who sees the screen of the manuscript text 13 could examine the data above or below that image.

The manuscript text composition system of this invention automatically embed (add) jump regions in an image (screen display program 8), as shown in Fig. 50, and when any of the jump regions is clicked, a jump takes place to the top part of a page above/below the image. The manuscript text 13 is not limited to those created by the means described with reference to Figs. 49 through 50, and Figs. 3 through 6, but may be those generated by the means that will be described later, referring to Figs. 11 through 16, and Figs. 21 through 29.

In the manuscript text composition system of this invention, when an image is included in the generated manuscript text 13, the compiler 7 or the terminal unit 10 sets jump regions at the upper and lower ends of the image. In the jump region at the upper end, an instruction to jump to the top of the proceding page in the upward direction of the screen is set. In the jump region at the lower end, an instruction to jump to the top of the succeeding page in the downward direction of the screen.

Assume that the generated manuscript text 13 is displayed as shown in Fig. 55. Large images 13' and 13'', are pasted in this manuscript text 13. As a result, when this manuscript text 13 is displayed, the large image 13' is located at the boundary between Page A and Page B, while the large image 13'' at the boundary between Page B and Page C. As a result, the large images 13' and 13'' are cut apart.

In order to jump the large images 13' and 13'' in such a case, jump regions 131 through 134 are set at the upper and lower ends of the large images 13' and 13'' according to this invention. In the jump region 131 at the upper end and the jump region 132 at the lower end, both of the image 13', an instruction to jump to the top (top address) of Page A that is the preceding page of the image 13', and an instruction to jump to the top of Page B that is the succeeding page of the image 13' are set, respectively. In the jump region 133 at the upper end and the jump region 134 at the lower end, both of the image 13'', an instruction to jump to the top of Page B that is the preceding page of the image 13'', and an instruction to jump to the top of Page C that is the succeeding page of the image 13'' are set, respectively.

More specifically, the contents of the jump regions 131, 132, 133 and 134 are
〈A HREF=A〉,
〈A HREF=B〉,
〈A HREF=B〉 and
〈A HREF=C〉, respectively.

〈A HREF=---〉 represents a jump destination, with the specific jump destination described in "---". The jump destination "---" in this case is described as a page name, that is, a file name corresponding to that page. Thus, 〈A HREF=A〉 is a jump instruction to the top (top of File A) of Page A.

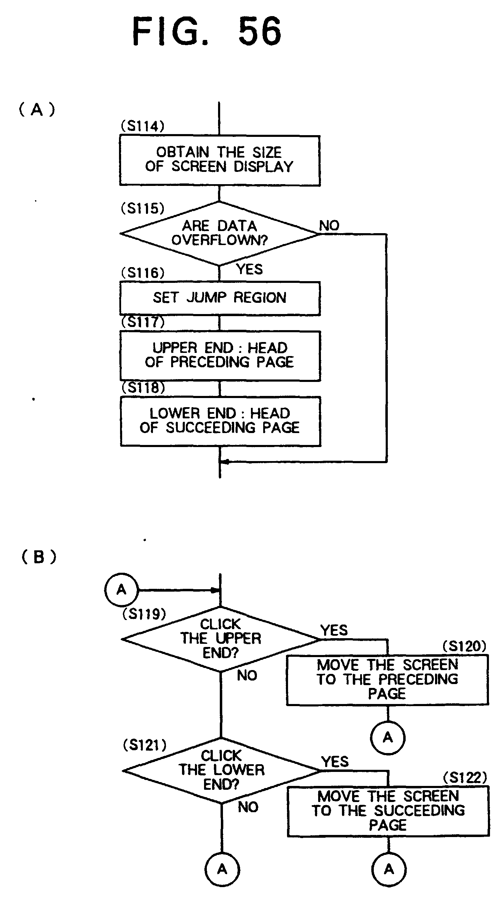

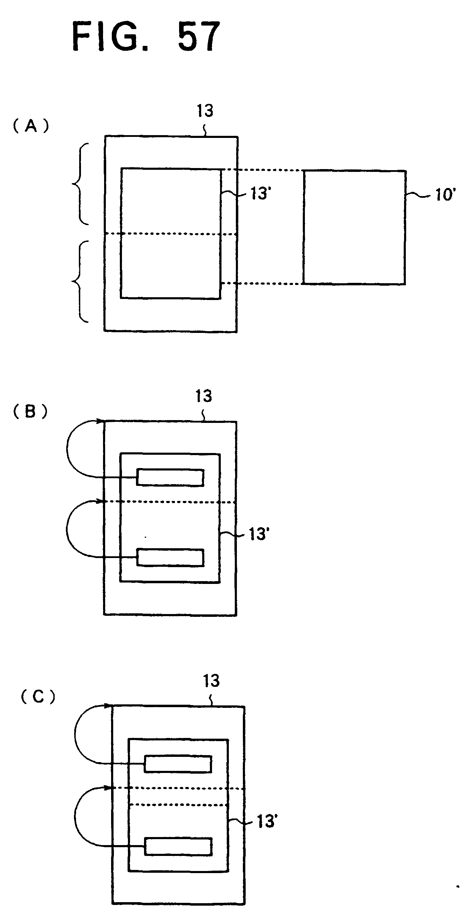

Fig. 56 (A) shows the flow of jump region embedding processing executed by the compiler 7 or the terminal unit 10.
Step (S114): At the time of the compiling of the template 2 or the creation of the manuscript text 13, as the image data 13' and 13'' are detected as pasted on the manuscript text 13, the size of screen display is obtained.
Step (S115): Whether the image does not fit into the screen is checked. Whether the image does not fit into the screen is determined by the comparison of the size of the image 13' and that of the display screen 10' of the terminal unit 10 as shown in Fig. 57(A). More specifically, if the vertical size of the image 13' is larger than the vertical size of the display screen 10', the image 13' is judged as not fitting into the screen.
Step (S116): When the image does not fitting into the screen, a jump region 131, etc. are set at the upper and lower ends of the image.
Step (S117): The leading address of the preceding page of the image is set to the upper-end jump region 131, etc.
Step (S118): The leading address of the preceding page of the image is set to the lower-end jump region 132, etc.

In Step (S115), if the image fits into the screen, Steps (S116) through (S118) are omitted.

Fig. 56 (B) shows the jump processing flow executed by the terminal unit 10.
Step (S119): Whether the upper-end jump region 131, etc. are clicked by the mouse is checked.
Step (S120): If clicked, the screen is moved to the preceding page specified by the upper-end jump region 131, etc. Then, Step (S119) and the subsequent steps are repeated.
Step (S121): If not clicked, whether the lower-end jump region 132, etc. are clicked is checked. If not clicked, Step (S119) and the subsequent steps are repeated.
Step (S122): If clicked, the screen is moved to the succeeding page specified by the lower-end jump region 132, etc. Then, Step (S119) and the subsequent steps are repeated.

In this way, as the user who sees the displayed manuscript text 13 clicks with the mouse the upper end of the image 13' displayed on the display of the terminal unit 10, Screen ① that has displayed the image 13' is moved to Screen ② displaying Page A that is the preceding page of the image 13', as shown in Fig. 55. Similarly, if the lower end of Screen ① is clicked, Screen ① is moved to Screen ③ displaying Page B. If the upper and lower ends of Screen ④ that has displayed the image 13'', Screen ④ is moved to Screen ③ displaying Page B and Screen ⑤ displaying Page C, respectively.

The upper-end and lower-end jump regions may be provided as shown in Figs. 57 (B) and (C). That is, a jump instruction to the preceding page of the image may be embedded in a portion included in the preceding page of the image, and a jump instruction to the succeeding page of the image in a portion included in the succeeding page of the image, as shown in Fig. 57 (B). A jump instruction to the preceding page of the image may be embedded in the first half of the image, and a jump instruction to the succeeding page of the image in the second half of the image, as shown in Fig. 57 (C). In each case, the portion in which a jump region is embedded may not be limited to the upper end and lower end of the image, as shown in Figs. 57 (B) and (C).

In this way, the manuscript text composition system in the fifth embodiment facilitates page break (page layout) in a manuscript text 13, making it possible to carry out special jumps in the screen of the manuscript text 13. As described with reference to Figs. 51 and 55, this manuscript text 13 is created by means described with reference to Figs. 49 and 50, and Figs. 3 through 6, and also created by means described with reference to Figs. 11 through 16, in which the first embodiment is described, and Figs. 21 through 29. Figs. 11 through 16 and Figs. 51 through 29 are referred to describe the manuscript text composition system of the fifth embodiment.

Consequently, the manuscript text 13 may not be limited to that obtained using the parameter table 1 having a simple description as shown in Fig. 3, but may be that obtained using the parameter table 1 including various types of cell descriptions, as shown in Fig. 11. The manuscript text 13 may be that obtained by processing using various replacement detection keys shown in Figs. 12 through 16. The manuscript text 13 may also be obtained by various types of version-control processing as shown in Figs. 21 through 26. The manuscript text 13 may be obtained using a plurality of templates 2 as shown in Fig.27. The manuscript text 13 may be obtained carrying out various conditional checks as shown in Figs. 28 and 29.

### (The Sixth Embodiment)

The manuscript text composition system of the sixth embodiment has, in template manuscripts, replacement detection keys for checking the data type and/or data range of parameters set in the parameter table, and the compiler thereof has the processing to check the data type and/or data range of parameters set in the parameter table based on the replacement detection keys in the template manuscripts and notify the check results, making it possible to effectively control the data on specific characters or character groups and/or specific images and to check the validity of data set in parameters when the compiler creates a screen display program.

The manuscript text composition system of the sixth embodiment has, in template manuscripts, replacement detection keys for changing the cell colors of the parameter table, and the compiler thereof has the processing to change the cell colors of the parameter table in accordance with an instruction to change the cell colors of the parameter table, making it possible to use them as auxiliary guides at the time of entry of parameters.

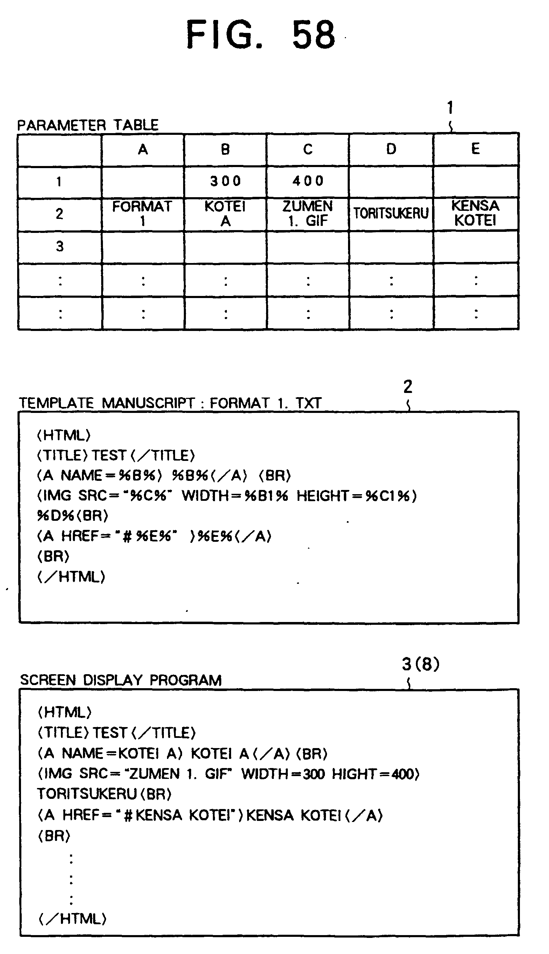

Fig. 58 is a diagram of assistance in explaining the operating principle of the sixth embodiment of this invention. In the figure, numeral 1 refers to a parameter table to which data on specific characters or character groups and/or specific images to be pasted are set, 2 to a template manuscript (or a template shown in Fig. 3) for the manuscript text written in HTML, and 3 to an HTML image display program (or a translated template content shown in Fig. 3) created by the compiler 7. It is assumed that the parameter table 1 is prepared with spreadsheet software.

In the following description, since Figs. 58 through 60 has a similar configuration to that shown in Figs. 3 through 5, major differences will be described briefly.

A template manuscript 2 is set as a file of "format1.txt", and parameters relating to the template manuscript are described in the first and second rows, for example, of the parameter table 1.

In this case,
(1) Data "Kotei A" is described in "Column B" of the second row in the parameter table 1, corresponding to the location where "%B%" is described in the third row of "format1.txt". Consequently, "%B%" in the third row is replaced with Data "Kotei A" in the image display program 3.
(2) Data "zumen1.gif" is described in "Column C" of the second row in the parameter table 1, Data "300" in "Column B" of the first row, and Data "400" in "Column C" of the first row, corresponding to the locations where "%C%", "%B1%" and "%C1%" are described in the forth row, respectively. Consequently, "%C%" in the fourth row is replaced with Data "zumen1.gif", "%B1%" with Data "300", and "%C%" with Data "400", respectively, in the image display program 2.

Where one cell (coordinates C2) in the parameter table 1 is specified by "C" only, as in "%C%" in the above description, the location of the cell is known beforehand. Where a cell is specified by coordinate values, such as "C1" in "%C1%", on the other hand, the row location of the cell is different from the row now being processed.

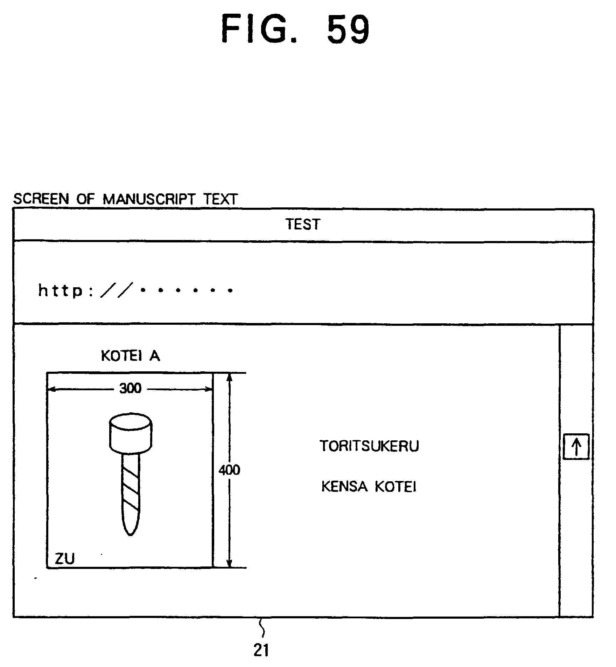

Fig. 59 is a diagram showing a manuscript text displayed in the terminal unit based on the image display program 3 shown in Fig. 58. In the figure, Title "TEST", and Anchor Name "Kotei A" are displayed, and if Image File "zumen1.gif" is a screw, for example, its image is displayed in a predetermined size; 300 pixels in width, and 400 pixel in height, and Characters "Toritsukeru" representing a work specification, and Link Target "Kensa Kotei" representing the subsequent processing are displayed.

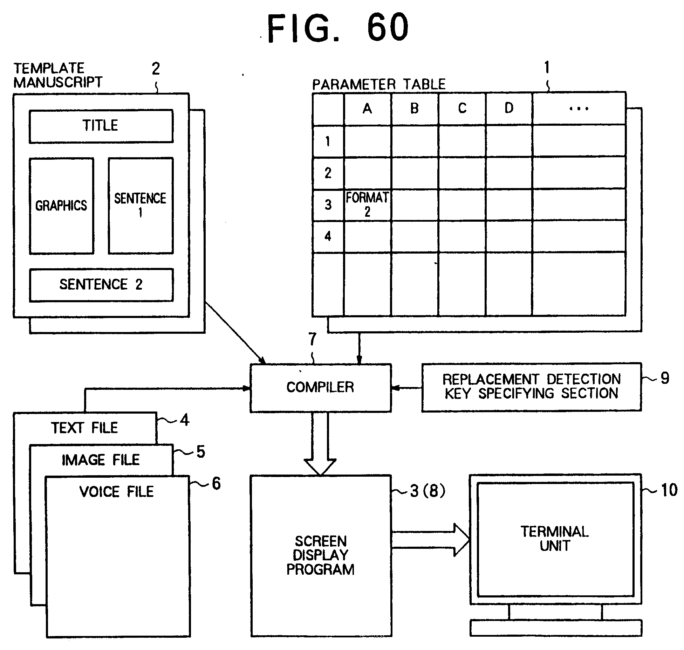

Fig. 60 is a diagram illustrating the system configuration of this invention. In the figure, numerals 1, 2 and 3 refer to like numerals used in Fig. 58. The parameter table 1 is of three dimensional, for example, and the template manuscript 2 has a plurality of templates. The text file 4, the image file 5 and the voice file 6 are provided independently, in which individual data specified by replacement detection keys are stored. The compiler 7 generates a screen display program 3 based on the contents of a specific template manuscript 2, the parameter table 1, a text file that is used as necessary, etc. The screen display program 3 is compiled by the compiler 7 to display in HTML, for example. The replacement detection key designating unit 9 is used by the operator at the time of startup to designate that predetermined marks, such as %, #, ---are used as replacement detection keys.

The concept of the template manuscript 2 has been described earlier, referring to Fig. 3. In practice, however, the template manuscript 2 is provided not in the form of conceptual representation, but in the form as shown by "format1.txt" in Fig. 58. Furthermore, the template manuscript 2 corresponds to "Format2", as in the case of Fig. 3, and parameters relating to "Format 2" are described in the third row of the parameter table 1. As in the case of Fig. 3, therefore, Column A in the parameter table 1 is retrieved, and it is found that the third row has a description of "Format 2", and that parameters relating to "Format 2" are described in the third row. Furthermore, as it is found that "Format 2" is the name of the required template manuscript, that template manuscript is read. As in the case of the first embodiment, a display corresponding to "Format 2" is displayed on the terminal unit 10 by the compiler 7.

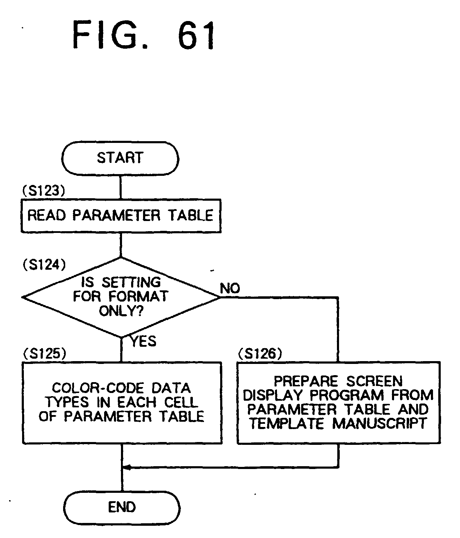

Fig. 61 shows the flow chart of the processing carried out by the compiler. In the following, operations will be described following the flow.
Step (S123): The parameter table 1 is read.
Step (S124): Whether only the format column in Column A of the parameter table 1 is set is checked. If so, the processing then proceeds to Step (S125), and if not, proceeds to Step (S126).
Step (S125): Based on the template manuscript 2 specified in the format column, the parameter table coloring processing to color-code the data types of cells is carried out. The processing is terminated as such. Details of the parameter table coloring processing will be described later.
Step (S126): Based on the template manuscript 2 specified in the format column and the data in the cells of the parameter table 1, the screen display program preparation processing to prepare the screen display program 3 is carried out. The processing is terminated as such. Details of the screen display program preparation processing will be described later.

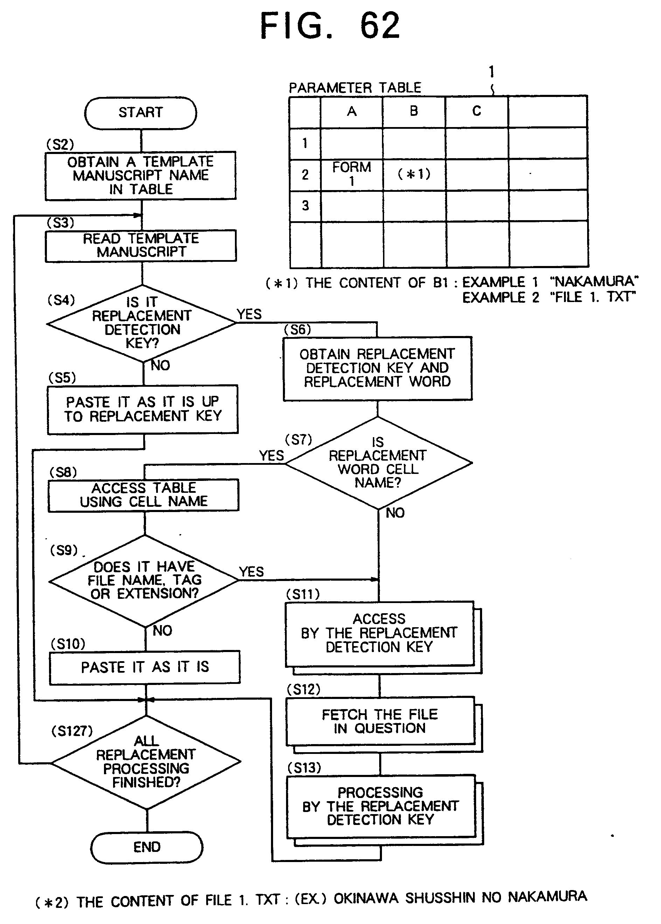

Fig. 62 shows the flow chart of an example of the screen display program preparation processing. In the following, the processing will be described following the flow. Numeral 1 refers to a parameter table. Since the processing shown in Fig. 62 is almost the same as that shown in Fig. 6, like symbols are attached to like processing steps to simplify description.

For the sake of simplicity, assume that as in the case of Fig. 6,
(1) the template manuscript 2 is a specific template manuscript Form 1, which has a description of
   "Konnichiwa%B2%san, ogenki desuka",
   where "%---%" is assumed to be a replacement detection key, and
(2) parameters for Form 1 are described in the second row of the parameter table 1, and that "Nakamura" is described as (Example 1) and "file1.txt" is described as (Example 2) in the cell having coordinates (B2).

Now, (Example 1) will be described, to begin with.

As in the case of Fig. 6, assume that the second row of the parameter table 1 shown in Fig. 62 is processed. The second row is read, the template manuscript name "Form 1" in the cell (coordinates of A2) is fetched (Step (S2)), and Steps (S3) through (S5) are executed, as in the case of Fig. 6. As a result, up to "Konnichiwa" is pasted as it is.

The processing proceeds to Step (S127), where whether all the replacement processing has been terminated is judged. In practice, Step (S127) is executed similarly in the processing in Fig. 6. Since all the replacement processing has not been finished, the processing is returned to Step (S3), where "%B2%" is read. In Step (S4), the replacement detection key "%---%" is detected, and then the processing proceeds to Step (S6). After that, Steps (S6) through (S10) are executed, as in the case of Fig. 6, and as a result, the processing up to "Konnichiwa Nakamura" is completed.

The processing then proceeds to Step (S127), where it is found that all the replacement processing has not been finished. Thus, the processing is returned to Step (S3). After that, up to "sa", "n", ",", "gen", "ki", "de, "su", and "ka" are processed in Steps (S4) to (S5), and then the processing proceeds to Step (S127), where it is judged that all the replacement processing has been finished, and the processing is terminated. Thus, a screen display program 3 of
"Konnichiwa Nakamurasan, genki desuka"
is prepared.

Next, (Example 2) will be described.

As in the case of (Example 1) above, the processing up to Step (S8) is executed. That is, up to "Konnichiwa" is pasted as it is in Steps (S1) through (S5), as with (Example 1) above, since up to "Konnichiwa" is not a replacement detection key. The processing then goes through Step (S127) and is returned to Step (S3), where "%B2%" is read. The processing proceeds to Step (S6), and Steps (S6) through (S8) are executed, as with (Example 1) above.

After that, the processing up to Step (S13) is executed, as in the case of (Example 2) in Fig. 6. That is, it is judged that the content of Cell (B2) is "file1.txt" and not a file name, etc. (Step (S9)), the processing corresponding to the replacement detection key "%---%" is executed (Step (S11)), the file "file1" specified by the replacement word "file1.txt" is fetched (Step (S12)), and the processing to paste "Okinawa shusshin no Nakamura" described in the text of the file "file1" is carried out (Step (S13)). As a result,
"Konnichiwa Okinawa shusshin no Nakamura"
is obtained.

The processing then proceeds to Step (S127), and is returned to Step (S3) because the judgment processing finds that all the replacement processing has not finished. In Steps (S4) to (S5), up to "sa", "n", ",", "gen", "ki", "de", "su" and "ka" are processed. After that, the processing proceeds to Step (S127), where it is found that all the replacement processing has been finished, and the processing is terminated. Thus, a screen display program 3 of
"Konnichiwa Okinawa shusshin no Nakamura san, genki desuka"
is prepared.

Consequently, various screen display programs can be created from one template, as in the case of Fig. 6. Although this embodiment basically uses the contents of cells, the mixed use of "file1.txt" described directly in the description of the template manuscript 2 is also allowed, as in the case of Fig. 6.

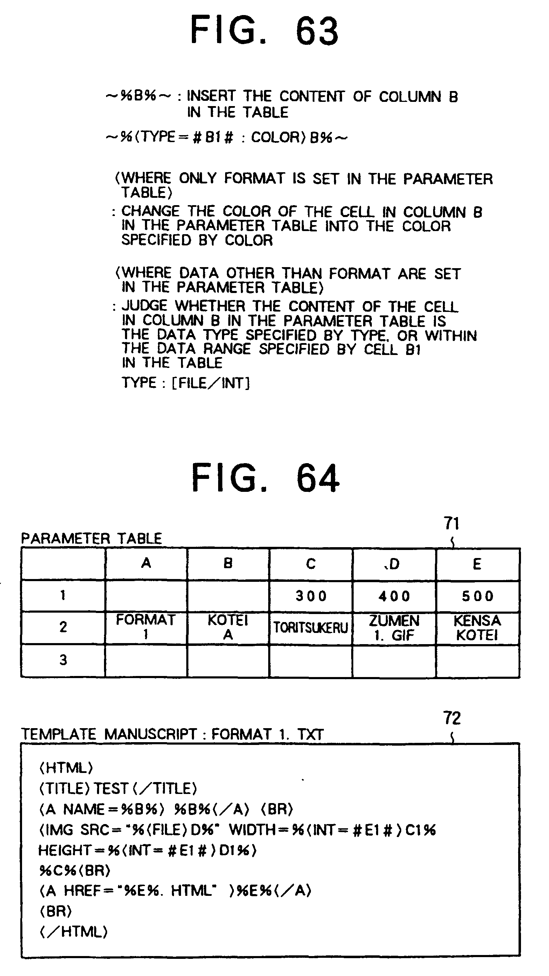

Fig. 63 is a diagram illustrating an example of the replacement instruction for the replacement detection keys, and the processing instruction using the replacement detection keys. In the figure, "%---%" is the replacement instruction, and "%〈---〉---%" is the processing instruction.
(1) "∼%B%∼": The content of Column B of the parameter table is inserted at the time of replacement.
(2) "∼%〈*type*=#B1#:*color*〉B%∼": When only the format column in Column A of the parameter table is set, the color of the contents of cells in Column A of the parameter table is changed into a color specified by *color*.

When a column other than the format column in Column A of the parameter table is set, whether the contents of cells in Column B of the parameter table are the data type specified by *type*, or within the data range specified by the cell B1 of the table is judged.

Data types specified by *type* include "file" representing files, and "int" representing integers, for example.

Fig. 64 shows the parameter table and the template manuscript in an embodiment where the data types and data ranges of the parameter table are identified. In the figure, numeral 71 refers to a parameter table, 72 to a template manuscript of Format 1 set in Column A of the second row of the parameter table 71.

The fourth row of the template manuscript 72 has a description of the processing instruction using the replacement detection keys, where an instruction to check to see whether %D% for indicating the source of an image file, that is, the data in Cell D2 of the parameter table 71 is a file; and whether %C1% and %D1% indicating the width of height of the image file, that is, Cell C1 and Cell D1 of the parameter table 71 are smaller than %E% indicating the data range, that is, Cell E1 of the parameter table 71 is set.

In this case, Cell D2 of the parameter table 71 is a file of "zumen1.gif", the fact that Cell C1 "300" and Cell D1 "400" of the parameter table 71 indicating the width and height of the image file are smaller than Cell E1 "500" indicating the data range suggests that a parameter table is properly prepared.

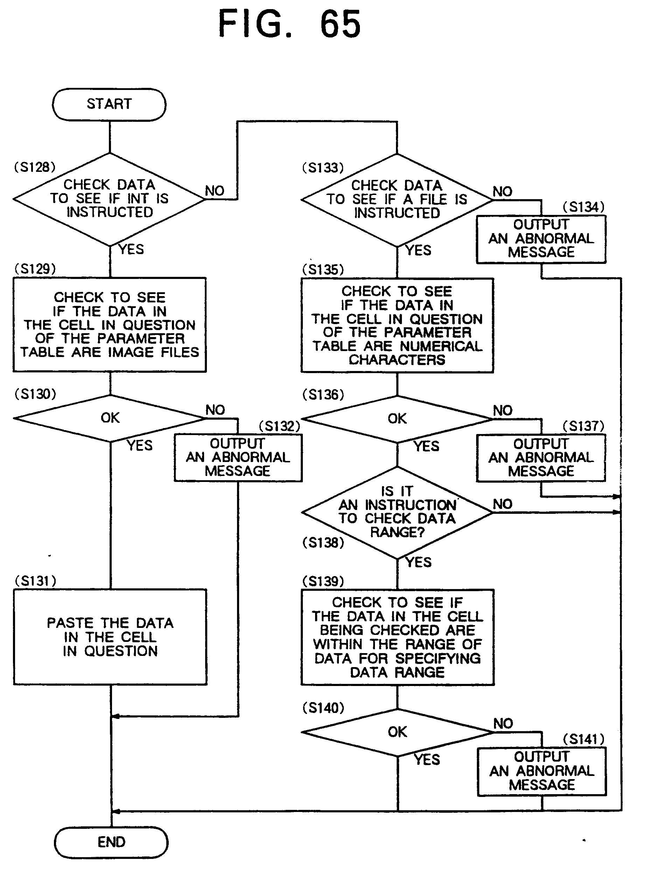

Fig. 65 is the flow chart of the processing to check the data types and data ranges of the parameter table. In the following, operation will be described. Note that this processing is one of the replacement-detection-key-wise processing in Step (S13) in Fig. 62.
Step (S128): Whether the instruction to check data type is a file is checked. If it is a file, the processing proceeds to Step (S129), and if not, the processing proceeds to Step (S133).
Step (S129): If the data in the cell to be checked in the parameter table is a file is checked.
Step (S130): If Step (S129) is normal, the processing proceeds to Step (S131), and if not, proceeds to Step (S132).
Step (S131): The data in the cell being checked is pasted on the screen display program, and the processing is terminated.
Step (S132): An abnormal message is output to the terminal unit, etc., and the processing is terminated. Upon receiving the abnormal message, the operator modifies the data in the parameter table.
Step (S133): Whether the instruction to check data type is an integer is judged. If it is an integer, the processing proceeds to Step (S135), and if not, proceeds to Step (S134).
Step (S134): An abnormal message is output to the terminal unit, etc., and the processing is terminated. Upon receiving the abnormal message, the operator modifies the data in the parameter table.
Step (S135): Whether the data in the cell in question in the parameter table is an integer is checked.
Step (S136): If Step (S135) is normal, the processing proceeds to Step (S138), and if not, proceeds to Step (S137).
Step (S137): An abnormal message is output to the terminal unit, etc., and the entire processing is terminated. Upon receiving the abnormal message, the operator modifies the data in the parameter table.
Step (S138): Whether an instruction to check the data range is set is judged. If it is set, the processing proceeds to Step (S139), and if not, the processing is terminated.
Step (S139): Whether the data in the cell in question in the parameter table is within the data range is checked.
Step (S140): If Step (S139) is normal, the processing is terminated, and if not, the processing proceeds to Step (S141).
Step (S141): An abnormal message is output to the terminal unit, etc., and the entire processing is terminated. Upon receiving the abnormal message, the operator modifies the data in the parameter table.

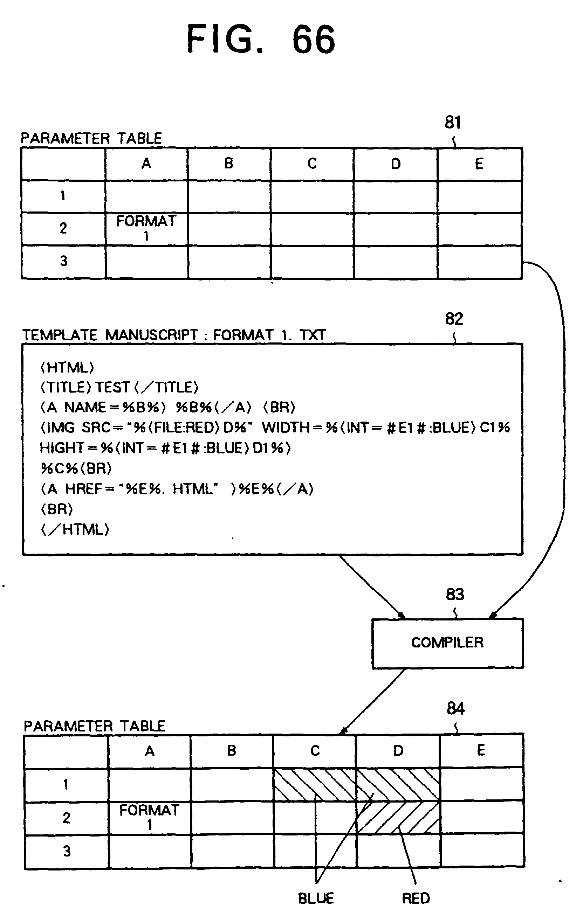

Fig. 66 shows the parameter table and the template manuscript in an embodiment where the color of cells in the parameter table is changed. In the figure, numeral 81 refers to a parameter table where Format 1 is set in Column A of the second row. Numeral 82 refers to a template manuscript of "format1.txt" set in the parameter table 81.

Numeral 83 refers to a compiler that sets the color of cells in the parameter table based on the parameter table 81 and the template manuscript 82. Numeral 84 refers to the parameter table in which the color of cells has been set by the compiler.

Next, the outline of the parameter-table color-coding processing will be described.
(1) The compiler reads the parameter table to judge if the table is used for setting formats only in Steps (S123) to (S124) of Fig. 61. Since the parameter table 81 in this example is used for setting formats only, "Y" is selected in Step (S124), and the processing proceeds to Step (S125) where the processing to color code the parameter table is carried out.
(2) The parameter table color-coding processing reads the template manuscript 82 of the format 1 set in the parameter table 81, and detects the processing instruction using the replacement detection keys described in the third and fourth rows. In this example, "%〈---Red〉D%", "%〈---Blue〉C1%" and "%〈---Blue〉D1%" are detected.
(3) Based on the detected processing instruction, the color of Cell D2 of the parameter table 81 is changed to red, and that of Cells C1 and D1 to blue. The parameter table 81 in which the colors of cells are set in this way is shown as the parameter table 84.

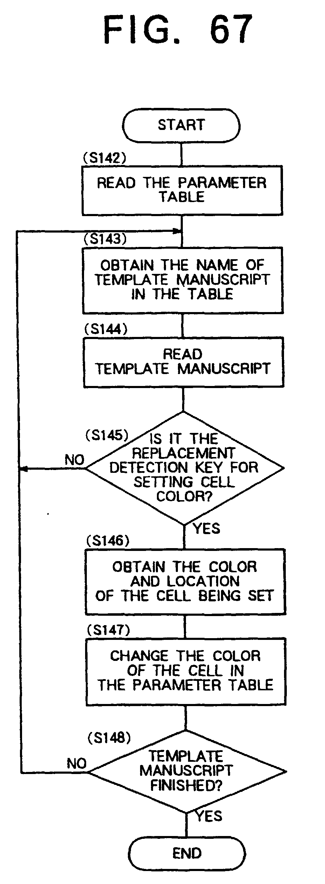

Fig. 67 shows the processing flow chart of an example of the parameter-table color-coding processing. In the following, operation will be described in accordance with this flow.
Step (S142): The parameter table is read.
Step (S143): The name of the template manuscript set in the parameter table is obtained.
Step (S144): The template manuscript is read based on the name of the template manuscript obtained in Step (S143).
Step (S145): Whether the replacement detection keys for setting cell colors are detected is judged. If the keys are detected, the processing proceeds to Step (146), and if not, the processing is returned to Step (S143) to obtain the next name of the template manuscript.
Step (S146): Cell colors and cell locations to be set are obtained.
Step (S147): Cell colors in the parameter table are changed based on the cell colors and cell locations obtained in Step (S146).
Step (S148): Whether the template manuscript is finished is judged. If the template manuscript is finished, the processing is terminated. If not, the processing is returned to Step (S143) to obtain the next name of the template manuscript.

### (The Seventh Embodiment)

The manuscript text composition system of the fourth embodiment is concerned with the hypertext generating method for the Internet in which an image being edited is displayed on a display unit; the coordinate point of objects heing linked in the image is entered; the optimum layout of the registered link objects is selected; link objects to which predetermined symbols or numerals are attached, and images to which link objects and object connecting lines are pasted are created; link targets corresponding to the link objects are entered; and a map file of the images created above is generated, thereby substantially reducing the man-hours required for creating or modifying hypertexts.

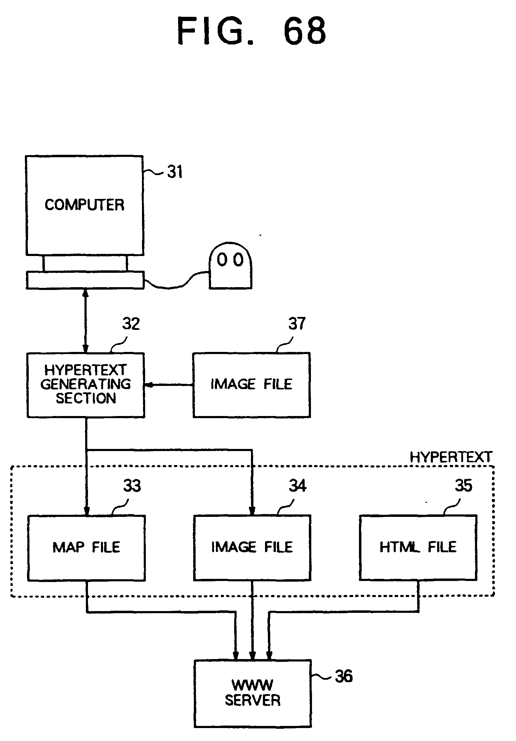

Fig. 68 is a diagram illustrating an example of configuration of the seventh embodiment In the figure, numeral 36 refers to a WWW server. Information provided by the WWW server 36 is a hypertext manuscript, which is registered in the WWW server 36, comprising an HTML file 35 in which characters and formats are described in HTML, an image file 34 storing images and a map file 33 showing link objects in the images.

Numeral 31 refers to a computer, which executes a hypertext generating unit 32 that is a program for displaying and editing images and preparing map files, displays on the display unit thereof a specified image file 37, enters a given coordinate point of an object to be linked in the image, selects the optimum layout of the registered link objects, creates an image file 34 of images containing link objects and object connecting lines, enters link targets corresponding to the link objects, and creates a map file 33 of the images created above.

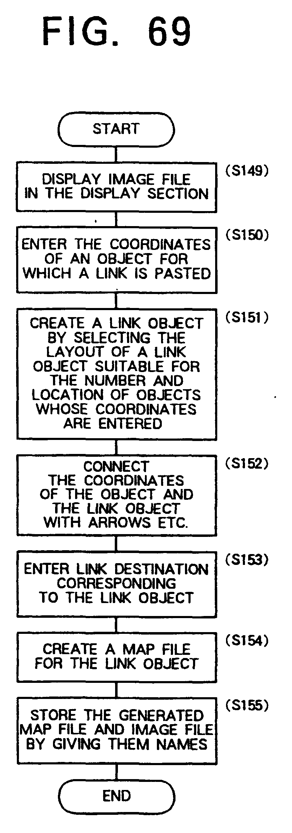

Fig. 69 is the processing flow chart of an example of the hypertext generating unit 35. In the following, operation will be described in accordance with this flow. This example shows operations after the computer 31 has activated the hypertext generating unit 32.
Step (S149): The image stored in the image file 37 specified by the user is displayed on the display unit of the computer 31.
Step (S150): The user enters a given coordinate point of an object being linked that is included in the displayed image.

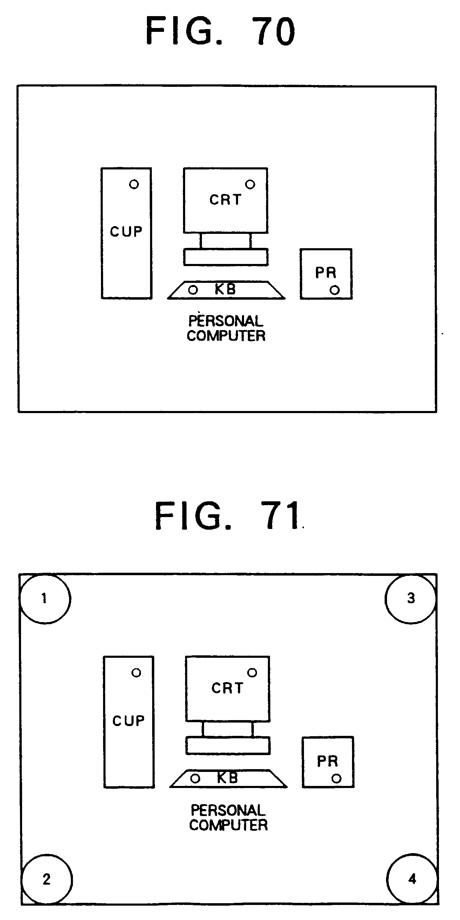

Fig. 70 is a display screen (1) displayed by the hypertext generating unit at this time. In this example, a personal computer system comprising a CPU, CRT, KB (keyboard) and PR (printer) is shown. Small circles in the frames of the CPU, CRT, KB and PR denote the four coordinate points entered by the user. Although coordinate points are expressed by small circles in this example, those points or coordinate points that are easily known to the user may not be shown in the figure.
Step (S151): The user selects a link object layout suitable for the number and location of objects whose coordinates are entered from a plurality of link object layouts displayed on the display unit.

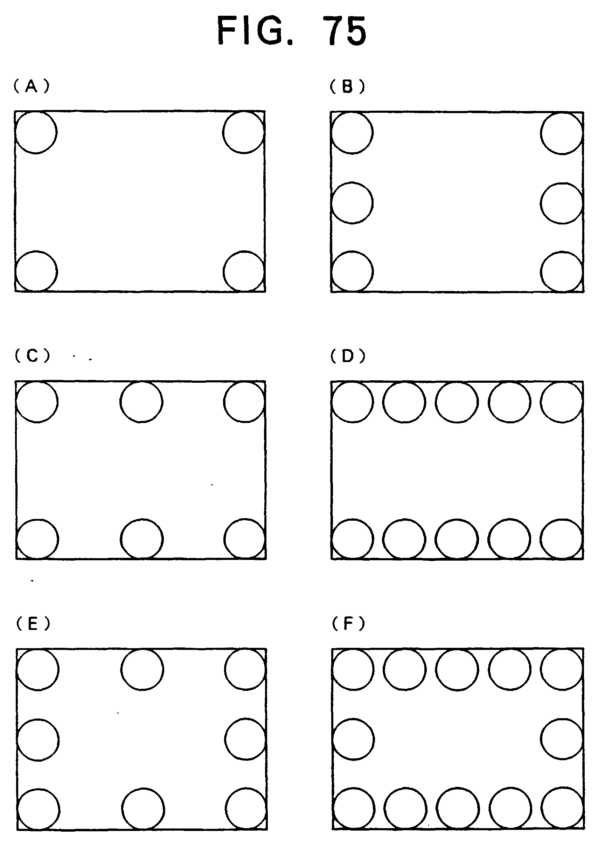

Fig. 75 shows link object layouts displayed on the display unit. In this example, layouts of four, six, eight, ten and twelve link objects are shown. When the user selects the layout of Fig. 75 (A) since the number of objects needed to be linked by the user is four, circular link objects numbered from 1 to 4 are provided at the four corners of the image.

Fig. 71 shows a display screen (2) displayed by the display unit 32 at this time.

Although link objects are shown by circles in this example, the shapes of link objects may be selected from among circles, quadrangles, triangles, polygons, etc. immediately after the hypertext generating unit 32 has been activated, and the colors thereof may be selected from among 16.77 million colors, with the color shade selected from among fill, translucent and clear.
Step (S152): Linked objects corresponding to the coordinate points entered in Step (S150) are connected with connecting lines. Details of this processing will be described later.

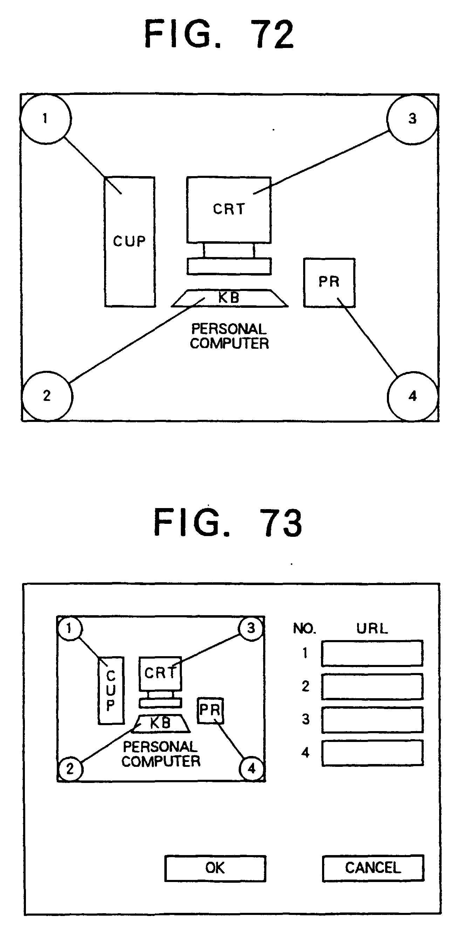

Fig. 72 shows a display screen (3) displayed by the hypertext generating unit 32 at this time. In this example, the coordinate point of the CPU and the link object 1, the coordinate point of the KB and the link object 2, the coordinate point of the CRT and the link object 3, and the coordinate point of the PR and the link object 4 are connected, respectively.
Step (S153): The user enters the URL of the link target corresponding to the link object.

Fig. 73 shows a display screen (4) displayed by the hypertext generating unit 32 at this time. On the left side of the screen displayed is a reduced display screen of Step (S152), and a form into which URLs are entered corresponding to the numbers attached to the link objects is displayed on the right side of the screen. The user enters their respective URLs.
Step (S154): A map file of the link objects generated in Step (S152) is created.

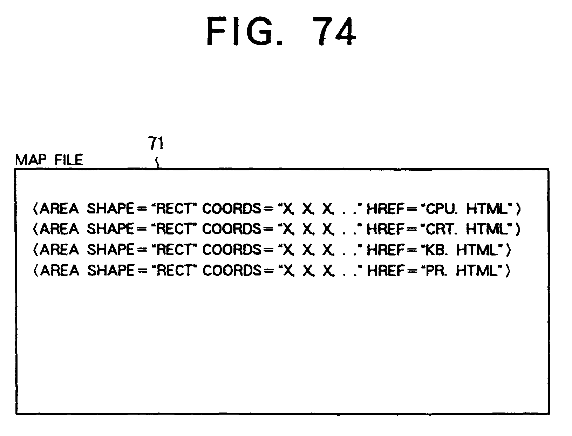

Fig. 74 shows an example of map file created by the hypertext generating unit 32. In the figure, numeral 71 refers to a map file. In this example, the CPU.html of the HTML file is linked to the link object 1, the CRT.html of the HTML file to the link object 2, the KB.html of the HTML file to the link object 3, and the PR.html of the HTML file to the link object 4, respectively.
Step (S155): The generated map file and image are stored after names are given to them. The processing is then terminated.

After the termination of the processing, the user registers the generated map file 33, the image file 34, and the HTML file that use them are registered at predetermined locations of the WWW server 36.

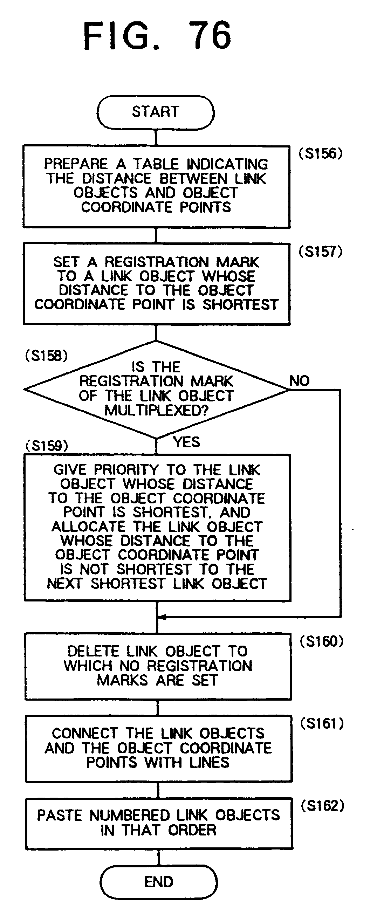

Fig. 76 is the processing flow chart of an example of the processing in Step (S152) shown in Fig. 69, in which lines connecting objects and link objects are pasted. In the following, the processing will be described in accordance with this flow.

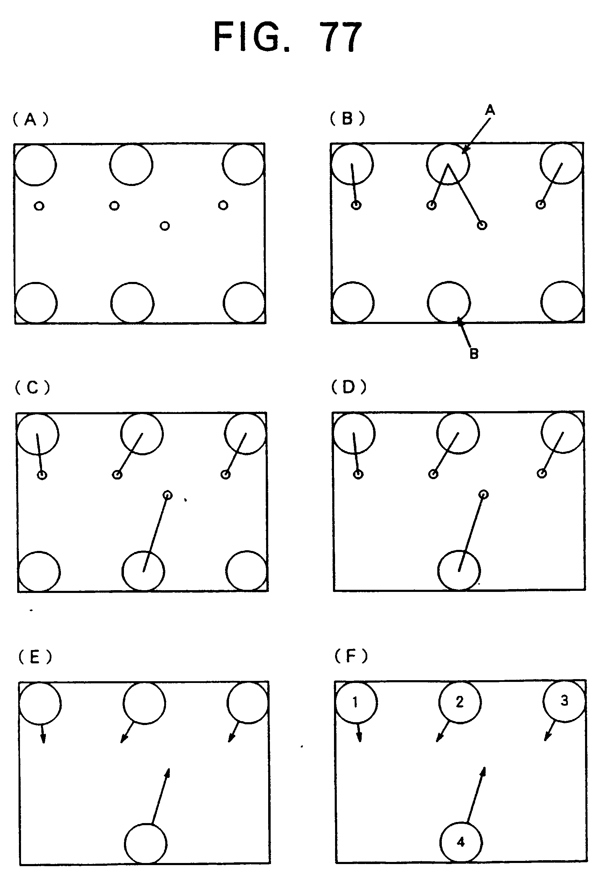

Fig. 77 is a display screen displayed on the display unit showing the processing to paste the lines connecting the objects and link objects.

In this example, four coordinates requiring links in the image are entered in Steps (S150) and (S151), and the layout of the link objects is such that 6 link objects shown in Fig. 75 (C) are selected. Fig. 77 (A) shows a display screen on the display unit at this time.
Step (S156): A distance table indicating the distances between six link objects and the objects is prepared. The shortest lines connecting the coordinate points between the link objects and the objects are shown in Fig. 77 (B).
Step (S157) Registration marks are set for the link objects having the shortest lines between the link objects and the objects.

In this example, two registration marks are attached to the link objects shown by an arrow A in Fig. 77 (B).
Step (S158): Whether multiple registration marks of the link objects are set is judged. If multiple marks are set, the processing proceeds to Step (S159). If not, the processing proceeds to Step (S160).

Since there are two registration marks on the link objects shown by an arrow A in Fig. 77 (B), the processing proceeds to Step (S159).
Step (S159): Priority is given to the link object having the shortest coordinate point between the link object and the object, and those having coordinate points that are not shortest are allocated to the link objects having the second shortest distance and for which no registration marks are set.

In this example, the coordinate point having a not-shortest line connecting the link object shown by an arrow A in Fig. 77 (B)is connected to the link object shown by an arrow B in Fig. 77 (B), and a registration mark is set to it. The display screen on the display unit at this time is shown in Fig. 77 (C).
Step (S160): The link objects for which no registration marks are set are removed. The display screen on the display unit at this time is shown in Fig. 77 (D).
Step (S161): The coordinate points of the link objects and the objects are connected with lines. The display screen on the display unit at this time is shown in Fig. 77 (E).
Step (S162): The numbered link objects are pasted again. The display screen on the display unit at this time is shown in Fig. 77 (F). Thus, the processing is terminated.

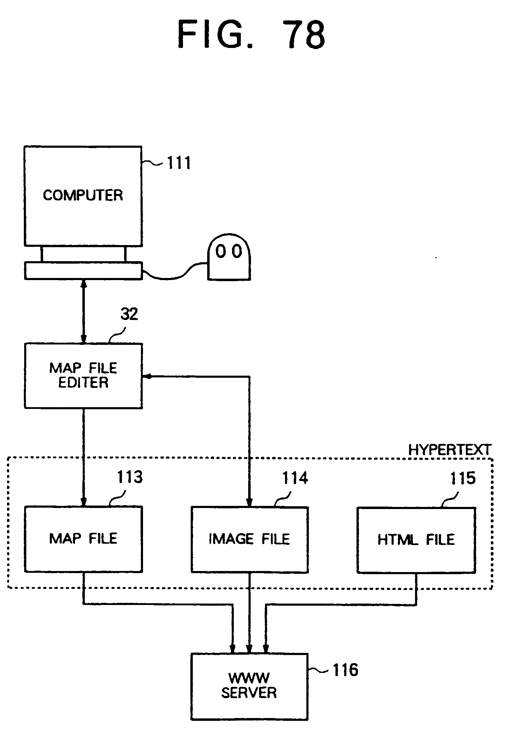

For comparison, the conventional configuration is shown in Fig. 78, which shows the case where a display screen is moved to a location corresponding to a specific portion by specifying a specific portion in an image; for example, a screen showing the map of Japan in which the boundaries of prefectures are described is moved to the detailed map of Tokyo by specifying the portion of Tokyo in the map of Japan. To achieve the movement of display screens, an object in an image, the periphery of Tokyo is edited into a map file and put into the WWW server, together with the image.

In the figure, numeral 116 refers to a WWW server. Information is provided by the WWW server 116 by registering in the WWW server 116 a hypertext manuscript comprising an HTML file 115 in which characters and formats are described in HTML, an image file 114 in which image files are stored, and a map file 113 showing linked objects in the image files.

Numeral 111 refers to a computer, which executes a program for displaying and editing image files, and executes a map file editor 112 as a program for preparing map files, displays specified image files 114, and prepares map files 113 by tracing the outer periphery of an object needed to be linked in the image.

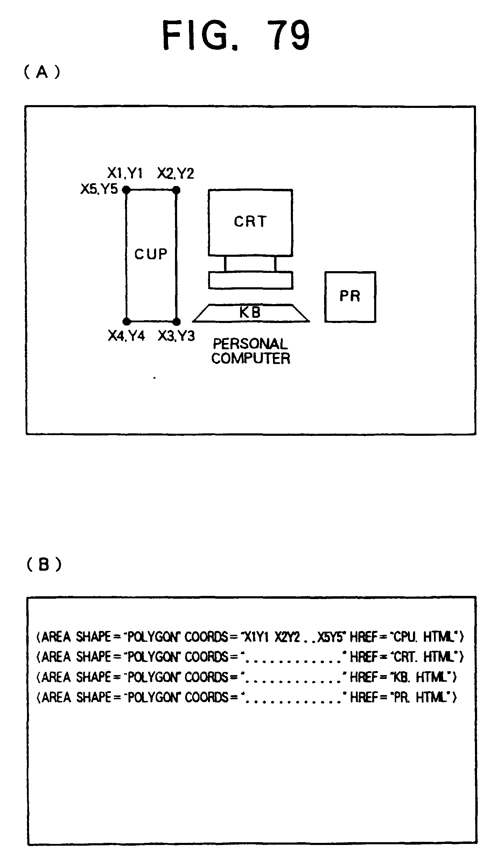

Fig. 79 shows an example of map file prepared by the map file editor. Fig. 79 (A) is a diagram in which an image file 114 specified by the user is displayed by the map file editor 112 on the display unit of the computer 111. In this example, the coordinate points (X1, Y1, X2, Y2, X3, Y3, X4, Y4, X5, Y5) of the CPU that is an object being linked are input by tracing the four corners of the CPU.

Fig. 79 (B) is a map file prepared after the coordinate points of the CRT, KB, PR objects have been input, as in the case of the CPU object above.

With the prior art, it was necessary to trace the outer periphery of objects in an image, as described earlier. Much time and labor were needed to provide links to connect objects in many images, or to frequently change image files, as in a product guide.

### INDUSTRIAL APPLICABILITY

As described above, this invention provides a manuscript text composition system in which when parameters corresponding to replacement detection keys are of a first type, the specific processing corresponding to parameters of a second type can be automatically replaced by replacing the first-type parameters with the first and second types of parameters. Thus, even when there exist no character data being pasted corresponding to image data, a brief explanation can be automatically generated and added in the vicinity of the image in a generated manuscript to provide the user with summary information on the image data.

In the manuscript text composition system according to this invention, when there are no data being pasted corresponding to a predetermined replacement detection key, the insertion of the data being pasted can be automatically omitted by omitting the pasting of the data being pasted. Thus, in a manuscript text in which a notice added to image data is pasted, the addition of the notice in the vicinity of the image can be omitted.

In the manuscript text composition system according to this invention, when a specific image being pasted is updated in time series, a desired image can be easily selected from among images that are being updated, and a desired revised drawing selected and replaced from among a plurality of revised drawings can be identified on a display screen. In the manuscript text composition system according to this invention, furthermore, only groups of revised information in a specified directory can be retrieved at high speed by preparing a list of revised information and pasting in an image the link information that links only the revised information based on the list of the revised information. In the manuscript text composition system according to this invention, the content of revision can be easily grasped by easily displaying the difference between the old- and new-version graphics, together with the old- and new-version graphics. This invention provides a manuscript text composition system which implements the reduction of duplicated image files with link structures, thereby reducing data reading and communication time.

In the manuscript text composition system according to this invention, moreover, feedback information can be embedded in a display screen and displayed integrally with the original information presented by pasting the parameters corresponding to specific characters or character groups and/or specific images regarding the information recovered by a server on a parameter table in an integral and interlinked manner, so that the situation of information can be easily grasped. When the manuscript text composition system according to this invention is applied to preparing a work procedure book, for example, any quality troubles occurring in processes can be monitored at all times, and the countermeasures can be worked out.

The manuscript text composition system of this invention can easily prepare a parameter table used for translating a template by easily merging CSV format data, as used in spreadsheet software, in preparing the parameter table. This enables HTML for WWW browsers handling a large amount of data to be easily prepared while making effective use of resources. By incorporating the concept of continuation lines in table data, repeated description in which only part of data are replaced is easily accomplished. This can be easily applied to itemization, etc. in preparing HTML texts.

In the manuscript text composition system of this invention, furthermore, when an empty row is inserted in a parameter table, discrete files corresponding to each page can be automatically created with the empty row as the boundary, and the data in mutually different discrete files can be automatically linked in accordance with the parameter table by creating a screen display program comprising mutually different discrete files with the empty row as the boundary and linking the data in the mutually different discrete files in accordance with the parameter table. This allows the user to easily prepare a page layout of the manuscript text and properly maintain data links.

In the manuscript text composition system of this invention, when images are included in a manuscript text, clicking the mouse causes a jump to that image in a direction different from a normal scroll or jump by clicking the mouse without scrolling the image by setting an instruction to jump to the top of the preceding page in an upper-end jump region of the image, and setting an instruction to jump to the top of the succeeding page in a lower-end jump region of the image.

In a method for creating hypertexts for the Internet using the manuscript text composition system according to this invention, the man-hours required for creating or modifying a hypertext can be substantially reduced by entering the coordinate point of an object being linked in an image, selecting the optimum layout from among registered layouts of link objects, creating link objects to which predetermined symbols or numbers are attached and images on which link objects and object connections are pasted, entering link targets corresponding to the link objects, and creating a map file of the images created above.

In the manuscript text composition system according to this invention, data comprising specific characters or character groups and/or specific images can be effectively controlled, and the validity of data set as parameters can be checked in creating a screen display program by providing replacement detection keys for identifying the data types and/or data range of parameters set in a parameter table, and identifying the data types and/or data range of the parameters set in the parameter table based on the replacement detection keys. In the manuscript text composition system of this invention, the colors of cells in a parameter table can be changed in accordance with instructions to change the colors of cells in the parameter table set in a template manuscript to use as an auxiliary guide for entering parameters by providing replacement detection keys for changing the colors of cells in the parameter table.

The manuscript text composition system of this invention can be implemented using programs for operating the computer, as described above, and these programs can be stored in various program storage media suitable for storing them.

## Claims

1. A manuscript text composition system comprising
templates which instruct, with replacement detection keys, to replace part of texts with specific characters or character groups, or replace part or all of images with specific images for any one or all of texts and images,
files storing said specific characters or character groups and specific images designated by said replacement detection keys,
a compiler preparing a screen display program using one of said templates and said specific characters or character groups and/or specific images stored in said files, and
a terminal unit creating a manuscript text on which said specific characters or character groups and/or specific images are pasted corresponding to one of said templates in accordance with said screen display program,
characterized in that
a parameter table designating parameters corresponding to said specific characters or character groups and/or specific images in the form of a table having two or more dimensional coordinates is further provided, and
when parameters designated in said parameter table are parameters of a predetermined first type, said compiler replaces said first-type parameters in said parameter table with said first-type parameters and a second type parameters, and said terminal unit creates a manuscript text by pasting said specific characters or character groups and/or specific images corresponding to said first-type and second-type parameters replaced in said parameter table on one of said templates.

2. A manuscript text composition system as set forth in Claim 1 wherein
said files store said specific characters or character groups and/or specific images designated by said replacement detection keys as independent discrete files, and have file directories for storing the file names of said discrete files stored by said files, with extensions indicating the file types thereof,
parameters in said parameter table comprise the file names and extensions of said discrete files, said first-type and second-type parameters being distinguished from each other by said extensions, and
said compiler extracts second-type parameters for designating discrete files having the same file names as said discrete files designated in said parameter table and extensions different from said discrete files by retrieving said file directories using file names of said discrete files that are said first-type parameters in said parameter table, and replaces said first-type parameters in said parameter table with said first-type and second-type parameters.

3. A manuscript text composition system as set forth in Claim 2 wherein when said compiler cannot extract said second-type parameters as the result of search of said file directories,
said compiler generates second-type parameters by adding extensions different from said discrete files that are said first-type parameters to the file names of said discrete files,
replaces said first-type parameters in said parameter table with said first-type and second-type parameters, and
generates files corresponding to said generated second-type parameters using said discrete files that are said first-type parameters in said parameter table.
first-type parameters are parameters for designating image files for storing images, and
said second-type parameters are parameters for designating text files for storing

4. A manuscript text composition system as set forth in Claim 3 wherein said characters or character groups.

5. A program storage medium for storing program for implementing a manuscript text composition system comprising
templates which instruct, with replacement detection keys, to replace part of texts with specific characters or character groups, or replace part or all of images with specific images for any one or all of texts and images,
files storing said specific characters or character groups and specific images designated by said replacement detection keys,
a compiler preparing a screen display program using one of said templates and said specific characters or character groups and/or specific images stored in said files, and
a terminal unit creating a manuscript text on which said specific characters or character groups and/or specific images are pasted corresponding to one of said templates in accordance with said screen display program,
characterized in that
said program has a parameter table for designating parameters corresponding to said specific characters or character groups and/or specific images in the form of a table having two or more dimensional coordinates,
cause said compiler to replace said first-type parameters in said parameter table with said first-type and second-type parameters when said parameters designated in said parameter table are predetermined first-type parameters, and
cause said terminal unit to create a manuscript text by pasting specific characters or character groups and/or specific images corresponding to said first-type and second-type parameters replaced in said parameter table on one of said templates.

6. A manuscript text composition system comprising
templates which instruct, with replacement detection keys, to replace part of texts with specific characters or character groups, or replace part or all of images with specific images for any one or all of texts and images,
files storing said specific characters or character groups and specific images designated by said replacement detection keys,
a compiler preparing a screen display program using one of said templates and said specific characters or character groups and/or specific images stored in said files, and
a terminal unit creating a manuscript text on which said specific characters or character groups and/or specific images are pasted corresponding to one of said templates in accordance with said screen display program,
characterized in that
a parameter table designating parameters corresponding to said specific characters or character groups and/or specific images in the form of a table having two or more dimensional coordinates is further provided,
said compiler prepares said screen display program so that when there exist no specific characters or character groups and/or specific images corresponding to predetermined replacement detection keys, the pasting of said specific characters or character groups and/or specific images corresponding to said predetermined replacement detection keys is omitted, and
said terminal unit prepares a manuscript text in which the pasting of said specific characters or character groups and/or specific images corresponding to said predetermined replacement detection keys on one of said templates is omitted.

7. A manuscript text composition system as set forth in Claim 6 wherein instructions are given with replacement detection keys of lower levers so that part of said specific characters or character groups and/or specific images corresponding to said parameters are replaced with specific characters or character groups, and part or all thereof are replaced with specific images, and
when said replacement detection keys of a lower order are said predetermined replacement detection keys and there exist no specific characters or character groups and/or specific images corresponding thereto, said compiler prepares said screen display program so that the pasting of said specific characters or character groups and/or specific images corresponding to said replacement detection keys of a lower order is omitted.

8. A manuscript text composition system as set forth in Claim 6 wherein said files store specific characters or character groups and/or specific images designated by said replacement detection keys as independent discrete files, and
said replacement detection keys designate discrete files by file names of said discrete files.

9. A program storage medium for storing program for implementing a manuscript text composition system comprising
templates which instruct, with replacement detection keys, to replace part of texts with specific characters or character groups, or replace part or all of images with specific images for any one or all of texts and images,
files storing said specific characters or character groups and specific images designated by said replacement detection keys,
a compiler preparing a screen display program using one of said templates and said specific characters or character groups and/or specific images stored in said files, and
a terminal unit creating a manuscript text on which said specific characters or character groups and/or specific images are pasted corresponding to one of said templates in accordance with said screen display program,
characterized in that
said program has a parameter table designating parameters corresponding to said specific characters or character groups and/or specific images in a the form of a table having two or more dimensional coordinates,
cause said compiler to prepare said screen display program so that when there exist no specific characters or character groups and/or specific images corresponding to predetermined replacement detection keys, the pasting of said specific characters or character groups and/or specific images corresponding to said predetermined replacement detection keys is omitted, and
cause said terminal unit to prepare a manuscript text in which the pasting of said specific characters or character groups and/or specific images corresponding to said predetermined replacement detection keys on one of said templates is omitted.

10. A manuscript text composition system comprising
templates which instruct, with replacement detection keys, to replace part of texts with specific characters or character groups, or replace part or all of images with specific images for any one or all of texts and images,
files storing said specific characters or character groups and specific images designated by said replacement detection keys,
a compiler preparing a screen display program using one of said templates and said specific characters or character groups and/or specific images stored in said files, and
a terminal unit creating a manuscript text on which said specific characters or character groups and/or specific images are pasted corresponding to one of said templates in accordance with said screen display program,
characterized in that
said files store said specific images and one or a plurality of images of different versions, and when images of a specific version are requested by an instruction given by a specific replacement detection key and there exist such images in said files, said display unit pastes images obtained by an instruction given by said key in place of said specific images.

11. A manuscript text composition system as set forth in Claim 10 wherein when said images of a specific version are requested and there exist such images in said files, the display colors of image display frames are changed accordingly or in accordance with the state of images.

12. A manuscript text composition system as set forth in Claim 10 or 11 wherein when said images of a special version is requested and there exist such images in said files, the sizes of image display frames are changed accordingly or in accordance with the state of images.

13. A manuscript text composition system comprising
templates which instruct, with replacement detection keys, to replace part of texts with specific characters or character groups, or replace part or all of images with specific images for any one or all of texts and images,
files storing said specific characters or character groups and specific images designated by said replacement detection keys,
a compiler preparing a screen display program using one of said templates and said specific characters or character groups and/or specific images stored in said files, and
a terminal unit creating a manuscript text on which said specific characters or character groups and/or specific images are pasted corresponding to one of said templates in accordance with said screen display program,
characterized in that
said files store, together with said specific images, images of different versions, and said display unit selectively replaces said specific images with said images of a specific version and pastes such images, and
link information that links only images of different versions in a designated directory is pasted in said images of different versions.

14. A manuscript text composition system comprising
templates which instruct, with replacement detection keys, to replace part of texts with specific characters or character groups, or replace part or all of images with specific images for any one or all of texts and images,
files storing said specific characters or character groups and specific images designated by said replacement detection keys,
a compiler preparing a screen display program using one of said templates and said specific characters or character groups and/or specific images stored in said files, and
a terminal unit creating a manuscript text on which said specific characters or character groups and/or specific images are pasted corresponding to one of said templates in accordance with said screen display program,
characterized in that
said files store, together with said specific images, images of different versions, and said display unit displays said specific images by changing the color of the difference from said images of different versions.

15. A manuscript text composition system as set forth in Claim 14 wherein arrangement is made so that said images of different versions from the version of said specific images or said difference can be selectively displayed, and link formation linking said specific images and/or said images of different versions is pasted on an image displaying said difference.

16. A manuscript text composition system comprising
templates which instruct, with replacement detection keys, to replace part of texts with specific characters or character groups, or replace part or all of images with specific images for any one or all of texts and images,
files storing said specific characters or character groups and specific images designated by said replacement detection keys,
a compiler preparing a screen display program using one of said templates and said specific characters or character groups and/or specific images stored in said files, and
a terminal unit creating a manuscript text on which said specific characters or character groups and/or specific images are pasted corresponding to one of said templates in accordance with said screen display program,
characterized in that
said files store, together with said specific images, images of different versions, and
said display unit displays said images of different versions from the version of said specific images, and when the graphical difference as the results of comparison between said specific images and said images of different versions is zero, specific images are displayed in place of images of different versions.

17. A manuscript text composition system as set forth in Claim 16 wherein when said graphical difference is zero, the colors of frames displaying images are changed.

18. A manuscript text composition system program storage medium for storing
templates which instruct, with replacement detection keys, to replace part of texts with specific characters or character groups, or replace part or all of images with specific images for any one or all of texts and images,
files storing said specific characters or character groups and specific images designated by said replacement detection keys, and
a screen display program prepared by said compiler using one of said templates and specific characters or character groups and/or specific images stored in said files;
so that a manuscript text on which specific characters or character groups and/or specific images are pasted corresponding to one of said templates in accordance with said screen display program is created,
characterized in that
said files store, together with said specific images, images of different versions, and when images of a specific version are requested by an instruction given by specific replacement detection keys and there exist such images in said files, said specific images are replaced with said images of a specific version.

19. A manuscript text composition system program storage medium as set forth in Claim 18 wherein when said images of a specific version is requested and there exist such images, the display colors of an image display frames are changed accordingly or in accordance with the state of images.

20. A manuscript text composition system program storage medium as set forth in Claim 18 or 19 wherein when said images of a specific version is requested and there exist such images, the sizes of image display frames are changed accordingly or in accordance with the state of images.

21. A manuscript text composition system program storage medium for storing
templates which instruct, with replacement detection keys, to replace part of texts with specific characters or character groups, or replace part or all of images with specific images for any one or all of texts and images,
files storing said specific characters or character groups and specific images designated by said replacement detection keys, and
a screen display program prepared by said compiler using one of said templates and specific characters or character groups and/or specific images stored in said files;
so that a manuscript text on which specific characters or character groups and/or specific images are pasted corresponding to one of said templates in accordance with said screen display program is created,
characterized in that
said files store, together with said specific images, images of different versions, said images are selectively replaced with said specific images, and link information that link only images of different versions in a designated directory is pasted on said images of different versions.

22. A manuscript text composition system program storage medium for storing
templates which instruct, with replacement detection keys, to replace part of texts with specific characters or character groups, or replace part or all of images with specific images for any one or all of texts and images,
files storing said specific characters or character groups and specific images designated by said replacement detection keys, and
a screen display program prepared by said compiler using one of said templates and specific characters or character groups and/or specific images stored in said files;
so that a manuscript text on which specific characters or character groups and/or specific images are pasted corresponding to one of said templates in accordance with said screen display program is created,
characterized in that
said files store, together with said specific images, images of different versions, and
said specific images are displayed by changing the color of the difference between said specific images and said images of different versions.

23. A manuscript text composition system program storage medium a set forth in Claim 22 wherein arrangement is made so that said images of different versions from the version of said specific images or said difference can be displayed, and link formation linking said specific images and/or said images of different versions is pasted on an image displaying said difference.

24. A manuscript text composition system program storage medium for storing
templates which instruct, with replacement detection keys, to replace part of texts with specific characters or character groups, or replace part or all of images with specific images for any one or all of texts and images,
files storing said specific characters or character groups and specific images designated by said replacement detection keys, and
a screen display program prepared by said compiler using one of said templates and specific characters or character groups and/or specific images stored in said files;
so that a manuscript text on which specific characters or character groups and/or specific images are pasted corresponding to one of said templates in accordance with said screen display program is created,
characterized in that
said files store, together with said specific images, images of different versions, and
said display unit selectively displays said images of different versions from the version of said specific images, and when the graphical difference as the results of comparison between said specific images and said images of different versions is zero, specific images are displayed in place of images of different versions.

25. A manuscript text composition system program storage medium as set forth in Claim 24 wherein the colors of frames for displaying images are changed when said graphical difference is zero.

26. A manuscript text composition system comprising
templates which instruct, with replacement detection keys, to replace part of texts with specific characters or character groups, or replace part or all of images with specific images for any one or all of texts and images,
files storing said specific characters or character groups and specific images designated by said replacement detection keys,
a compiler preparing a screen display program using one of said templates and said specific characters or character groups and/or specific images stored in said files, and
a terminal unit creating a manuscript text on which said specific characters or character groups and/or specific images are pasted corresponding to one of said templates in accordance with said screen display program,
characterized in that
a parameter table designating parameters corresponding to said specific characters or character groups and/or specific images in the form of a table having two or more dimensional coordinates is further provided, and
parameters corresponding to characters or character groups and/or specific images on information recovered by the server are pasted on said parameter table in an integral interlinked manner.

27. A manuscript text composition system as set forth in Claim 26 wherein only the presence/absence of the information recovered by the server is displayed by changing display modes, and a link is provided to a storage site of said recovered information.

28. A manuscript text composition system as set forth in Claim 26 wherein said manuscript text is a work procedure book, and said information recovered by said server is data on quality troubles.

29. A manuscript text composition system program storage medium for storing
templates which instruct, with replacement detection keys, to replace part of texts with specific characters or character groups, or replace part or all of images with specific images for any one or all of texts and images,
files storing said specific characters or character groups and specific images designated by said replacement detection keys, and
a screen display program prepared by said compiler using one of said templates and specific characters or character groups and/or specific images stored in said files;
so that a manuscript text on which specific characters or character groups and/or specific images are pasted corresponding to one of said templates in accordance with said screen display program is created,
characterized in that
a parameter table designating parameters corresponding to said specific characters or character groups and/or specific images in the form of a table having two or more dimensional coordinates is provided, and
parameters corresponding to characters or character groups and/or specific images on information recovered by the server are pasted on said parameter table in an integral interlinked manner.

30. A manuscript text composition system program storage medium as set forth in Claim 29 wherein only the presence/absence of the information recovered by the server is displayed by changing display modes, and a link is provided to a storage site of said recovered information.

31. A manuscript text composition system program storage medium as set forth in Claim 29 wherein said manuscript text is a work procedure book, and said information recovered by said server is data on quality troubles.

32. A manuscript text composition system comprising
templates which instruct, with replacement detection keys, to replace part of texts with specific characters or character groups, or replace part or all of images with specific images for any one or all of texts and images,
files storing said specific characters or character groups and specific images designated by said replacement detection keys,
a compiler preparing a screen display program using one of said templates and said specific characters or character groups and/or specific images stored in said files, and
a terminal unit creating a manuscript text on which said specific characters or character groups and/or specific images are pasted corresponding to one of said templates in accordance with said screen display program,
characterized in that
a parameter table designating parameters corresponding to said specific characters or character groups and/or specific images in the form of a table having two or more dimensional coordinates is further provided, and rows and columns of data in a separate table are arbitrarily fetched and merged with rows and columns of data in said parameter table by adding copying rules to a copy instruction column in said parameter table.

33. A manuscript text composition system comprising
templates which instruct, with replacement detection keys, to replace part of texts with specific characters or character groups, or replace part or all of images with specific images for any one or all of texts and images,
files storing said specific characters or character groups and specific images designated by said replacement detection keys,
a compiler preparing a screen display program using one of said templates and said specific characters or character groups and/or specific images stored in said files, and
a terminal unit creating a manuscript text on which said specific characters or character groups and/or specific images are pasted corresponding to one of said templates in accordance with said screen display program,
characterized in that
a parameter table designating parameters corresponding to said specific characters or character groups and/or specific images in the form of a table having two or more dimensional coordinates is further provided, and character strings enclosed by repetition tags in said template are repeated until continuation lines are terminated by adding continuation instruction rules to a continuation line instruction column in said parameter table.

34. A manuscript text composition system comprising
templates which instruct, with replacement detection keys, to replace part of texts with specific characters or character groups, or replace part or all of images with specific images for any one or all of texts and images, and
files storing said specific characters or character groups and specific images designated by said replacement detection keys,
a compiler preparing a screen display program using one of said templates and said specific characters or character groups and/or specific images stored in said files, and
a terminal unit creating a manuscript text on which said specific characters or character groups and/or specific images are pasted corresponding to one of said templates in accordance with said screen display program,
characterized in that
a parameter table designating parameters corresponding to said specific characters or character groups and/or specific images in the form of a table having two or more dimensional coordinates is further provided,
said screen display program comprises one or a plurality of discrete files, each of which corresponds to each page as a unit for displaying said manuscript text,
parameters corresponding to one of said templates are described continuously in a plurality of rows corresponding to one coordinate axis in said parameter table, and when an empty row is inserted in any location in said rows,
said compiler creates said screen display program comprising mutually different discrete files with said empty row as the boundary, and
data in said mutually different discrete files in said screen display program are linked in accordance with said parameter table.

35. A manuscript text composition system as set forth in Claim 34 wherein
said compiler creates discrete file names using the row numbers of rows in said parameter table for mutually different discrete files in said screen display program and adds said discrete file names to said discrete files, and links data in mutually different discrete files using said created file names.

36. A program storage medium for storing program for implementing a manuscript text composition system comprising
templates which instruct, with replacement detection keys, to replace part of texts with specific characters or character groups, or replace part or all of images with specific images for any one or all of texts and images,
files storing said specific characters or character groups and specific images designated by said replacement detection keys,
a compiler preparing a screen display program using one of said templates and said specific characters or character groups and/or specific images stored in said files, and
a terminal unit creating a manuscript text on which said specific characters or character groups and/or specific images are pasted corresponding to one of said templates in accordance with said screen display program,
characterized in that
said program has a parameter table for designating parameters corresponding to said specific characters or character groups and/or specific images in the form of a table having two or more dimensional coordinates,
said program cause said screen display program to comprise one or a plurality of discrete files and each of said plurality of discrete files to correspond to each page as a unit for displaying said manuscript text,and
when parameters corresponding to one of said templates are described continuously in a plurality of rows corresponding to one coordinate axis in said parameter table, and when an empty row is inserted in any location in said rows, said program cause said compiler to create said screen display program comprising mutually different discrete files with said empty row as the boundary, and to link data in said mutually different discrete files in said screen display program in accordance with said parameter table.

37. A manuscript text composition system comprising
templates which instruct, with replacement detection keys, to replace part of texts with specific characters or character groups, or replace part or all of images with specific images for any one or all of texts and images,
files storing said specific characters or character groups and specific images designated by said replacement detection keys,
a compiler preparing a screen display program using one of said templates and said specific characters or character groups and/or specific images stored in said files, and
a terminal unit creating a manuscript text on which said specific characters or character groups and/or specific images are pasted corresponding to one of said templates in accordance with said screen display program,
characterized in that
a parameter table designating parameters corresponding to said specific characters or character groups and/or specific images in the form of a table having two or more dimensional coordinates is further provided, and
when an image is included in said created manuscript text, said compiler or terminal unit sets jump regions at the upper and lower ends of said image, sets in said upper-end jump region an instruction to jump to the top of the preceding page in the upward direction in the screen, and sets in said lower-end jump region an instruction to jump to the top of the succeeding page in the downward direction in the screen.

38. A manuscript text composition system as set forth in Claim 37 wherein said compiler or terminal unit sets said instructions in said upper-end and lower-end jump regions when said image included in said manuscript text is larger than the display screen of said terminal unit.

39. A program storage medium for storing program for implementing a manuscript text composition system comprising
templates which instruct, with replacement detection keys, to replace part of texts with specific characters or character groups, or replace part or all of images with specific images for any one or all of texts and images,
files storing said specific characters or character groups and specific images designated by said replacement detection keys,
a compiler preparing a screen display program using one of said templates and said specific characters or character groups and/or specific images stored in said files, and
a terminal unit creating a manuscript text on which said specific characters or character groups and/or specific images are pasted corresponding to one of said templates in accordance with said screen display program,
characterized in that
said program has a parameter table designating parameters corresponding to said specific characters or character groups and/or specific images in the form of a table having two or more dimensional coordinates, and
when an image is included in aid created manuscript text, said program cause said compiler or terminal unit to set jump regions at the upper and lower ends of said image, to set in said upper-end jump region an instruction to jump to the top of the preceding page in the upward direction in the screen, and to set in said lower-end jump region an instruction to jump to the top of the succeeding page in the downward direction in the screen.

40. A manuscript text composition system comprising
templates which instruct, with replacement detection keys, to replace part of texts with specific characters or character groups, or replace part or all of images with specific images for any one or all of texts and images,
files storing said specific characters or character groups and specific images designated by said replacement detection keys,
a compiler preparing a screen display program using one of said templates and said specific characters or character groups and/or specific images stored in said files, and
a terminal unit creating a manuscript text on which said specific characters or character groups and/or specific images are pasted corresponding to one of said templates in accordance with said screen display program,
characterized in that
a parameter table for designating parameters corresponding to said files in one or a plurality of rows corresponding to one coordinate axis in the form of a table having two or more dimensional coordinate axes is further provided,
replacement detection keys in a template manuscript for identifying the data types and/or data ranges of parameters set in said parameter table are provided, and
a processing function to identify the data types and/or data ranges of parameters set in said parameter table based on said replacement detection keys in said template manuscript, and notify the processing results is provided in said compiler.

41. A manuscript text composition system as set forth in Claim 40 wherein
a replacement detection key for changing the colors of cells in said parameter table is provided in said template manuscript, and
a processing function to change the colors of cells in said parameter table in accordance with an instruction to change the colors of cells in said parameter table set in said template manuscript is provided in said compiler.

42. A method for creating manuscript texts comprising the steps of reading a parameter table,
judging whether only formats are set, and
color-coding the data types of cells in said parameter table.

43. A method for creating manuscript texts comprising the steps of reading a parameter table,
judging whether only formats are set, and
preparing a screen display program based on said parameter table and a template manuscript when only formats are set.

44. A storage medium storing programs for causing a computer to execute the steps of
reading a parameter table,
judging whether only formats are set, and
color-coding the data types of cells in said parameter table when only formats are set.

45. A storage medium storing programs for causing a computer to execute the steps of
reading a parameter table,
judging whether only formats are set, and
preparing a screen display program based on said parameter table and a template manuscript when only formats are set.

46. A method for creating hypertexts for the Internet comprising the steps of
displaying an image being edited on a display unit,
entering the coordinate points of objects being linked in said image,
selecting the optimum layout from among layouts of registered link objects,
creating link objects to which predetermined symbols or numbers are attached, and images on which link objects and object connections are pasted,
entering link targets corresponding to said link objects, and
creating a map file of said created images.

47. A method for creating hypertexts as set forth in Claim 46 wherein predetermined link objects connected by connections to objects needed to be linked in images are made translucent or clear.

48. A storage medium storing programs for causing a computer to execute the steps of
displaying an image being edited on a display unit,
entering the coordinate points of objects being linked in said image,
selecting the optimum layout from among layouts of registered link objects,
creating link objects to which predetermined symbols or numbers are attached, and images on which link objects and object connections are pasted,
entering link targets corresponding to said link objects, and
creating a map file of said created images.

49. A storage medium storing programs for causing a computer to execute hypertext creating means for making predetermined link objects connected by connections to objects needed to be linked in images translucent or clear.
